(19) Europäisches Patentamt / European Patent Office / Office européen des brevets

(11) EP 2 113 837 B1

(12) # EUROPEAN PATENT SPECIFICATION

(45) Date of publication and mention of the grant of the patent: **14.11.2018 Bulletin 2018/46**

(51) Int Cl.: ***G06F 8/34*** $^{(2018.01)}$ ***G06F 9/44*** $^{(2018.01)}$

(21) Application number: **08380135.7**

(22) Date of filing: **30.04.2008**

(54) **Computer implemented method for generating interrelated computer executable files, computer-based system and computer program product**

Computerimplementiertes Verfahren zur Erzeugung von miteinander in Zusammenhang stehenden Computer-Exe-Dateien, computerbasiertes System und Computerprogrammprodukt

Procédé informatique pour générer des fichiers corrélés exécutables sur un ordinateur, système informatique et produit de programme informatique

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application: **04.11.2009 Bulletin 2009/45**

(73) Proprietor: **Accenture Global Services Limited Dublin 4 (IE)**

(72) Inventors:
- **Nicolau Molina, Jorge 08021 Barcelona (ES)**
- **Olmos López, Pedro 28010 Madrid (ES)**
- **Juanals Pastor, Albert 08013 Barcelona (ES)**
- **Quiroga Serret, Jose, Ignacio 08320 El Masnou (ES)**

(74) Representative: **Müller-Boré & Partner Patentanwälte PartG mbB Friedenheimer Brücke 21 80639 München (DE)**

(56) References cited:
**WO-A-00/60458**
**WO-A-02/44854**
**WO-A-2008/021777**
**US-A1- 2003 172 367**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 113 837 B1

## Description

The present invention relates to a computer implemented method for generating interrelated computer executable files, a computer-based system and a computer program product.

Conventionally, computer programs that can be applied in many fields are sold as standard products for a large number of users. Such computer programs may be adapted to run on a system directly, i.e. without the necessity of a specific installation routine. However, very often it is necessary to install a computer program on a system before running the computer program on the system, wherein during installation the computer program is adapted to the specific computing environment of the respective system. In this case, typically the computer program is installed by a user using an automatic installing routine.

Additionally to that, depending on the needs of the user, computer programs can be custom made for a specific user. Conventionally, the user entrusts a developer or a developer team with establishing the customised computer code, according to the instructions of the user. However, in order to establish such a customised code, one or more highly skilled programmers have to be employed in order to create the computer program. This process is very time-consuming and also very cost intensive.

US 2003/0172367 A1 relates to a system and method for modifying insurance transaction processing software. A library of code packets may be stored in a database. One or more code packets may implement at least one business requirement of an insurance organization. If the organization changes one of the business requirements or develops a new business requirement, a user may modify an insurance transaction processing program to reflect the change via a rules engine. The rules engine may be operable to generate program code assembly instructions based on user input. The assembly instructions may be used by a code assembler to form program code for an insurance transaction processing program software module. The insurance transaction processing program may be changed by adding a formed software module.

WO 00/60458 A1 relates to a visual architecture software language comprising reusable components and programmable channels. The reusable components define discrete software modules in any language. The programmable channels define data flow and control flow between components. A visual representation of functional computer software is generated in a visual environment by integrating the components and channels. A compiling means converts the visual representation into executable code in the form of executable instructions and data tables. The visual architecture software language may also include an integration server that executes the executable code. A system incorporating the language and a method of programming with the language is also disclosed.

It is an object of the present invention, to provide customized computer executable files in a simple technical manner. This problem is solved by the subjects of the independent claims. Preferred embodiments are subject of the dependent claims.

Computer-implemented method for generating interrelated computer executable files according to an aspect

An aspect of the present invention relates to a computer-implemented method for generating interrelated computer executable files at a server side comprising the steps of:

- providing at a client side a graphical user interface associated with machine readable code in a machine language, wherein the graphical user interface displays data substantially in clear text;

- selecting and associating two or more sections of machine readable code in machine language at said client side using said graphical user interface;

- computer implemented verification of a coherence of said selected machine readable code at the client side before, preferably without compiling said selected machine readable code at the client side and outputting the result of said coherence verification substantially in clear text, wherein
  verifying the coherence of said selected machine readable code comprises

  -- computer implemented verification of the coherence of said selected sections of machine readable code and/or
  -- computer implemented verification of the coherence of said associations of said selected sections of machine readable code; and

- upon approval of the coherence, compiling the selected and associated two or more sections of machine readable code at a server side to create two or more interrelated executable files which are executable by the server.

Advantageously, computer executable files for a server side can be produced by a person, substantially without any specific computer programming skills. Rather, using the graphical user interface (GUI) by means of clear text, the user can collect two or more sections of machine readable code in machine language without reading such machine readable code or machine language and in particular without having to know machine readable code or machine language. The user can choose sections such as "elements", "validations", "texts/paragraphs"..., which are associated with specific sections of machine readable code in machine language. As an example a validation can be associated with machine readable code comprising an evaluation, whether one variable and/or parameter is larger than another variable and/or parameter. The variables and/or parameters as well can be specified using the GUI, wherein the specific value of the variable and/or parameter is computed, when the program is executed.

In other words, the user can substantially create a validation by entering two or more variables and/or parameters and also entering the type of validation, e.g. an operation such as "larger as", "smaller as", "equal to", etc. Moreover, the user can enter the consequence of the validation, i.e. what will be done when a condition of the validation is fulfilled or said condition is not fulfilled. As an example, when a condition is fulfilled, the computer implemented method moves to a next step.

In other words, using the GUI, complex machine readable code in machine language can be assembled, without the user having specific knowledge of the machine readable code or of coding in particular. Rather, the user can be a person having different skills, such as a mechanical engineer, an economist, etc., who needs to use the computer executable files and therefore wants to provide computer executable files according to his needs. Consequently, there is advantageously as little information loss, since the user does not have to explain to a developer the need of the executable files.

Further preferably, the computer implemented verification of a coherence of said selective machine readable code at the client side before compiling said selected machine readable code allows the user in a very fast and efficient way, to verify the usability of the executable files produced at a later step. In particular, even if not connected to a server side and or if the server side is not available to the user for any other reason, the user can verify already at the client side, without producing the executables, whether the two or more executable files will be working properly at the server side. This verification can particularly be done, even though the user has no specific programming skills, since said verification of the coherence is computer implemented. In other words, at the client side, the computer examines the selected sections of machine readable code. Thereby the computer can examine each of the sections separately. The computer can also examine the selected sections in their entirety. Preferably, the computer can examine any interrelation between selected sections of code. As an example, the computer can examine the output of one section of code which is input to another section of code, as if the code was compiled.

In other words, the computer can examine, without compiling, whether a possible output of a first section is suitable as input of another section. Therefore, also associations between sections of selected code can be examined in a computerized, at least partially automatic way. Thereby, the computer can apply specific rules, such as mathematic rules and/or specific logic, such as mathematic logic to the machine readable code. Also, the computer may use rules and/or logic of the machine readable code, such as rules and/or logic of specific coding language in order to examine the selected sections and/or the associations between the selected sections of the code.

Moreover, the computer at the client side (i.e. a client computer or processor) may examine the selected sections of code and/or the associations for completeness. As an example, if one section is associated with another section such that the output of one section is input of the other section, wherein the other section needs e.g. one, two or more input variables, the computer may examine any incoherence, e.g. if the output variable of one section of code meets the requirements of the input of the other section(s) of code. Moreover, the computer may estimate the runtime behavior of the code, even without compiling, by e.g. using mathematical logic. As an example, if the code comprises a fraction and the denominator of said fraction is a variable which may become very small during runtime due to mathematical reasons of the provided variable/parameter ranges, the computer at the client side may find out that as a result a buffer overflow or the like will occur in case the executable is run at the server side. In particular, the computer at the client side may recognize the a buffer overflow will occur, even without creating the executable (i.e. without compiling) and even without running the executable. Consequently, the computer can provide respective coherence output.

The coherence output can be an error message or an approval message, particularly in clear text. As an example, mathematical errors or the like, which can be provided when verifying coherence of the selected and the composed code in machine language, such as a programming language, can be translated into clear text, in particular human readable text, even more particular according to human readable and understandable semantics and language rules. Consequently, the user, who is not an expert in coding, can verify, whether the sections of machine readable code, which were selected using the GUI, can successfully be run at the server side, without

a) the necessity to compile the selected sections of code at the server side and/or without
b) the necessity of the user to have specific programming skills, since the GUI provides an output readable and understandable by a user not having programming skills.

As an example, a translator can be provided connected and/or using one or more tables comprising messages in mathematical logic and/or machine readable language logic, etc. which are linked/associated with clear text covering the respective meaning in human readable language/logic.

The term "clear text" relates to a display of text according to human semantics, human grammar, human language, particularly independent/different from machine readable language. As an example, clear text can be provided in English, Spanish, German, etc. Clear text particularly is text that can be read and understood by a person, without having specific skills in programming, as an example without having specific skills in any programming language. Clear text may be provided using also figures, pictures, pictorials, different colors and/or colorschemes, highlighting of words, in particular blinking display of words, etc.

The term "machine readable code in machine language" (contrary to clear text) can relate to any conventional programming language which can be e.g. COBOL, FORTRAN, C, C++, PASCAL, JAVA, etc. Machine readable code in machine language can comprise elements, which can also be comprised by clear text in human readable language. As an example, a machine readable code in machine language can comprise words of a human language, particular words in the English language, such as "and", "if", "then", etc. However, machine readable code in machine language is based on mathematical logic, particular as a mathematical tool as compared to clear text, that is based on grammar of a human language as its intrinsic logic. Hence, the term "machine language" is not necessarily limited to the meaning of a low level programming language.

The term "computer-implemented verification of coherence" describes the computer-implemented examination of the selected code sections and or the associations between the selected code sections, as described above. In particular, the selected code sections can be examined separately. It is also possible that sets of sections can be examined. It is also possible that the entirety of the selected sections can be examined. It is possible that the associations between two or more sections of code are examined. Associations can e.g. comprise that the output of one section is the input of another section. Associations can e.g. comprise that two or more sections share one or more further sections, variables/parameters etc.

Contrary to "computer-implemented verification of a coherence", the term "compiling" describes the translation of text written in a computer readable language which can also be referred to as source language, into another computer readable language which can also be referred to as the target language. The original sequence is usually called the source code and the output may be called object code. Commonly the output has a form suitable for processing by other programs (e.g., a linker).

By compiling, source code may be translated into an executable program or executable file. In particular, source code from a high-level programming language may be translated to a lower level language such as e.g., assembly language.

The term "approval of the coherence" describes that a verification of coherence can be approved by the client computer, in particular automatically, e.g. if a specific result is obtained by the computer implemented verification of the coherence. It is possible that, if a specific result is not obtained, an error message can be output. Nevertheless, even in case of such an error message, a user can alternatively or additionally approve the coherence manually, e.g. if the output of the computerized approval provides a specific meaning in clear text, such as e.g. that certain variables have not been considered or not been considered properly by the executables to be generated, etc.

The term "interrelated executable files" describes that two or more executable files, when executed, work together, e.g. share common resources, variables/parameters, etc. Also, the term "interrelated executable files" may describe that one or more executable files execute(s) one or more other executable files. It is also possible, that the output of one or more executable files is/are input of one or more executable files. Thus, such files are interrelated.

The term a "graphical user interface is associated with machine readable code" describes that the GUI has a relation to machine readable code, such as access to a date base, wherein machine readable code is stored in tables, etc.

Following that, according to this aspect, generating interrelated computer executable files at the server side can be easily carried out and/or maintained. In particular, advantageously, machine readable code in machine language can be provided and composed in a very easy and sufficient manner by a person not being skilled in the art of programming. Further advantageously, such a composition of machine readable code in machine language can be obtained in a very short time, since typically very lengthy compilations need not necessarily be carried out often. Rather, the selected sections of machine readable code need only be compiled once, after a successful approval of the coherence. In that respect, the computer-implemented verification of a coherence can be carried out iteratively, particularly, as long, until the coherence is approved.

In other words, in case an error message is created, using the GUI, the selection of the two or more sections of machine readable code may be changed and/or the associations between the two or more sections of machine readable code may be changed. The step of selecting and associating two or more sections of machine readable code may also include setting variables/parameters used by said two or more sections of machine readable code. Consequently, in case no approval of the coherence is yet established, instead of selecting and associating further sections of machine readable code and/or unselecting and/or unassociating one or more sections of machine readable code, variables/parameters of the two or more selected sections of machine readable code may be changed, deleted, newly set, etc. It is possible, that the step of changing, deleting, resetting, etc., of the parameters/variables is carried out iteratively in combination with the computer-implemented verification of a coherence, until successful approval of the coherence.

Selecting and associating two or more sections of code may preferably comprise one or more of the following:

- input one or more rules, such as mathematical conditions, operations, etc. using the GUI, wherein said one or more rules, such as mathematical conditions, operations, etc are input in clear text as;
- storing the input in one or more specific definition table(s);
- storing the one or more rules, such as mathematical conditions, operations, etc. in a specific conditions table, preferably different to the definition table(s);
- storing in the definition table(s) and/or the condition table(s) one or more indicator(s), such as e.g. ">", "<", "=>", "=<", "=", etc., indicating the mathematical nature of the one or more rules;
- reading, e.g. using a creator, from the definition table(s) and/or the condition table(s) the one or more rules and/or the one or more indicator(s);
- providing, e.g. using said creator, in one or more code table(s) code in machine readable language;
- generating, e.g. using said creator, one or more interrelated executable files from said machine readable code. It is possible that from each code table one executable file is generated. It is also possible, that from one code table two or more executable files are generated.

Specific embodiments of the computer-implemented method

Exemplary, selecting and associating two or more sections of machine readable code in machine language comprises inputting rules in clear text using said graphical user interface and providing, e.g. using said creator, machine readable code in machine language equivalent to said clear text using a generator.

The term "equivalent" in the context of the present application comprises that e.g. a rule, mathematical condition, etc. is input in clear text (which can be easily understood by the user who is not skilled in programming in a programming language) and is then transformed into machine readable language which can interpreted by e.g. a computer.

Exemplary, the step of a computer-implemented verification of the coherence comprises a computer implemented verification of the compatibility of the first section of the code used for generating a first executable file with a second section of code used for generating a second executable file.

In other words, advantageously, it is easily possible to examine, whether two executable files will be working together properly, i.e. whether the interrelation of said two executable files is correct, without the necessity of the user to have specific programming skills in machine readable code in machine language.

Exemplary, the step of computer-implemented verification of the coherence comprises:

- based on the selected machine readable code estimating at the client's side run time parameters before compiling the selected sections of machine readable code, wherein the run time parameters are associated with the executable files when executing the executable files at the server side.

In other words, by analysing the selected machine readable code, in particular by analysing the association between the selected machine readable code, using e.g. program language logic and/or mathematical logic, run time parameters can be estimated before/without compiling the selected sections of machine readable code. The run time parameters can be variables/parameters used by or within the executable file(s) at the server side. In case said run time parameters are incompatible with the system, in particular incompatible with the hardware configurations at the server side, a respective message can automatically and computerised be generated. Therefore, even without specific programming skills, the user can in a simple manner verify whether the selected machine readable code will perform properly at the server side.

As examples, the step of computer implemented verification of the coherence may comprise:

- When in a conditional logic (also referred to as validation) an element defined as numeric is compared with an alphanumeric element, an error message is provided, advising about an incompatibility.

- When a format of one or more calculations is not matching/compatible with the format of its operands, an error message is provided. Exemplary, an error message may be provided, when the operation X is defined as Dec(6,2), i.e. a variable having 6 entries and 2 decimals and this operation is the result of the operation to summarize variables Y and Z where Y is defined as Dec(15,2) and Z as Dec(15,2). In other words, the result of that sum "Y+Z" would not fit in the element defined in X as "X = Y + Z".

Exemplary, one or more of the sections of machine readable code are reused for compiling the two or more interrelated executable files.

In other words, similar or identical sections of machine readable code can be used for the compilation. Selecting of sections of machine readable code can therefore comprise copying said sections. However, even though similar or identical sections of machine readable code are used for compiling different executable files, said files can perform differently, e.g. in case variables/parameters are set differently.

In other words, there can be provided clusters of machine readable code, wherein said clusters can be joined together by using the GUI in order to provide a set of clusters which can be compiled to one executable file at the server side. Said set of clusters can comprise similar, particularly identical sections of machine readable code. The clusters can also comprise different sets of machine readable code. In other words, the GUI can be used to construct machine readable code for compiling two or more executable files, wherein the machine readable code for each executable file can be composed similar to a construction kit, wherein the user uses clear text provided by and input into the GUI.

Exemplary, at least one first level executable file is compiled which is interrelated with at least one i-level executable file, wherein the at least one i-level executable file is interrelated with at least one (i+1)-level executable file, wherein i is a natural number greater than 1.

Exemplary, the at least one i-level executable file and the at least one (i+1)-level executable file are compiled from one or more sections of a machine readable code, wherein the one or more of the sections of machine readable code comprise similar, preferably substantially identical machine readable code.

In other words, a hierarchical set of executable files can be created, wherein executable files may be associated with executable files, which, again may be associated with further executable files. Different sets of executable files can be created, wherein each set can have said hierarchical/tree structure. Each level can have one or more executable files. Each level can comprise executable files, which may be similar, even identical to executable file(s) one ore more levels higher up in the hierarchy or one ore more levels lower down in the hierarchy. The executable files within one level can be interrelated. One or more of the executable files within one level can be interrelated to one or more executable files in one or more higher hierarchical level and/or one or more lower hierarchical level. Different sets of executable files can have similar, even identical hierarchical structure. Different sets of executable files can have different hierarchical structures. The value of i can be 2, 3, 4, 5, 6, 7, 8, 9, 10, etc.

Exemplary, the method comprises the further step of verifying the integrity of the execution of all the executable files by executing all the executable files at the server side and comparing the performance at the server side with a predetermined specification at the client side.

The performance at the server side can be computerised compared with a predetermined specification at the client side. As an example, one or more outputs of the executable files at the server side can be compared with a set of variables/parameter provides at the client side.

Exemplary the steps at the client side are carried out at the client computer remote from the server and the steps at the server side are carried out at the server computer remote from the client.

In other words, the steps at the client side are carried out at a client computer which may be a computer in a network. The client computer may be connected with a server computer through the network. After carrying out the steps at the client computer, in particular upon approval of the coherence, the selected and associated two or more sections of a machine readable code can be transferred to the server side, in particular to a server computer, e.g. through said network. The selected and associated two or more sections of machine readable code can also be transferred to the server by any other means, such as by storing the selected and associated two or more sections of machine readable code on a storage device, such as a CD, a flash drive, a hard drive, etc. and copying said selected and associated two or more sections of machine readable code from said storage device onto the server. On the server, then, the selected and the associated two or more sections of machine readable code can then be compiled.

The storage device can also be part of an intermediate computer, which is connected with the client computer and the server computer. In other words, the selected two or more sections of machine readable code can be transferred from the client computer to the server computer by another computer or another computerised device, such as a mobile device, to the server.

Alternatively, the steps at the client side and the steps at the server side can all be carried out at one computer, which incorporates the server and the client.

Computerised system according to an aspect

An aspect relates to a computerised system for generating interrelated computer executable files at a server side comprising:

- a graphical user interface at a client side, wherein

-- the graphical user interface is associated with machine readable code,
-- the graphical user interface displays data substantially in clear text
-- the graphical user interface is adapted to select two or more sections of machine readable code at a client side;

- a coherence verifier which is adapted for

  -- verifying a coherence of said selected machine readable code at the client side and
  -- outputting the result of said coherence verification substantially in clear text; and

- a compiler for compiling the selected two or more sections of machine readable code at a server side to create two or more interrelated executable files which are executable by the server.

For selecting two or more sections of machine readable code at a client side, the GUI may be connected to a selector. The selector may comprise one or more specific links which point to code sections in machine readable language. In other words, the selector may be adapted to select two or more sections of code, upon input of the user via the GUI, thereby, the user may communicate with the GUI in clear text in human readable language and the GUI, via the selector may select the two or more code sections representing the clear text in machine readable code. In the context of the present application clear text also may comprise that the GUI displays fields, in particular buttons and/or other kind of menus, which are constructed, such that the user intuitively may understand the meaning of said fields and/or buttons and/or other kind of menus. As a simple example, in order to create a validation, the menu may comprise buttons having symbolized thereon mathematical operators, such as ">", "<", "=", which the user would understand to represent the operations in a validation of "bigger", "smaller" and "equal to".

In view of the term sections of code, the above details as carried out in view of the method are equally applicable.

Embodiments of the computerised system

Exemplary, the graphical user interface comprises a generator which is adapted to provide machine readable code in machine language equivalent to said clear text as input through the graphical user interface.

Exemplary, the computerised system may comprise an estimator which is adapted to estimate at the client side based on the selected machine readable code runtime parameters before compiling the selected sections of machine readable code, wherein the runtime parameters are associated with the executable files when executing the executable files at the server side.

Computer program product according to an aspect

An aspect of the present application relates to a computer program product, stored on a data storage device or provided as signal, which when loaded in the memory of a computer and executed by the computer achieves that the computer carries out a method as described above.

The preceding description of the aspects is not limited to the respective aspects. Rather, the description of the respective aspects can be applied for the remaining aspects. In particular, the description regarding to the method can be applied for the computer system and the computer program product and the respective specific embodiments, accordingly, so that by combining individual features of specific aspects or embodiments, new aspects and/or embodiments may be created. Moreover, the above described aspects and/or embodiments are not restricted one application, such as the generation of interrelated computer executable files which may be insurance products or be related to insurance products, and/or related to application(s) of insurance claim management, and/or related to the generation of insurance documents, and/or related to the generation of further products, such as real estate products, financial service products and/or documents in one or more of the above mentioned fields.

Description of the Figures

In the following specific examples are described by way of exemplary figures, wherein individual features of the figures may be combined to further examples, not explicitly stated within the description of the figures. With reference to the figures, there is shown in

Figure 1: a schematic overview of exemplary configurations of sections of machine readable code;
Figure 2: a schematic detailed overview of an element according to figure 1;
Figure 3: a screenshot of a GUI comprising highlighting;
Figure 4: a screenshot comprising highlighting;

| | |
|---|---|
| Figure 5a: | a screenshot comprising highlighting; |
| Figure 5b: | a screenshot comprising highlighting; |
| Figure 6: | a screenshot comprising highlighting; |
| Figure 7a: | a screenshot of a GUI comprising highlighting; |
| Figure 7b: | a screenshot of a GUI comprising highlighting; |
| Figure 8a | a screenshot of a GUI comprising highlighting; |
| Figure 8b | a screenshot of a GUI comprising highlighting; |
| Figure 9: | a screenshot comprising highlighting; |
| Figure 10a: | a screenshot comprising highlighting; |
| Figure 10b: | a screenshot comprising highlighting; |
| Figure 11a: | a screenshot comprising highlighting; |
| Figure 11b: | a screenshot comprising highlighting; |
| Figure 12a: | a screenshot comprising highlighting; |
| Figure 12b: | a screenshot comprising highlighting; |
| Figure 12c: | a screenshot comprising highlighting; |
| Figure 12d: | a screenshot comprising highlighting |
| Figure 13: | a schematic overview of an element according to figure 1; |
| Figure 14a: | a screenshot of a GUI comprising highlighting; |
| Figure 14b: | a screenshot of a GUI comprising highlighting; |
| Figure 14c: | a screenshot of a GUI; |
| Figure 15: | a screenshot comprising highlighting; |
| Figure 16a: | a screenshot comprising highlighting; |
| Figure 16b: | a screenshot comprising highlighting; |
| Figure 17a: | a screenshot comprising highlighting; |
| Figure 17b: | a screenshot comprising highlighting; |
| Figure 18a: | a screenshot comprising highlighting; |
| Figure 18b: | a screenshot; |
| Figure 18c: | a screenshot comprising highlighting; |
| Figure 19: | a schematic overview of an element according to figure 1; |
| Figure 20a: | a screenshot; |
| Figure 20b: | a screenshot; |
| Figure 20c: | a screenshot; |
| Figure 21a: | a screenshot; |
| Figure 21b: | a screenshot; |
| Figure 22: | a screenshot; |
| Figure 23: | a schematic overview showing the execution of the two or more interrelated executable files; |
| Figure 24: | a flow diagram; |
| Figure 25: | a screenshot of a GUI; |
| Figure 26: | a screenshot of a GUI; |
| Figure 27a: | a screenshot of a GUI; |
| Figure 27b: | a screenshot of a GUI; |
| Figure 27c: | a screenshot of a GUI; and |
| Figure 28: | a computer-based system. |

The method and the system described in the following may also be referred to the "Info2000 Product Factory" or "Info2000 Product Factory module". Advantageously, the Info2000 Product Factory module provides a common development methodology for all Lines of Business, wherein substantially all products i.e. two or more interrelated executable files are created, supported and handled the same way, using the same screens and a common data dictionary for data storage. Further advantageously, it also allows for an extensive product component re-use, such as the re-use of sections of code in machine readable language. In the context of this application, the term "re-use" particularly means that a specific code section may be copied one or more times for use in one or more compositions of code, which are then used for creating the two or more interrelated executable files. In other words, the term "selecting" in the context of this application means that the selected section of code is copied for creating the two or more interrelated executable files. In particular, the term "selecting and associating" in the context of the present application may mean that the code is copied into tables.

Once the Product is defined, i.e. once all the sections of machine readable code have been selected and associated, possibly also all the necessary parameters/variables have been set, Product Factory will generate an Executable program comprising two or more interrelated executable files, callable from standard Policy Administration interfaces.

1. Product Structure

**Figure** 1 provides a diagram showing the basic product structure defined in the Product Factory. In other words, figure 1 shows an overview of the functionality of the two or more interrelated executable files, once they are executed on the server side.

The product developer will define the different components that are needed to build the Product, such as

- Insured Objects (e.g. car, home)
- Coverages (e.g. building)
- Estimating Codes (for Claims; e.g. Fire)

These components can be reused among products. Hence, the product developer may select the components using a GUI, wherein in the GUI the components are available using clear text, preferably in that the GUI comprises respective buttons, such as e.g. a button for "insured objects", which may e.g. provide a drop down list of possible choices which may then be selected by e.g. simply highlighting using a pointing device like a mouse or something equivalent. These buttons are associated with respective machine readable code in machine language.

Elements may also be defined and assigned at the appropriate level (e.g. building year). Elements may be used to capture data or to set rules. Elements may be simple entry fields or related to a set of reference values which may be held or stored in a corporate table.

As an example, in figure 1, the product to be created relates to "House comfort property" insurance. In other words, the interrelated executable files will provide, when executed on the server side, as a result insurance documents, such as a contract of an insurance of a house. The method according to the present application allows the computerized generation of two or more interrelated executable files which, when executed, create or aid when creating said insurance documents.

The computer implemented method particularly allows a person not skilled in the art of programming to configure the source code in a simple an efficient manner so that the said two or more interrelated executable files may be created at the server side and may be executed at the server side.

In particular, the executables, when executed, provide a means for individually creating documents by allowing to set through a GUI all necessary variables/parameters, boundary conditions, circumstances, elements, etc.

According to figure 1, for the general product as well as for each component of the product, the developer may choose one or more of elements, validations, operations and texts/paragraphs. Exemplary, the object of the product "House comfort property" may be a "house". Additionally, further objects could be introduced, such as e.g. "apartment".

Moreover, a coverage is selected which may be "building". Further to that, coverages "contents", "theft" and "house aids" are selected in the example according to figure 1. For the coverage "building", the estimation codes "fire", "explosion", "flood", "lightning" and "earthquake" and the element "building year" are selected.

2. Product Factory Modules

The Info2000 Product Factory comprises four basic modules, namely product definitions, validations, rating rules and text/paragraphs.

- Product Definition

This module allows the product developer to set-up the product definition, as described above with respect to figure 1. All the information regarding the product definition is stored in the Product Factory data model, together with the information entered in the next modules.

- Validations

This module allows the product developer to set-up rules to be executed and validated during the product life-cycle in policy administration, i.e. when executing the two or more interrelated executable files in order to produce e.g. an insurance document. A possible validation can be defined to e.g. validate if a driver is older than 18, when executing the two or more executable files, wherein a variable is the age of a driver. The Product Factory allows to define variables/parameters, such as age, when defining a validation which will be carried out during runtime of the two or more interrelated executable files (i.e. during runtime of the product). These validations as any other product components are reusable among products. In other words, the validation is to verify whether the age of a driver as an exemplary variable used when defining e.g. an object of the product is greater than a given threshold value. Said validation may also be used, when defining a different object of the product and/or the coverage and/or the product itself.

**Figure 2** shows an overview over possible configurations of validations. In particular, figure 2 shows the possible configuration of each validation, using N logic conditions, where N may be a natural number, in particular 2, 3, 4, 5, 6, 8, 10, 15, 20, etc. Moreover, exemplary in figure 2 there are shown possible components of each logical condition. Each of the N logical conditions may comprise M operands, where M may be a natural number, in particular 2, 3, 4, 5, 6, 8, 10, 15, 20, etc. Moreover, for each logical condition, the M logical operands may be connected by one of the logic operators. Consequently, there are provided for each logical condition M-1 logic operators. The logic operands may comprise one or more of the following: Elements, Access, Operations, Predefined functions, Object type, Premium class, Numeric constant, Alphanumeric constant, Routine, etc. The logic operator may comprise one or more of the following: EQ=equal, NE=not equal, GT=greater than, GE=greater than or equal to, LT=lesser than, LE=lesser or equal to, TC=coverage contracted, TNC=coverage not contracted, TI=incompatible coverage, TD=coverage depending on, etc.

The N logic conditions may be connected by one Boolean operator, such as "AND", "OR", "(", ")", etc.

Also in figure 2 a further example is shown of a possible validation, namely to verify, whether the age of a person for whom the insurance documents are created has an age older than 100 years. If said validation discovers that the age, as a preferred parameter is greater than 100 years a specific action is carried out, e.g. monthly charges from 7.50 EURO will be changed.

The module "Validations" can be accessed when using the system according to the present application, following the path *System>Prod. Conf.>Validations.* From here, new validations can be added, modified or erased.

**Figure 3** shows a screenshot of an exemplary graphical user interface (GUI) of the computer-based system according to the present application, when adding or modifying a validation, which was created for illustration purposes. In other words, the screenshot according to figure 3 shows a validation which basically states that the validation should occur if sum of contents exceeds the figure of 2,500,000. The top part of this screenshot may contain the name, description, date and operators. The highlighted rectangle is where the actual validation is displayed. This module will be used to validate the policy data as a trigger of a calculation inside an operation or as a trigger of paragraphs. If this validation does not take place, then it will launch an error message. In other words, figure 3 shows a GUI 1 displaying clear text, in particular having e.g. fields 2a, 2b, 4a, 4b, etc for entering text, wherein the user can select specific operators. This selection through the GUI is associated with machine readable code in machine language. Moreover, the user may specify variables and/or parameters which are subject to e.g. the operators. Through the GUI the variables and/or parameters are set in machine readable language. In figure 3, a condition is displayed in clear text. In particular, the fields 2a, 2b, are used for entering a time period during which the validation is applicable. As an example the start date entered via field 2a is chosen in figure 3 to January 01, 1900 and the end date entered via field 2b is December 31, 9999. During this time, the validation will be carried out, when the two or more interrelate executable files are executed.

The name and a short description of the validation are entered using fields 4a, 4b, wherein said filed are used to briefly describe the validation and, thus, allow a simple identification of the validation, e.g. in the definition table as shown in figure 4 (see below). Further to that, the GUI 1 according to figure 3 contains fields 6a, 6b for entering the operands defining the validation as well as the operator in field 8. The so configured and defined validation is shown in the GUI 1, in window 10, wherein the line defining the validation has been highlighted by a box 12 (not shown when displaying the GUI) for an easy visibility. The GUI 1 comprises the definition of one operation which is called OP_DEFAULT_8 and is using the validation SUM CONTENTS 4 > LIM as a trigger of calculation 01 and 05 which means that calculation will be performed depending on the outcome of this validation. So inside the calculation, depending on the outcome, C1 or C2 could be triggered. C3 is always triggered. Moreover, the above description holds, where applicable, similarly for the GUIs, as shown in the other figures.

As an example, all validations are stored in table KTPM34T. In other words, table KTPM34T is an exemplary definitions table. **Figure 4** shows a screenshot comprising the definition of the validation as selected with the GUI according to figure 3. Highlighted with a box (not shown when displaying the GUI) are the lines containing the unique code of the validation, in this example "0000006619", valid dates, in this example from "19000101" to "99991231" which have been entered via the fields 12a, 12b of the GUI 1 and the definition of the validation. Also in the following figures the boxes used for highlighting are normally not displayed by the GUI of the computerized system.

The validation will only be executed if the summation of contents is > 2,500,000. These values without which the validation will not fire are stored in table KTPA78T. In other words, table KTPA78T is an exemplary conditions table. **Figures 5a and 5b,** which are two screenshots, highlight the condition, defined with the GUI 1 according to figure 3 and also said before mentioned values. The screenshots show two separate lines referred to as R1 and R2 which cannot fit into just one screenshot, such that they are displayed in figures 5a and 5b.

Hence, the contents are read from the previous table KTPA78T, an excerpt of which is shown in figures 5a and 5b, so that if the summation is over 2,500,000 then the program is executed. This is what the content of the validation represents.

In other words, through the GUI 1 shown in figure 3, definitions of the validation are created in the one or more tables, in the present example, entries are created in the tables shown in figures 4, 5a and 5b, wherein in one definition table (figure 4) the definition of the validation in general is provided and in another table, i.e. the condition table (figures 5a and 5b) the condition itself and values of variables/parameters used by the validation are defined.

A custom made generator (COBOL source KTPLP007), in order to automatically generate the code into copybooks will access that table KTPA78T as shown in figures 5a, 5b and perform the following instructions represented into pseudo-code. The following logic in pseudo code represents the way in which the program operates and converts into COBOL source what is configured into the mentioned tables:

Step 1: Read first record from KTPA78T (R1) and do
Step 2: Perform

Step 2.1: Write new line with the information of KTPA78T
Step 2.2: Read next record from KTPA78T

Until end of KTPA78T.
Step 3: Write new "End Lines".

The process according to substeps 2.1 and 2.2 is iterative/repeated, i.e. said process ends when it reaches the end of rows. In the present example according to figures 3, 4, 5a and 5b two iterations will be performed.

Regarding the mathematical nature of the rules inserted in KTPA78T, in said table components are defined inside validation(s) and/or operation(s).

Exemplary, as shown in figures 5a and 5b a new rule coded by 000000619 is created which is a CONDITIONAL LOGIC (hence a validation), by the value "CL" in field TCTCP78T which is the first operand (field CDORD78T with value "01") and the operand is 0000006178 (field CDCCH78T which is a predefined function) must be greater (field TCOBH78T with value ">") to the second operand (second row in the fig 5a) which is numeric (field TCTCH78T with value N) and its value is 2500000.

So, in here the mathematical nature of this coded rule is the field TCOBH78T with the value ">" where the machine readable code defines that one value derived from variable 0000006178 must be compared with a fixed value, namely 2,500,000.

Possible indicators may be ">", "<", "=>", "=<", "=", etc.

The custom made generator is designed and adapted to recognize specific conditions. As an example, table KTPA78T comprises in field TCTCP78T the value "CL" which means Condition Logic and is equal to the operation "IF". In other words, exemplary, in the table(s) one or more parameters may be stored which comprise information about logical conditions. The custom made generator is adapted to read the parameter(s), identify the logic of the parameter(s) and use the parameter(s) to create cobol source code (or source code in any other machine readable language, such as FORTRAN, C, C++, PASCAL, JAVA, etc.

As a result, the validation is generated in computer readable language, e.g. in COBOL source code. The screenshot shown in **figure 6** contains the source code of the result program, which may at a later step be used when generating the executable file(s). In other words, the table shown in figure 6 is an exemplary code table, wherein the source code is equivalent to the condition, as input via the GUI shown in figure 3.

Therefore, using the computer-based system according to the present application, the developer of a product, i.e. two or more interrelated executable files, may define one or more validations in clear text using the GUI 1 as shown in figure 3. The content of the GUI shown in figure 3 is transferred into a definition table, as shown in figure 4. The numeric values and/or mathematical conditions of the validation are stored in a condition table, as shown in figures 5a and 5b. Using the mathematical conditions and the numeric values, as stored in the condition table according to figure 5a and 5b, source code is automatically generated. The source code is stored in a code table, as shown in figure 6. It is possible, that the conditions generally are stored in one or more condition tables and that numeric values, e.g. of variables/parameters used in the conditions stored in the condition table(s), are stored in one or more value table(s) and/or one or more variable/parameter table.

- Accesses

This component of Product Factory, i.e. the computer based system/method according to the present application for creating two or more interrelated executable files, which is part of a module, allows through key fields for the search of data on a corporate table. Accesses are also reusable among products, i.e. different computer based methods/systems comprising two or more interrelated executable files.

It is possible to add, modify or erase an Access by following the path *System>Prod. Conf.>Accesses.* The screenshots as shown in **figures 7a, 7b, 8a, 8b and 9** contain the example of an Access to a table with all of its keys and economic results. Each Access has a set of key(s) and result(s) associated. The following is an example of an Access "ACC_SIC_2ND". The keys are highlighted in the two screenshots according to figures 7a and 7b, as there are too many to fit into one single screenshot.

The aforementioned economic results are highlighted in the two screenshots according to figures 8a and 8b.

Accesses are stored in table KTPM38T. The screenshot according to figure 9 contains the definition of the above example in a definition table. Highlighted are the relevant elements including its unique code "0000001280".

The economic results of this Access, such as relevant economic data which may be considered when producing the source code and later on the executable files, are stored in table KTPA30T. These are the same ones that appear in the example of the computer implemented system/method, as shown by the figures. They are highlighted on the screenshots as shown in **figures 10 and 10b,** representing a variable/parameter table.

Table KTPA37T, with the keys for this particular Access, are displayed in the two screenshots according to **figures 11a and 11b,** showing a condition table.

The code for the program is displayed in the four screenshots according to **figures 12a** - **12d**, showing a code table. The results and the keys are selected and then the Access is executed. The result is the generation of an Access.

The generator (COBOL source KTPLP007), in order to automatically generate the code into copybooks will access both tables (KTAP30T and KTPA37T)) and perform the following instructions represented into pseudo-code. The following instructions in pseudo code represent how the program operates and converts into COBOL source what is configured into the mentioned tables:

**Step 1**

Step 1.1 -. Read first record from KTPA30T (R1) and do
Step 1.2-. Perform

Step 1.2.1- .Write new line with the information of KTPA30T (L1)
Step 1.2.2-. Read next record from KTPA30T (R2)

Until end of KTPA30T.
Step 1.3 -. Write new "Fixed Lines"

**Step 2**

Step 2.4 -. Read first record from KTPA37T (R1) and do
Step 2.5 -. Perform

Step 2.5.1 - .Write new line with the information of KTPA37T (L1)
Step 2.5.2 -. Read next record from KTPA37T (R2)

Until end of KTPA37T.
Step 2.6 -. Write new "Fixed Lines"

**Step 3**

Step 3.7 -. Read first record from KTPA30T (R1) and do
Step 3.8 -. Perform

Step 3.8.1 - .Write new line with the information of KTPA30T (L1)
Step 3.8.2 -. Read next record from KTPA30T (R2)

Until end of KTPA30T.
Step 3.8 -. Write new "Fixed Lines" handling error, etc...

In the above pseudo code the "fixed lines" are using information of KTPM38T table code and access code.

Substeps 1.2.1 and 1.2.2 may be iterative/repeated. Also subssteps 2.5.1 and 2.5.2 may be iterative/repeated. Also subssteps 3.8.1 and 3.8.2 may be iterative/repeated.

The above pseudo coded is reflected in the code as shown in figures 12a - 12d, wherein figure 12a represents step 1, figure 12b represents step 2 and figures 12c and 12d represent step 3, which already starts in line 061946 in figure 12b.

- Rating rules

Through the module "rating rules", the product developer defines the operations (made up of one or more calculations) used to calculate the product rate (premiums are calculated at the coverage level). Not just elements can be used in calculations, but values (e.g. factors) stored in corporate tables can be used also through "Accesses". External rating programs can be "hooked" into these calculations as well. A schematic overview is shown in **figure 13,** which is similar to figure 2. In particular, figure 13 shows an operation which can comprise a group of calculations, such as n calculations, wherein n is a natural number. In particular n is equal to 1, 2, 3, 4, 5, 6, 8, 10, 15, 20, etc. A calculation may be a previous validation comprising operands and operators as described with reference to figure 3.

Screenshots of a graphic example are shown in **figures 14a** - **14c,** which can be created by the example of the computer implemented system/method, as shown by the figures, when following the path *System>Prod. Conf.>Calculations.* From here, operations can be added, modified or erased. For example, figures 14a - 14c represent a compound of calculations for an operation named "OP_DEFAULT_8". Each line is highlighted separately in a respective figure. The first line (in figure 14a) contains the calculation "C1". The second line (in figure 14b) contains the next calculation, "C2" and the last line (in figure 14c) contains the last calculation "C3".

In the above content of the calculations 3 levels have been defined:

- C1 (referred to as line 01 in figure 14a) is a calculation based on a validation which is run if the validation is FALSE, i.e. the calculation C1 is carried out if the result of the validation "SUM CONTENTS 4 > LIM" is "false". The validation "SUM CONTENTS 4 > LIM" has been exemplary defined with figure 3 above.

- C2 (referred to as line 05 in figure 14b) is a calculation based on validation "SUM CONTENTS 4 > LIM". The calculation C2 is run if said validation is "true".

- C3 (referred to as line 10 in figure 14c) is a calculation that is always run.

The actual operation is defined for the product developer and stored in table KTPM56T, i.e. the definition table. This table is where all operations are stored. Table KTPM56T is shown in the screenshot according to **figure 15.**

The definitions of this calculation are contained in table KTPA57T, as an exemplary condition table, which is exemplary shown in the two screenshots according to **figures 16a and 16b.** For each line (R1, R2, R3), which is stored in table KTPA57T (figures 16a and 16b), the format of the calculation and any associated variables are defined.

The content of the calculation is stored in table KTPA78T, as an exemplary variable/parameter table, which is exemplary shown in the two screenshots according to **figures 17a and 17b.** Summarizing, table KTPA78T keeps the mathematical relationships between the operands and the operators, so at the end said table stores how the elements or components are related into a mathematical rule.

The code of the program is exemplary shown in the table according to the screenshots in **figures 18a** - **18c,** which is an exemplary code table. From the following instructions in pseudo-code it can be seen what happens for each line. As with validations and accesses, the generator (COBOL source KTPLP007) generates a code automatically into copybooks that will in turn access the tables (KTPA57T and KTPA78T) and will then inform these pseudo-code instructions. This is how the program turns the content of a table into cobol source (in pseudo code):

STEP 1:

1.1-. Read first record from KTPA57T and write
1.2-. Perform

  1.2.1- .If there is a validation associated to the calculation:

    1.2.1.1-. Write the PERFORM sentence to run the validation.
    1.2.1.2-. Write the IF to evaluate the validation outcome (True or False)

  1.2.2-. Write the PERFORM to run the calculation. (C)
  1.2.3- .If there is a validation associated to the calculation:

    2.3.1-. Write End of lines and exit

1.2.2-. Read next record from KTPA57T

Until end of KTPA57T.

As a result of the above loop the generator generates the format of the calculation based on what is read from KTPA57T, and the code is generated into the copybook TP3CCYAU as it is shown in the screenshot according to figure 18a.

The level 01 calculation (see definition of the levels above) is performed, when the validation is "false", then the second level 05 is performed when the validation is "true" and the third level 10 will be executed not subject to any validation. The levels are indicated in figure 18a by the respective boxes labeled "F" (level 01 calculation), "T" (level 05 calculation) and "Calculation" (level 10 calculation).

Finally, also the content of the 3 levels of the calculation (C1, C2 and C3) or level 01, 05 and 10 is written into the same copybook TP3CCYAU. The pseudo code or the instructions that the programs follows, in order to write the content are the following one (pseudo code for table KTPA78T access):

STEP 2:

2.1-. Read first record from KTPA78T and do
2.2-. Perform

2.2.1- .Write new line with the information of KTPA78T
2.2.2-. Read next record from KTPA78T

Until end of KTPA78T.
Substeps 2.2.1 and 2.2.2 may be iterative/repeated.

As a result of that loop (steps 2.2.1 and 2.2.2) in this mentioned copybook the CONTENT of these calculations (C1, C2 and C3 or the levels 01, 05 and 10) is also written. In the screenshot according to figures 18b and 18c, it is shown how the calculations are carried out in each level. It means that the PERFORM (Cobol instruction that executes what is defined inside) which is called in the STEP 1 are defined here at this point in the STEP 2 as shown in figures 18b and 18c.

- <u>Texts/Paragraphs</u>

The module "texts/paragraphs" allows the definition of the texts (document templates) to be generated for each product, i.e. for each set of two or more interrelated executable files, as well as the triggering rules for the paragraphs (e.g. if coverage A is selected, clause XXX will be printed). A schematic overview is shown in **figure 19** (which is similar to figures 2 and 13). In figure 19 the creation according to the module texts/paragraphs is shown. As an example, the "text" can comprise a number of paragraphs, such as 1, 2, 3, 4, 5, 6, 10, 15, 20, etc paragraphs, each of which can be individually addressed and individually associated with to e.g. at least one product and/or at least one insured object and/or at least one coverage, etc. In figure 19, the "Insured Object" is associated with "Paragraph 1". It is also possible that 2 or more paragraphs are associated with said "Insured Object". Moreover, "Coverage 1" is associated with one paragraph, namely "Paragraph 2". "Coverage 2" is associated with one paragraph, namely "Paragraph 3". It is possible that each coverage is associated with two or more paragraphs and/or that each coverage is associated with an identical paragraph. As an example, "Coverage 1" may be associated with "Paragraph 1" and "Coverage 2" may be associated with "Paragraph 2" and "Paragraph 3". It is also possible in this example, that "Coverage 1" is associated with "Paragraph 1" and "Paragraph 2".

As with validations, accesses and operations, tables are used for defining and storing variables. Table KTPA65T, the basis for documents generated for a product.

The paragraphs have a fixed code, which means that in that table there are paragraphs that are associated to each coverage code and also to each product, i.e. for each set of two or more interrelated executable files.

For triggering paragraphs there are also validations which are associated to them, it means that a text paragraph could be triggered based on the fact that the coverage which is associated is contracted and also if it has a validation associated to it.

The screenshots according to **figures 20a** - **20c** represent an example of this table KTPA65T definition.

The screenshots according to **figures 21a and 21b** contain the part of the COBOL program that accesses the fields of table KTPA65T and reads the values that documentation is intended to be generated for. As a result of accessing the table KTPA65T, the program can generate the required documentation.

Here the process is not really the same as the other levels explained as the executable that is called in order to trigger paragraphs (and obviously documents) reads the registers associated to a particular paragraph and move all the information stored into an internal variable through a Cobol Instruction called CURSOR as shown in the screenshots according to figures 21a and 21b.

Finally, after reading the information stored for each paragraph, in the same copybook (executable) TPSTCDBD is checked if a certain paragraph has to be triggered or not despite the fact of being contracted. This is also checked by automated code generated based in the validations associated to the paragraphs which have been also downloaded into that copybook as shown in the screenshot according to **figure 22.**

3. Product Generator

After setting-up the product using the previous modules, i.e. after composing a combination of machine readable code in machine language by selecting and associating two or more sections of code using the GUI, the Product Factory Generator transforms said data, which may be configured from tables, into COBOL executable files that contain the basis of a product, i.e. all the product information and rules (except for those values held in corporate tables). In the context of the present application, the term "executable program" may be synonymous for the term "executable file" or the term "executable program" may comprise two or more interrelated executable files. Through the Policy Administration modules, policies, data validations, etc. can be generated for the product.

This Product Executable is called from the Policy Administration services through standard interfaces, as exemplary shown in **figure 23.** According to figure 23, there is one Policy Admin service which is the KCILMZ06 which can call the executables when the user or when the action is VALIDATE or RATE.

Both actions can be triggered in three different levels:

- Policy
- Object
- Coverage.

Now, the Policy Admin service is always the same (KCILMZ06) but the executables from Product Factory that perform the action of VALIDATING or RATING are dynamic. This means that the service KCILMZ06 is accessing one or more tables where the name of the executable(s) that need(s) to use in each level and in each action are stored. This table is e.g. KTPM01T.

4. Product Factory Process Flows Summary

**Figure 24** shows a flow diagram summarizing the main process flows described throughout the entire document. Figure 24 describes the functionality of "Product Factory", namely to particularly generate programs of high complexity from an initial data input.

Steps S1 to S3 are preferably carried out on the client side. Steps S4 to S6 are preferably carried out on the server side.

In step S1 relevant data for defining the two or more interrelated executable files is entered by a user of the computer based system/method according to the present application. The computer based system/method may also be referred to as "Product Factory". In particular, the data is entered using a GUI, as exemplary shown in the figures, such as figure 3.

In step S2, the entered data is stored in one or more table(s), as also shown in the respective figures, such as figures 4, 5a and 5b. Steps 1 and 2 can be carried out in a repeated manner, wherein subsequently data may be entered (step 1) and said data may be stores in one or more table(s) (step 2).

In step S3 the computer implemented verification of the coherency is carried out, wherein a coherency tool may be used. The coherency tool may comprise a GUI for communication with the user of the system. In particular, the coherency tool may be adapted to output a result of the coherency test in clear text. Advantageously, the coherency of the code in machine readable language can be verified in its entirety at the client side, particularly without compilation. The two or more executable files may then be created at the server side (see steps S4 to S6) and run, with minimized risk of runtime errors.

In step S4 processes comprising e.g. validations, accesses, etc may be generated and in particular the two or more interrelated executable files are compiled using a compiler and thus,

in step S5 the two or more interrelated executable files (referred to as e.g. result programs) are generated.

In step S6, the two or more interrelated executable files are tested by executing them at the server side.

In the following, advantages of the computer implemented method/system according to the present application are described:

5.1. Avoid connection problems

This advantage will be explained by way of an example, where operation 1 has been designed as follows:

$$\text{Operation 1} = \text{Element 1} + \text{Element2}$$

In a specific database, Operation 1 may be connected to the Technical Product (i.e. to each set of two or more interrelated executable files) it corresponds to, in order to indicate to the system where it may retrieve the values for the components of the operation (element 1 and element 2 in this example). Connecting the operation means that first the operands should be connected, in that case, Element 1 and Element 2 where those elements should be assigned at the level desired that could be product, object or coverage (levels are indicated in the figure 1). Then, once the elements are connected, the system knows where the values related to them are stored. The same happens with the operation. As a result of this operation, the fact of being connected means that the system will know where the values related with it are stored.

When generating the product, i.e. the two or more interrelated executable files, the generator will check if all the connections have been efficiently established. If not, the process fails, and an error description will be written in the issue log.

In order to avoid failure, the operation can be properly connected prior to the generation. Moreover, according to the present application, the coherency tool is used prior to the generation, in order to find out whether the connections have been efficiently made. In case an incorrect connection has been made, the coherency tool provides an error message, pointing out the inconsistency and/or an incorrect connection. The coherency tool is the capability that enables to check (before the generation) the coherency of the Product Factory components definition and their relationships. So this tool validates not only the definition but also if the relationships built is also consistent. In other words, the coherency tool may verify, whether validations, elements and operations are correctly related and offer integrity. The coherency tool is in particular adapted to be executed using the GUI. Exemplary, a user may define and create one or more sets of source code using the GUI, as shown in **figure 25.** By selecting button 16, a design or association step of selecting and associating the two or more sections of interrelated machine readable code is carried out. Advantageously, one or more designs/products may be chosen from the list of available, predefined products. According to the example shown in figure 25, the template "Core_Motor" is selected. The template "Core_Motor" may represent a definition of two or more selected sections of machine readable code. By selecting the button 16, source code of the template "Core_Motor" is created, in particular, the associations of the two or more sections of machine readable code are established.

As a next step, using said GUI, which now provides a button 18, as shown in **figure 26,** the coherence tool is activated, which now checks the selected and associated two or more sections of machine readable code, i.e. the computer implemented verification of the associations of the two or more selected and associated machine readable code is carried out. In other words, the coherence of the two or more selected and associated sections of machine readable code is verified using the coherence tool by selecting the button 18. The coherence tool may be executed in the background and provide a message e.g. when the coherence verification is negative, particularly providing details to the nature of the negative coherence. The coherence tool may also provide a positive message, in case of a positive verification of the coherence.

It is also possible that the coherence tool provides an individual window in the GUI or is displayed as a window in the GUI, as shown in **figures 27a, 27b and 27c.** As shown is these figures, specific parameters may be selected, such as "Elements coherency", "Validations coherency" and/or "ratings coherency". Also the GUI/coherency tool may be adapted to provide details of the coherence validation, as also shown in figures 27a, 27b and 27c.

5.2. Avoid format problems

Two examples are given in order to describe this advantage:

a) Validations
it is possible to have the following validation defined:
'If E1 > Op1 then ....'
Where:

E1= element value

Op1= result of a calculation

If element E1 is defined with 'Alphanumeric format' and the result of the Operation 1 is defined as 'numeric format', the generator will not be able to compare their values and, consequently, no error message will be created by the generator generating the interrelated executable files. At runtime, the process will fail and an error description will be written in the issue log.

Advantageously, the coherency tool may verify the inconsistencies and output a respective message, upon which the inconsistency can be corrected. In the example, E1 will be defined as 'Numeric'. In other words, even if the generator does not provide any warning and/or error message, the coherency tool is able to determine the inconsistency and output in clear text a warning and/or error message, upon which the validation can be corrected.

In other words, the if clause comprising two variables is a section of code. By verifying, whether the variables "E1" and "Op1" may be compared using the mathematical operator ">", the coherence of the section of code is verified, in particular, whether said section of code is able to produce a consistent output. This coherence can particularly be verified using the coherence tool.

b) Operations
it is possible to have the following operation defined:

Operation 1 = Calculation 1 + Calculation2

Calculation 1 = Element 1 + Element 2

Calculation 2 = Operation 2

Where:

Operation 1 is defined as: Dec (15, 3)
Calculation 1 is defined as: Dec (15, 3)
Calculation 2 is defined as: Dec (11, 6)
Operation 2 is defined as: Dec (15, 3)

Normally, those results of operations that are economical imports, are defied as Dec (15, 3) while percentages are defined as Dec (11, 6).

In this example, Operation 2 is defined as Dec (15, 3), but calculation 2 is defined as. Dec (11, 6). Operation 2 is defined with a numeric format higher than Calculation 2. In this case the generator would generate a 'Warning error'. Generation and compilation will finish, but the user will be warned about this fact.

During execution time (also referred to as runtime), if all the results of operation 2 fit in the format defined for Calculation 2, nothing will happen. But there is a risk, in the case of results of operation 2 not fitting into Calculation 2 format (ex: 123456789, 122). In this case, during execution time, system will generate an error.

Advantageously, in order to avoid a possible error during runtime, the format of Calculation 2 may be changed to Dec (15, 3), wherein the format (15, 3) means that the value can have as maximum 3 decimals and 12 integers; format (11, 6) means that the value can have as maximum 6 decimals and 5 integers. Particularly using the coherency tool, the warning created by the creator/compiler will be translated and output in clear text for the developer who needs not know the machine readable language, in which the generator also outputs the warning. Consequently, the user also understands the warning and can adapt the system by correcting the inconsistency. In other words, according to the present application, the coherence of the associations of the sections of code advantageously is verified, wherein the "Operation 1" represents a first section of code and "Operation 2" represents a second section of code and the association between the two code sections is carried out by defining

Operation 1 = Calculation 1 + Calculation2,

wherein "Calculation 2 = Operation 2".

It is also possible that "Operation 1" is used to generate an executable file. "Operation 2" may be used to generate a further executable file. Consequently, both executable files are interrelated, since the output of one executable file (e.g. the output of "Operation 2") is used as input of the other executable filed (e.g. of "Operation 1").

5.3. Avoid system problems

Advantageously, compiler parameters are adapted and optimized, and the rating program may be split, so that the processor, even when having limited capacity (other possible processes may be running at the same time), the interrelated executable files may be generated without failing of generation. In particular, the generator may be split into different programs attending to the functionalities (Operations, Validations, texts and documentation) thereby providing a reliable generation of interrelated executable files.

With reference to **figure 28,** an exemplary system for implementing the invention includes a general purpose computing device in the form of a conventional computing environment 20 (e.g. personal computer), including a processing unit 22, a system memory 24, and a system bus 26, that couples various system components including the system memory 24 to the processing unit 22. The processing unit 22 may perform arithmetic, logic and/or control operations by accessing system memory 24. The system memory 24 may store information and/or instructions for use in combination with processing unit 22. The system memory 24 may include volatile and non-volatile memory, such as random access memory (RAM) 28 and read only memory (ROM) 30. A basic input/output system (BIOS) containing the basic routines that helps to transfer information between elements within the personal computer 20, such as during start-up, may be stored in ROM 30. The system bus 26 may be any of several types of bus structures including a memory bus or memory controller, a peripheral bus, and a local bus using any of a variety of bus architectures.

The personal computer 20 may further include a hard disk drive 32 for reading from and writing to a hard disk (not shown), and an external disk drive 34 for reading from or writing to a removable disk 36. The removable disk may be a magnetic disk for a magnetic disk driver or an optical disk such as a CD ROM for an optical disk drive. The hard disk drive 34 and external disk drive 34 are connected to the system bus 26 by a hard disk drive interface 38 and an external disk drive interface 40, respectively. The drives and their associated computer-readable media provide nonvolatile storage of computer readable instructions, data structures, program modules and other data for the personal computer 20. The data structures may include relevant data of the implementation of the method as described in more detail above. The relevant data may be organized in a database, for example a relational or object database.

Although the exemplary environment described herein employs a hard disk (not shown) and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 30 or RAM 28, including an operating system (not shown), one or more application programs 44, other program modules (not shown), and program data 46. The application programs may include at least a part of the functionality as detailed in Figs. 1 to 24.

A user may enter commands and information, as discussed below, into the personal computer 20 through input devices such as keyboard 48 and mouse 50. Other input devices (not shown) may include a microphone (or other sensors), joystick, game pad, scanner, or the like. These and other input devices may be connected to the processing unit 22 through a serial port interface 52 that is coupled to the system bus 26, or may be collected by other interfaces, such as a parallel port interface 54, game port or a universal serial bus (USB). Further, information may be printed using printer 56. The printer 56, and other parallel input/output devices may be connected to the processing unit 22 through parallel port interface 54. A monitor 58 or other type of display device is also connected to the system bus 26 via an interface, such as a video input/output 60. In addition to the monitor, computing environment 20 may include other peripheral output devices (not shown), such as speakers or other audible output.

The computing environment 20 may communicate with other electronic devices such as a computer, telephone (wired or wireless), personal digital assistant, television, or the like. To communicate, the computer environment 20 may operate in a networked environment using connections to one or more electronic devices. Figure 28 depicts the computer environment networked with remote computer 62. The remote computer 62 may be another computing environment such as a server, a router, a network PC, a peer device or other common network node, and may include many or all of the elements described above relative to the computing environment 20. The logical connections depicted in figure 28 include a local area network (LAN) 64 and a wide area network (WAN) 66. Such networking environments are commonplace in offices, enterprise-wide computer networks, intranets and the Internet.

When used in a LAN networking environment, the computing environment 20 may be connected to the LAN 64 through a network I/O 68. When used in a WAN networking environment, the computing environment 20 may include a modem 70 or other means for establishing communications over the WAN 66. The modem 70, which may be internal or external to computing environment 20, is connected to the system bus 26 via the serial port interface 52. In a networked environment, program modules depicted relative to the computing environment 20, or portions thereof, may be stored in a remote memory storage device resident on or accessible to remote computer 62. Furthermore, other data relevant to the computer implemented method for generating interrelated computer executable files which may be insurance products or be related to insurance products, and/or related to application(s) of the insurance claim management (described in more detail above), and/or related to the generation of insurance documents, and/or related to the generation of further products, such as real estate products, financial service products and/or documents, may be resident on or accessible via the remote computer 62. The data may be stored for example in an object or a relation database. It will be appreciated that the network connections shown are exemplary and other means of establishing a communications link between the electronic devices may be used.

The above-described computing system is only one example of the type of computing system that may be used to implement the above described computer implemented method.

**List of Reference Numerals**

| | |
|---|---|
| 1 | GUI |
| 2a | field |
| 2b | field |
| 4a | field |
| 4b | field |
| 6a | field |
| 6b | field |
| 8 | field |
| 10 | window |
| 12 | box |
| 16 | button |
| 18 | button |
| 20 | conventional computing environment |
| 22 | processing unit |
| 24 | system memory |
| 26 | system bus |
| 28 | random access memory (RAM) |
| 30 | read only memory (ROM) |
| 32 | hard disk drive |
| 34 | external disk drive |
| 36 | removable disk |
| 38 | hard disk drive interface |
| 40 | external disk drive interface |
| 44 | one or more application programs |
| 46 | program data |
| 48 | keyboard |
| 50 | mouse |
| 52 | serial port interface |
| 54 | parallel port interface |
| 56 | printer |
| 58 | monitor |
| 60 | video input/output |
| 62 | remote computer |
| 64 | local area network (LAN) |
| 66 | wide area network (WAN) |
| 68 | network I/O |
| 70 | a modem |

**Claims**

**1.** Computer implemented method for generating interrelated computer executable files at a server side comprising the steps of:

- providing on a client computer at a client side a graphical user interface associated with machine readable code in a machine language, wherein the graphical user interface displays data substantially in clear text (S1);
- selecting and associating (S2) two or more sections of machine readable code in machine language on said client computer at said client side using said graphical user interface;
- computer implemented verification of a coherence (S3) of said selected machine readable code on said client computer at the client side before compiling said selected machine readable code at the client side and outputting the result of said coherence verification substantially in clear text, wherein verifying the coherence of said selected machine readable code comprises

-- computer implemented verification of the coherence of said selected sections of machine readable code and/or
-- computer implemented verification of the coherence of said associations of said selected sections of machine readable code;

wherein the step of computer implemented verification (S3) of the coherence further comprises:
- based on the selected machine readable code estimating at the client side runtime parameters before compiling the selected sections of machine readable code, wherein the runtime parameters are parameters used by or within the executable files when executing the executable files at the server side, wherein in case the runtime parameters are incompatible with hardware configurations at the server side, a respective message is generated; and
- upon approval of the coherence on said client computer at said client side, compiling (S4, S5) the selected and associated two or more sections of machine readable code on a server computer at a server side to create two or more interrelated executable files which are executable by the server computer.

2. Method according to claim 1, wherein selecting and associating (S2) two or more sections of machine readable code in machine language comprises inputting rules in clear text using said graphical user interface and providing machine readable code in machine language equivalent to said clear text using a generator,
wherein the generator is adapted to:

read one or more parameters stored in one or more tables, the one or more parameters comprising information about logical conditions;
identify logic of the one or more parameters read from the one or more tables; and
use the one or more parameters read from the one or more tables to create the machine readable code in the machine language.

3. Method according to one of the preceding claims, wherein the step of computer implemented verification (S3) of the coherence comprises a computer implemented verification of the compatibility of a first section of code used for generating a first executable file with a second section of code used for generating a second executable file.

4. Method according to any of the preceding claims, wherein one or more of the sections of machine readable code are reused for compiling (S4, S5) the two or more interrelated executable files.

5. Method according to any of the preceding claims, wherein at least one first level executable file is compiled which is interrelated with at least one i-level executable file, wherein the at least one i-level executable file is interrelated with at least one (i+1)-level executable file, wherein i is a natural number greater than 1.

6. Method according to claim 5, wherein the at least one i-level executable file and the at least one (i+1)-level executable file are compiled from one or more sections of machine readable code, wherein the one or more of the sections of machine readable code comprise similar, preferably substantially identical machine readable code.

7. Method according to any of the preceding claims, comprising the further step of verifying (S6) the integrity of the execution of all the executable files by executing all the executable files at the server side and comparing the performance at the server side with a predetermined specification at the client side.

8. Method according to any of the preceding claims, wherein the steps at the client side are carried out at a client remote from a server and the steps at the server side are carried out at a server remote from the client.

9. Computer-based system for generating interrelated computer executable files at a server side comprising
on a client computer on a client side:

- a graphical user interface at said client side, wherein

    -- the graphical user interface is associated with machine readable code,
    -- the graphical user interface displays data substantially in clear text,
    -- the graphical user interface is adapted to select two or more sections of machine readable code on said client computer at said client side;

- a coherence verifier which is adapted for

    -- verifying a coherence of said selected machine readable code on said client computer at the client side; and
    -- outputting the result of said coherence verification substantially in clear text;

wherein verifying the coherence of said selected machine readable code comprises computer implemented verification of the coherence of said selected sections of machine readable code and/or computer implemented verification of the coherence of said associations of said selected sections of machine readable code; wherein verifying the coherence further comprises:

    -- based on the selected machine readable code estimating at the client side runtime parameters before compiling the selected sections of machine readable code, wherein the runtime parameters are parameters used by or within the executable files when executing the executable files at the server side, wherein in case the runtime parameters are incompatible with hardware configurations at the server side, a respective message is generated; and comprising on a server computer at said server side:

- a compiler for compiling the selected two or more sections of machine readable code on said server computer at said server side to create two or more interrelated executable files which are executable by the server.

**10.** Computer-based system according to claim 9, wherein the graphical user interface comprises a generator which is adapted to provide machine readable code in machine language equivalent to said clear text as input through the graphical user interface, wherein the generator is adapted to:

read one or more parameters stored in one or more tables, the one or more parameters comprising information about logical conditions;
identify logic of the one or more parameters read from the one or more tables; and
use the one or more parameters read from the one or more tables to create the machine readable code in the machine language.

**11.** Computer-based system according to claim 9 or 10, further comprising an estimator which is adapted to estimate at the client side based on the selected machine readable code runtime parameters before compiling the selected sections of machine readable code, wherein the runtime parameters are associated with the executable files when executing the executable files at the server side.

**12.** Computer program product, which when loaded in the memory of a client computer and a server computer and executed by the client computer and the server computer achieves that the client computer and the server computer carry out respective client computer related steps and server computer related steps of a method according to any one of the claims 1 to 8.

**Patentansprüche**

**1.** Ein computerimplementiertes Verfahren zum Erzeugen von miteinander zusammenhängenden ausführbaren Computerdateien auf einer Serverseite, das die folgenden Schritte umfasst:

- Bereitstellen, auf einem Client-Rechner auf einer Client-Seite, einer grafischen Benutzerschnittstelle, die mit maschinenlesbarem Code in einer Maschinensprache verknüpft ist, wobei die grafische Benutzerschnittstelle Daten im Wesentlichen im Klartext (S1) anzeigt;
- Auswählen und Zuordnen (S2) von zwei oder mehr Abschnitten maschinenlesbaren Codes in Maschinensprache im genannten Client-Computer auf der genannten Client-Seite unter Verwendung der genannten grafischen Benutzerschnittstelle;

- computerimplementierte Überprüfung einer Kohärenz (S3) des genannten ausgewählten maschinenlesbaren Codes im genannten Client-Computer auf der Client-Seite, bevor der genannte ausgewählte maschinenlesbare Code auf der Client-Seite kompiliert wird und das Ergebnis der genannten Kohärenzprüfung im Wesentlichen in Klartext ausgegeben wird, wobei
das Überprüfen der Kohärenz des genannten ausgewählten maschinenlesbaren Codes Folgendes umfasst:

-- das computerimplementierte Überprüfen der Kohärenz der genannten ausgewählten Abschnitte des maschinenlesbaren Codes und/oder
-- das computerimplementierte Überprüfen der Kohärenz des genannten Zuordnens der genannten ausgewählten Abschnitte des maschinenlesbaren Codes;

wobei der Schritt des computerimplementierten Überprüfens (S3) der Kohärenz ferner Folgendes umfasst:

- basierend auf dem ausgewählten maschinenlesbaren Code, Schätzen, auf der Client-Seite, von Laufzeitparametern vor dem Kompilieren der ausgewählten Abschnitte von maschinenlesbarem Code, wobei die Laufzeitparameter Parameter sind, die von oder innerhalb der ausführbaren Dateien beim Ausführen der ausführbaren Dateien auf der Serverseite verwendet werden, wobei, falls die Laufzeitparameter mit Hardwarekonfigurationen auf der Serverseite nicht kompatibel sind, eine entsprechende Meldung erzeugt wird; und
- nach Genehmigung der Kohärenz im genannten Client-Computer auf der genannten Client-Seite, Kompilieren (S4, S5) der ausgewählten und zugeordneten zwei oder mehr Abschnitte von maschinenlesbarem Code in einem Server-Computer auf einer Server-Seite, um zwei oder mehr miteinander zusammenhängende ausführbare Dateien zu erzeugen, die durch den Server-Computer ausführbar sind.

**2.** Das Verfahren nach Anspruch 1, wobei das Auswählen und Zuordnen (S2) von zwei oder mehr Abschnitten maschinenlesbaren Codes in Maschinensprache das Eingeben von Regeln in Klartext unter Verwendung der genannten grafischen Benutzerschnittstelle und das Bereitstellen von maschinenlesbarem Code in Maschinensprache, der dem genannten Klartext entspricht, unter Verwendung eines Generators umfasst,
wobei der Generator angepasst ist, um Folgendes zu bewerkstelligen:

Lesen eines oder mehrerer Parameter, die in einer oder mehreren Tabellen gespeichert sind, wobei der eine oder die mehreren Parameter Informationen über logische Bedingungen enthalten;
Identifizieren der Logik des einen oder der mehreren, aus der einen oder den mehreren Tabellen gelesenen Parameter; und
Verwenden eines oder mehrerer Parameter, die aus einer oder mehreren Tabellen gelesen werden, um den maschinenlesbaren Code in der Maschinensprache zu erzeugen.

**3.** Das Verfahren nach einem der vorhergehenden Ansprüche, wobei der Schritt der computerimplementierten Überprüfung (S3) der Kohärenz Folgendes umfasst: eine computerimplementierte Überprüfung der Kompatibilität eines ersten Codeabschnitts, der zur Erzeugung einer ersten ausführbaren Datei verwendet wird, mit einem zweiten Codeabschnitt, der zur Erzeugung einer zweiten ausführbaren Datei verwendet wird.

**4.** Das Verfahren nach irgendeinem der vorhergehenden Ansprüche, wobei einer oder mehrere der Abschnitte des maschinenlesbaren Codes wiederverwendet werden zur Kompilierung (S4, S5) der zwei oder mehr miteinander zusammenhängenden ausführbaren Dateien.

**5.** Das Verfahren nach irgendeinem der vorhergehenden Ansprüche, wobei mindestens eine ausführbare Datei der ersten Ebene kompiliert wird, die mit mindestens einer ausführbaren Datei der i-Ebene zusammenhängt, wobei die mindestens eine ausführbare Datei der i-Ebene mit mindestens einer ausführbaren Datei der (i+1)-Ebene zusammenhängt, wobei i eine natürliche Zahl größer als 1 ist.

**6.** Das Verfahren nach Anspruch 5, wobei die mindestens eine ausführbare Datei auf i-Ebene und die mindestens eine ausführbare Datei auf (i+1)-Ebene aus einem oder mehreren Abschnitten an maschinenlesbarem Code kompiliert werden, wobei der eine oder die mehreren Abschnitte an maschinenlesbarem Code ähnlichen, vorzugsweise im Wesentlichen identischen maschinenlesbaren Code umfassen.

**7.** Das Verfahren nach irgendeinem der vorhergehenden Ansprüche, das den folgenden weiteren Schritt umfasst: das Überprüfen (S6) der Integrität der Ausführung aller ausführbaren Dateien durch das Ausführen aller ausführbaren Dateien auf der Serverseite, und das Vergleichen der Leistung auf der Serverseite mit einer vorbestimmten Spezifikation auf der Client-Seite.

**8.** Das Verfahren nach irgendeinem der vorhergehenden Ansprüche, wobei die Client-seitigen Schritte bei einem von einem Server entfernten Client und die Server-seitigen Schritte bei einem vom Client entfernten Server ausgeführt werden.

**9.** Ein computergestütztes System zur Erzeugung von miteinander zusammenhängenden, computerausführbaren Dateien auf einer Serverseite, das Folgendes umfasst:

in einem Client-Computer auf einer Client-Seite:

- eine grafische Benutzerschnittstelle auf der genannten Client-Seite, wobei

-- die grafische Benutzerschnittstelle mit maschinenlesbarem Code verknüpft ist,
-- die grafische Benutzerschnittstelle Daten im Wesentlichen im Klartext anzeigt,
-- die grafische Benutzerschnittstelle angepasst ist, um zwei oder mehr Abschnitte von maschinenlesbarem Code im genannten Client-Computer auf der genannten Client-Seite auszuwählen;

- einen Kohärenzprüfer, der zu Folgendem angepasst ist:

-- Überprüfen einer Kohärenz des genannten ausgewählten maschinenlesbaren Codes im genannten Client-Computer auf der Client-Seite; und
-- Ausgeben des Ergebnisses der genannten Kohärenzprüfung im Wesentlichen in Klartext;

wobei das Überprüfen der Kohärenz des genannten ausgewählten maschinenlesbaren Codes eine computerimplementierte Überprüfung der Kohärenz der genannten ausgewählten Abschnitte des maschinenlesbaren Codes und/oder eine computerimplementierte Überprüfung der Kohärenz der genannten Verknüpfungen der genannten ausgewählten Abschnitte des maschinenlesbaren Codes umfasst;
wobei das Überprüfen der Kohärenz ferner Folgendes umfasst:

-- basierend auf dem ausgewählten maschinenlesbaren Code, Schätzen, auf der Client-Seite, von Laufzeitparametern vor dem Kompilieren der ausgewählten Abschnitte von maschinenlesbarem Code, wobei die Laufzeitparameter Parameter sind, die von oder innerhalb der ausführbaren Dateien beim Ausführen der ausführbaren Dateien auf der Serverseite verwendet werden, wobei, falls die Laufzeitparameter mit Hardwarekonfigurationen auf der Serverseite nicht kompatibel sind, eine entsprechende Meldung erzeugt wird;

und umfassend in einem Server-Computer auf der genannten Server-Seite:

- einen Compiler zum Kompilieren der ausgewählten zwei oder mehr Abschnitte von maschinenlesbarem Code im genannten Servercomputer auf der genannten Server-Seite, um zwei oder mehr miteinander zusammenhängende ausführbare Dateien zu erzeugen, die durch den Server ausführbar sind.

**10.** Das computergestützte System nach Anspruch 9, wobei die grafische Benutzerschnittstelle einen Generator umfasst, der dazu angepasst ist, maschinenlesbaren Code in Maschinensprache bereitzustellen, der dem genannten Klartext als Eingabe über die grafische Benutzerschnittstelle entspricht, wobei der Generator dazu ausgelegt ist Folgendes zu bewerkstelligen:

Lesen eines oder mehrerer Parameter, die in einer oder mehreren Tabellen gespeichert sind, wobei der eine oder die mehreren Parameter Informationen über logische Bedingungen enthalten;
Identifizieren der Logik des einen oder der mehreren, aus der einen oder den mehreren Tabellen gelesenen Parameter; und
Verwenden eines oder mehrerer Parameter, die aus einer oder mehreren Tabellen gelesen werden, um den maschinenlesbaren Code in der Maschinensprache zu erzeugen.

**11.** Das computergestützte System nach Anspruch 9 oder 10, das ferner eine Schätzeinrichtung umfasst, die geeignet ist, auf der Client-Seite, auf der Grundlage des ausgewählten maschinenlesbaren Codes, Laufzeitparameter vor dem Kompilieren der ausgewählten Abschnitte von maschinenlesbarem Code zu schätzen, wobei die Laufzeitparameter, beim Ausführen der ausführbaren Dateien auf der Server-Seite, den ausführbaren Dateien zugeordnet sind.

**12.** Ein Computerprogrammprodukt, das, wenn es in den Speicher eines Client-Computers und eines Server-Computers geladen und vom Client-Computer und vom Server-Computer ausgeführt wird, bewirkt, dass der Client-Computer und der Server-Computer entsprechende Client-Computer-bezogene Schritte und Server-Computer-bezogene Schritte eines Verfahrens nach irgendeinem der Ansprüche von 1 bis 8 ausführen.

**Revendications**

**1.** Un procédé mis en oeuvre par ordinateur pour générer des fichiers interreliés exécutables par ordinateur au niveau d'un côté serveur, comprenant les étapes suivantes :

- fournir sur un ordinateur client d'un côté client une interface utilisateur graphique associée à un code lisible par machine dans un langage machine, sachant que l'interface utilisateur graphique affiche des données essentiellement en texte clair (S1) ;
- sélectionner et associer (S2) deux ou plusieurs sections de code lisible par machine en langage machine sur ledit ordinateur client dudit côté client en utilisant ladite interface utilisateur graphique ;
- la vérification mise en oeuvre par ordinateur d'une cohérence (S3) dudit code sélectionné lisible par machine sur ledit ordinateur client du côté client avant de compiler ledit code sélectionné lisible par machine du côté client et de sortir le résultat de ladite vérification de cohérence essentiellement en texte clair, sachant que le fait de :

vérifier la cohérence dudit code lisible par machine sélectionné comprend :

- la vérification mise en oeuvre par ordinateur de la cohérence desdites sections sélectionnées de code lisible par machine et/ou
- la vérification mise en oeuvre par ordinateur de la cohérence desdites associations desdites sections sélectionnées de code lisible par machine ;

sachant que l'étape de vérification mise en oeuvre par ordinateur (S3) de la cohérence comprend en outre :

- sur la base du code sélectionné lisible par machine, le fait d'estimer du côté client des paramètres de temps d'exécution avant de compiler les sections sélectionnées de code lisible par machine, sachant que les paramètres de temps d'exécution sont des paramètres utilisés par ou dans les fichiers exécutables lors de l'exécution des fichiers exécutables du côté serveur, sachant que dans le cas où les paramètres de temps d'exécution sont incompatibles avec les configurations matérielles côté serveur, un message respectif est généré ; et
- lors de l'approbation de la cohérence sur ledit ordinateur client dudit côté client, le fait de compiler (S4, S5) les deux ou plusieurs sections sélectionnées et associées de code lisible par machine sur un ordinateur serveur du côté serveur pour créer deux ou plusieurs fichiers exécutables interreliés qui sont exécutables par l'ordinateur serveur.

**2.** Le procédé d'après la revendication 1, sachant que le fait de sélectionner et d'associer (S2) deux ou plusieurs sections de code lisible par machine dans un langage machine comprend le fait d'entrer des règles en texte clair en utilisant ladite interface utilisateur graphique et de fournir un code lisible par machine dans un langage machine équivalent audit texte clair en utilisant un générateur,
sachant que le générateur est conçu pour :

lire un ou plusieurs paramètres stockés dans une ou plusieurs tables, le ou les paramètres comprenant des informations sur les conditions logiques ;
identifier la logique d'un ou de plusieurs paramètres lus à partir de la ou des tables ; et pour
utiliser le ou les paramètres lus à partir de la ou des tables pour créer le code lisible par la machine dans le langage machine.

**3.** Le procédé d'après une des revendications précédentes, sachant que l'étape de vérification mise en oeuvre par ordinateur (S3) de la cohérence comprend une vérification mise en oeuvre par ordinateur de la compatibilité d'une première section de code utilisée pour générer un premier fichier exécutable avec une deuxième section de code utilisée pour générer un deuxième fichier exécutable.

**4.** Le procédé d'après l'une quelconque des revendications précédentes, sachant qu'une ou plusieurs des sections de code lisible par machine sont réutilisées pour compiler (S4, S5) les deux ou les plusieurs fichiers exécutables interreliés.

**5.** Le procédé d'après l'une quelconque des revendications précédentes, sachant qu'au moins un fichier exécutable de premier niveau est compilé qui est interrelié avec au moins un fichier exécutable de niveau i, sachant que le ou les fichiers exécutables de niveau i sont interreliés avec au moins un fichier exécutable de niveau (i+1), sachant que i est un nombre naturel supérieur à 1.

**6.** Le procédé d'après la revendication 5, sachant que l'au moins un fichier exécutable de niveau i et l'au moins un fichier exécutable de niveau (i+1) sont compilés à partir d'une ou plusieurs sections de code lisible par machine, sachant que l'une ou plusieurs sections de code lisible par machine comprennent un code lisible par machine similaire, de préférence essentiellement identique.

**7.** Le procédé d'après l'une quelconque des revendications précédentes, comprenant l'étape supplémentaire consistant à vérifier (S6) l'intégrité de l'exécution de tous les fichiers exécutables en exécutant tous les fichiers exécutables côté serveur et en comparant la performance côté serveur avec une spécification prédéterminée côté client.

**8.** Le procédé d'après l'une quelconque des revendications précédentes, sachant que les étapes côté client sont effectués au niveau d'un client distant d'un serveur et les étapes côté serveur sont exécutées au niveau d'un serveur distant du client.

**9.** Un système informatisé pour générer des fichiers exécutables par ordinateur interreliés au niveau d'un côté serveur comprenant

sur un ordinateur client, côté client :

- une interface utilisateur graphique au niveau dudit côté client, sachant que

  -- l'interface utilisateur graphique est associée à un code lisible par machine,
  -- l'interface utilisateur graphique affiche les données essentiellement en texte clair,
  -- l'interface utilisateur graphique est adaptée pour sélectionner deux ou plusieurs sections de code lisible par machine sur ledit ordinateur client dudit côté client ;

- un vérificateur de cohérence qui est adapté pour

  -- vérifier une cohérence dudit code lisible par machine sélectionné sur ledit ordinateur client, côté client ; et
  -- délivrer le résultat de ladite vérification de cohérence essentiellement en texte en clair ;

sachant que la vérification de la cohérence dudit code lisible par machine sélectionné comprend une vérification mise en oeuvre par ordinateur de la cohérence desdites sections sélectionnées de code lisible par machine et/ou une vérification mise en oeuvre par ordinateur de la cohérence desdites associations desdites sections sélectionnées de code lisible par machine ;
sachant que la vérification de la cohérence comprend en outre :

-- en se basant sur le code lisible par machine, l'estimation au niveau du côté client des paramètres de temps d'exécution avant de compiler les sections sélectionnées de code lisible par machine, sachant que les paramètres de temps d'exécution sont des paramètres utilisés par ou dans les fichiers exécutables lors de l'exécution des fichiers exécutables côté serveur, sachant que dans le cas où les paramètres d'exécution sont incompatibles avec les configurations matérielles côté serveur, un message respectif est généré ;

et comprenant
sur un ordinateur serveur, au niveau dudit côté serveur :

- un compilateur pour compiler les deux ou les plusieurs sections sélectionnées de code lisible par machine sur ledit ordinateur serveur au niveau dudit côté serveur afin de créer deux ou plusieurs fichiers exécutables interreliés qui sont exécutables par le serveur.

**10.** Le système informatisé d'après la revendication 9, sachant que l'interface utilisateur graphique comprend un générateur qui est adapté pour fournir un code lisible par machine dans un langage machine équivalent audit texte clair en entrée par l'intermédiaire de l'interface utilisateur graphique, sachant que le générateur est adapté pour :

lire un ou plusieurs paramètres stockés dans une ou plusieurs tables, le ou les paramètres comprenant des informations sur les conditions logiques ;
identifier la logique d'un ou de plusieurs paramètres lus à partir d'un ou de plusieurs tables; et
utiliser le ou les paramètres lus à partir d'une ou plusieurs tables pour créer le code lisible par machine dans le langage machine.

**11.** Le système informatisé d'après la revendication 9 ou 10, comprenant en outre un estimateur qui est adapté pour estimer côté client, sur la base du code sélectionné lisible par machine, des paramètres de temps d'exécution avant de compiler les sections sélectionnées de code lisible par machine, sachant que les paramètres de temps d'exécution sont associés aux fichiers exécutables lors de l'exécution des fichiers exécutables côté serveur.

**12.** Un produit programme informatique qui, lorsqu'il est chargé dans la mémoire d'un ordinateur client et d'un ordinateur serveur et qu'il est exécuté par l'ordinateur client et l'ordinateur serveur, permet à l'ordinateur client et à l'ordinateur serveur de réaliser des étapes respectives liées à l'ordinateur client et des étapes liées à l'ordinateur serveur conformément à un procédé d'après une quelconque des revendications de 1 à 8.

Figure 1

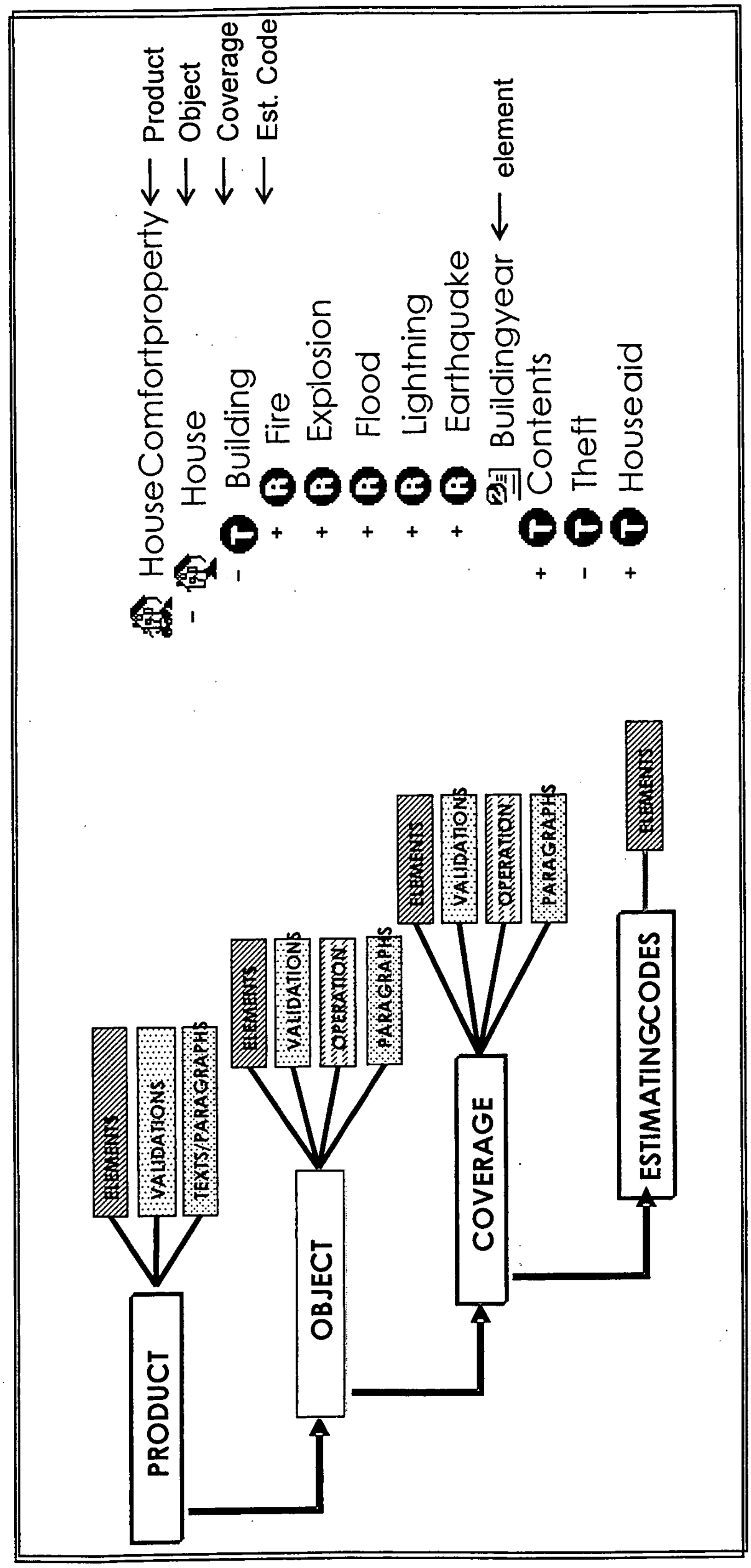
PRODUCT
ELEMENTS
VALIDATIONS
TEXTS/PARAGRAPHS
OBJECT
ELEMENTS
VALIDATIONS
OPERATION
PARAGRAPHS
COVERAGE
ELEMENTS
VALIDATIONS
OPERATION
PARAGRAPHS
ESTIMATINGCODES
ELEMENTS
HouseComfortproperty ← Product
House ← Object
Building ← Coverage
← Est. Code
Fire
Explosion
Flood
Lightning
Earthquake
Buildingyear ← element
Contents
Theft
Houseaid

Figure 2

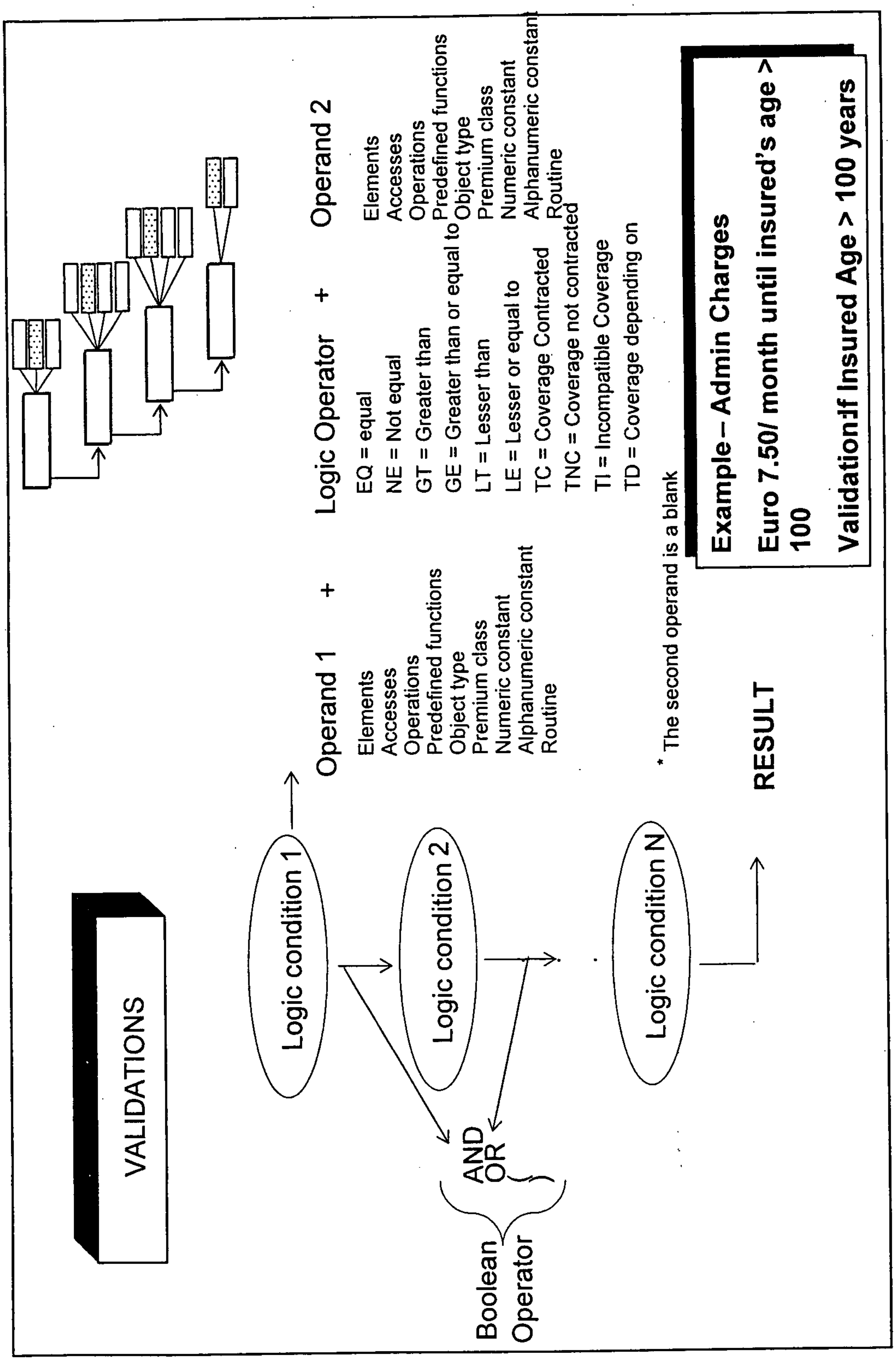
VALIDATIONS
Logic condition 1
Logic condition 2
Logic condition N
Boolean Operator
AND
OR
Operand 1 + Logic Operator + Operand 2
Elements
Accesses
Operations
Predefined functions
Object type
Premium class
Numeric constant
Alphanumeric constant
Routine
EQ = equal
NE = Not equal
GT = Greater than
GE = Greater than or equal to
LT = Lesser than
LE = Lesser or equal to
TC = Coverage Contracted
TNC = Coverage not contracted
TI = Incompatible Coverage
TD = Coverage depending on
Elements
Accesses
Operations
Predefined functions
Object type
Premium class
Numeric constant
Alphanumeric constant
Routine
* The second operand is a blank
RESULT
Example – Admin Charges
Euro 7.50/ month until insured's age > 100
Validation:If Insured Age > 100 years

Figure 3

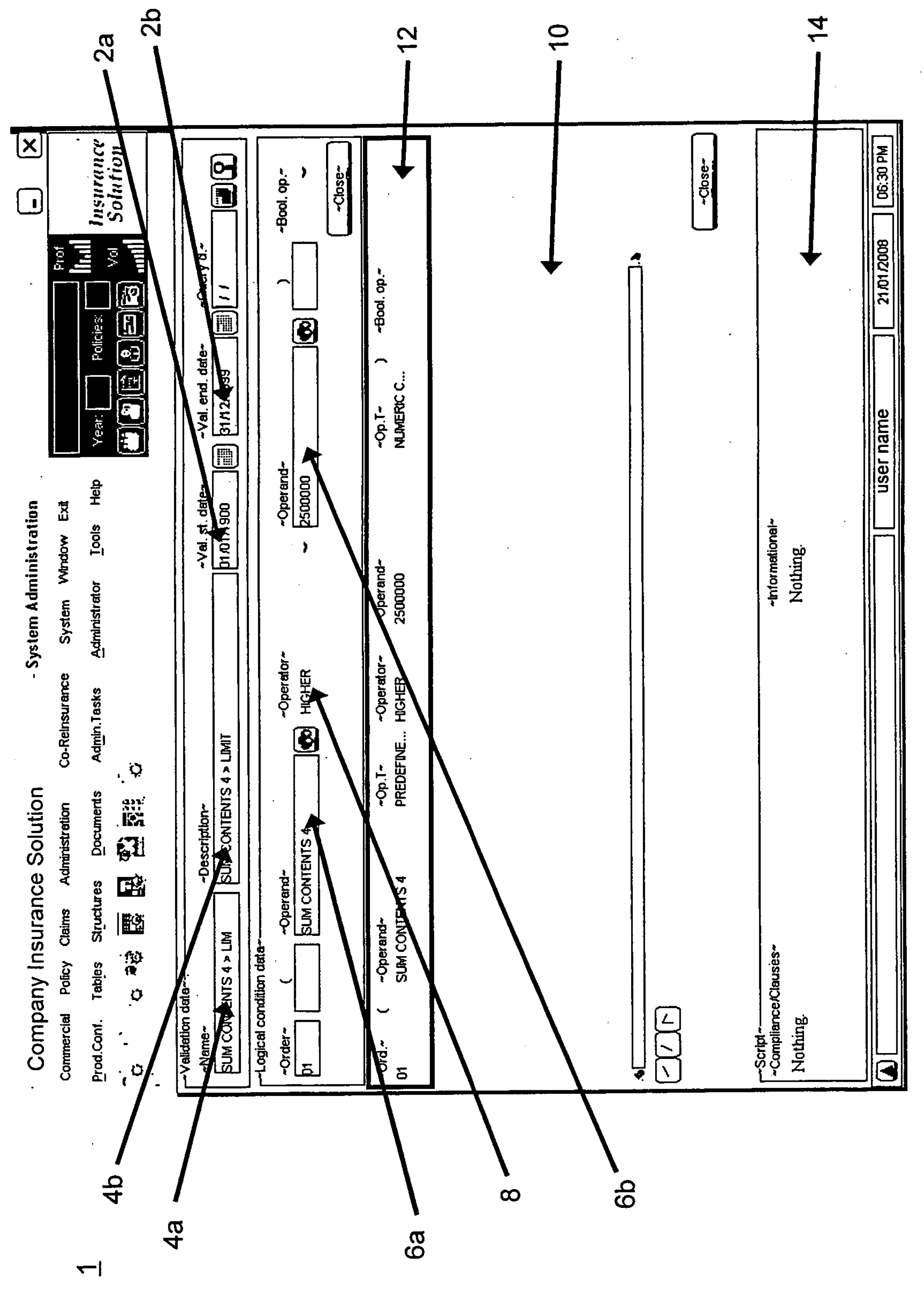
Company Insurance Solution
- System Administration
Commercial Policy Claims Administration Co-Reinsurance System Window Exit
Prod.Conf. Tables Structures Documents Admin.Tasks Administrator Tools Help
Validation data
Name
SUM CONTENTS 4 > LIM
Description
SUM CONTENTS 4 > LIMIT
Val. st. date
01/01/1900
Val. end. date
Logical condition data
Order
01
Operand
SUM CONTENTS 4
Operator
HIGHER
Operand
2500000
Bool. op.
Close
Ord.
01
Operand
SUM CONTENTS 4
Op.T
PREDEFINE...
Operator
HIGHER
Operand
2500000
Op.T
NUMERIC C...
Bool. op.
Close
Script
Compliance/Clauses
Nothing.
Informational
Nothing.
user name
21/01/2008
06:30 PM
1
2a
2b
4a
4b
6a
6b
8
10
12
14

Figure 4

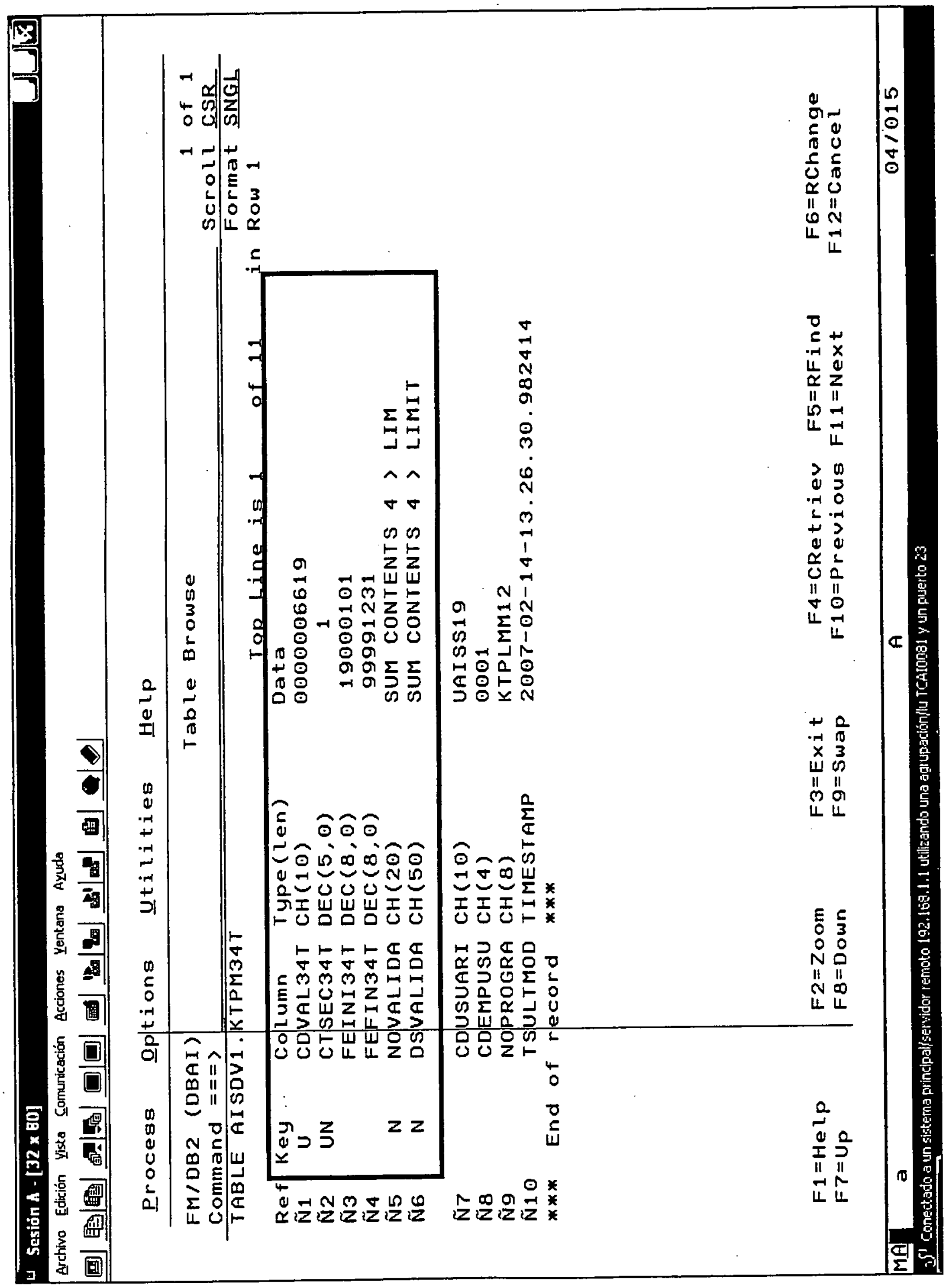
Sesión A - [32 x 80]
Archivo Edición Vista Comunicación Acciones Ventana Ayuda
Process Options Utilities Help
FM/DB2 (DBAI) Table Browse 1 of 1
Command ===> Scroll CSR
TABLE AISDV1.KTPM34T Top Line is 1 of 11 in Row 1 Format SNGL
Ref Key Column Type(len) Data
Ñ1 U CDVAL34T CH(10) 0000006619
Ñ2 UN CTSEC34T DEC(5,0) 1
Ñ3 FEINI34T DEC(8,0) 19000101
Ñ4 FEFIN34T DEC(8,0) 99991231
Ñ5 N NOVALIDA CH(20) SUM CONTENTS 4 > LIM
Ñ6 N DSVALIDA CH(50) SUM CONTENTS 4 > LIMIT
Ñ7 CDUSUARI CH(10) UAISS19
Ñ8 CDEMPUSU CH(4) 0001
Ñ9 NOPROGRA CH(8) KTPLMM12
Ñ10 TSULTMOD TIMESTAMP 2007-02-14-13.26.30.982414
*** End of record ***
F1=Help F2=Zoom F3=Exit F4=CRetriev F5=RFind F6=RChange
F7=Up F8=Down F9=Swap F10=Previous F11=Next F12=Cancel
MA a A 04/015
Conectado a un sistema principal/servidor remoto 192.169.1.1 utilizando una agrupación/lu TCAI0081 y un puerto 23

Figure 5a

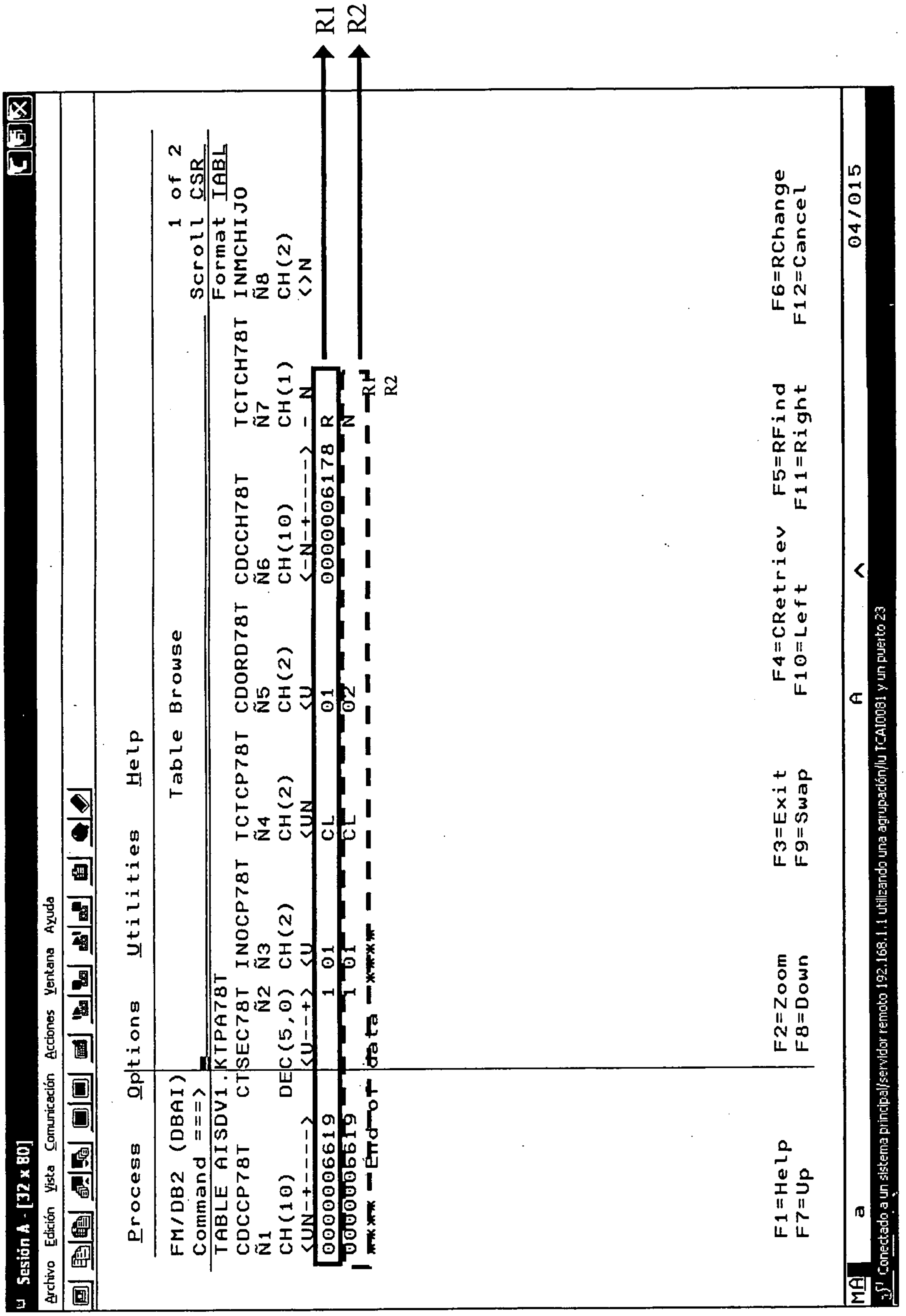

Sesión A - [32 x 80]
Archivo Edición Vista Comunicación Acciones Ventana Ayuda
Process Options Utilities Help
FM/DB2 (DBAI) Table Browse 1 of 2
Command ===> Scroll CSR
TABLE AISDV1.KTPA78T Format TABL
CDCCP78T CTSEC78T INOCP78T TCTCP78T CDORD78T CDCCH78T TCTCH78T INMCHIJO
Ñ1 Ñ2 Ñ3 Ñ4 Ñ5 Ñ6 Ñ7 Ñ8
CH(10) DEC(5,0) CH(2) CH(2) CH(2) CH(10) CH(1) CH(2)
<UN-+-----> <U--+> <U <UN <U <-N-+-----> - N <>N
0000006619 1 01 CL 01 0000006178 R
0000006619 1 01 CL 02 N
**** End of data ****
R1
R2
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23

Figure 5b

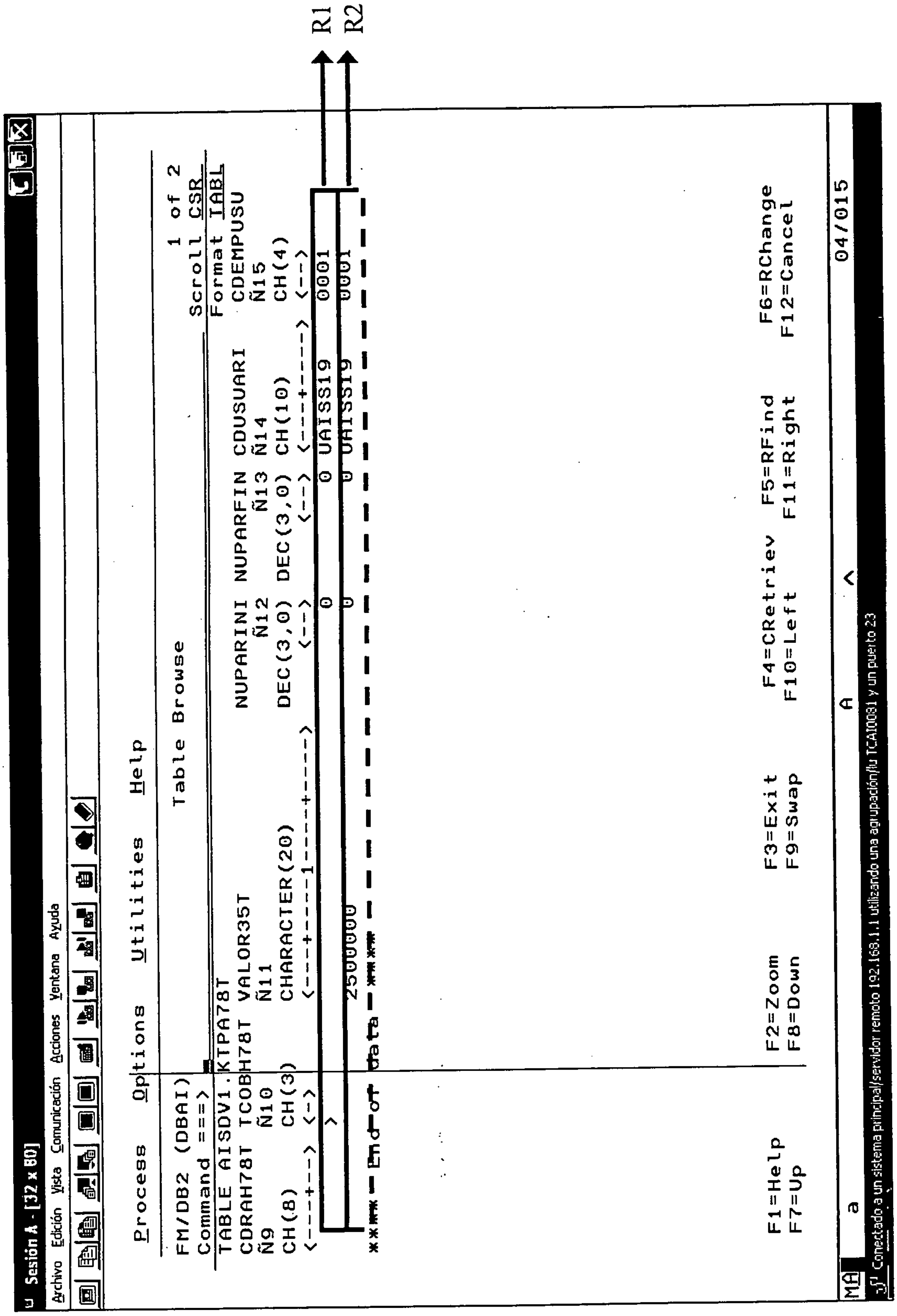
Sesión A - [32 x 80]
Archivo Edición Vista Comunicación Acciones Ventana Ayuda
Process Options Utilities Help
FM/DB2 (DBAI) Table Browse 1 of 2
Command ===> Scroll CSR
TABLE AISDV1.KTPA78T Format TABL
CDRAH78T TCOBH78T VALOR35T NUPARINI NUPARFIN CDUSUARI CDEMPUSU
Ñ9 Ñ10 Ñ11 Ñ12 Ñ13 Ñ14 Ñ15
CH(8) CH(3) CHARACTER(20) DEC(3,0) DEC(3,0) CH(10) CH(4)
> 0 0 UAISS19 0001
2500000 0 0 UAISS19 0001
****** End of data ******
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCA10031 y un puerto 23
R1
R2

Figure 6

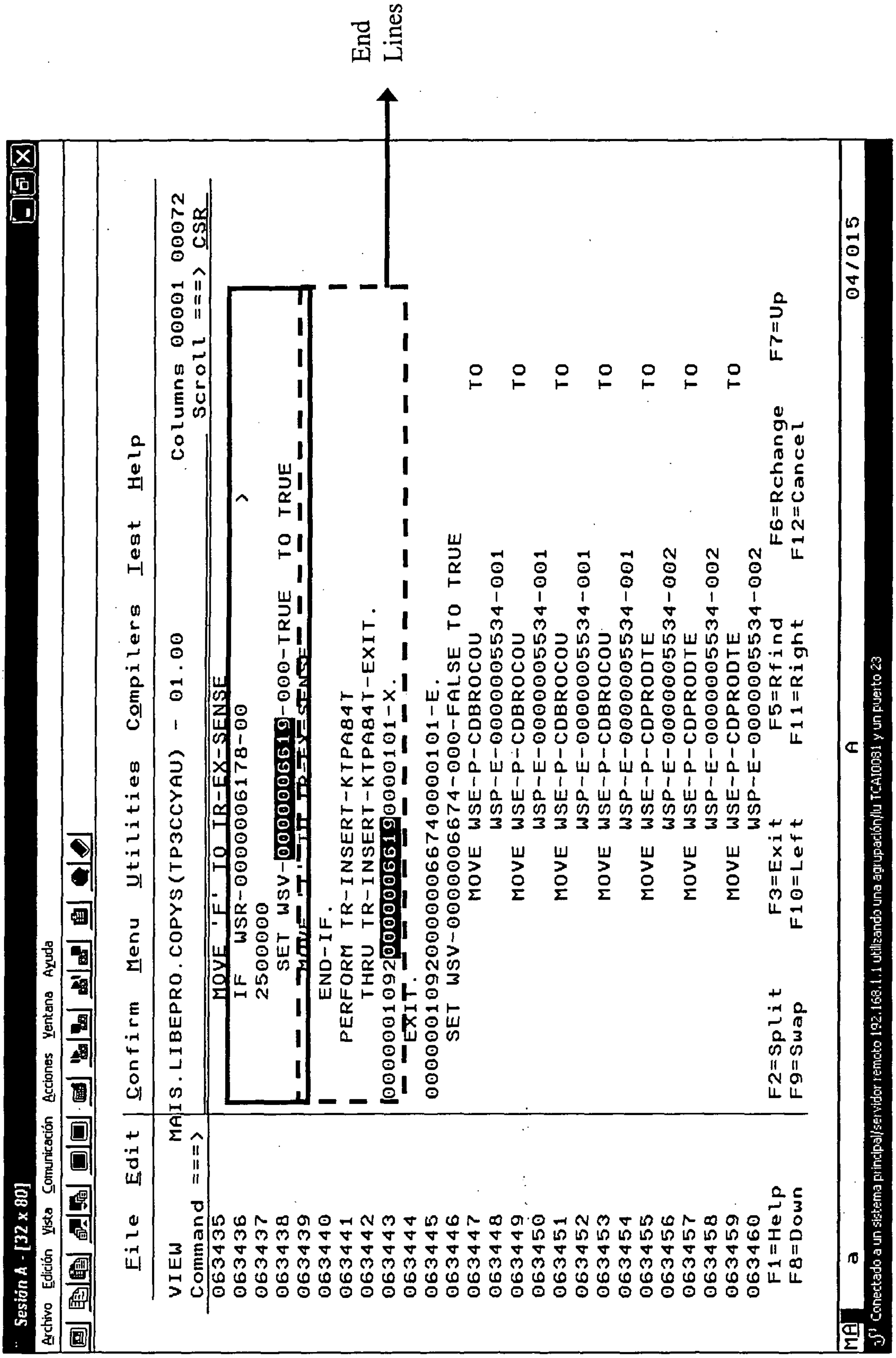
End Lines
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
063435 MOVE 'F' TO TR-EX-SENSE
063436 IF WSR-0000006178-00 >
063437 2500000
063438 SET WSV-0000006619-000-TRUE TO TRUE
063439 MOVE 'T' TO TR-EX-SENSE
063440 END-IF.
063441 PERFORM TR-INSERT-KTPA84T
063442 THRU TR-INSERT-KTPA84T-EXIT.
063443 0000001092000000661900000101-X.
063444 EXIT.
063445 0000001092000000667400000101-E.
063446 SET WSV-0000006674-000-FALSE TO TRUE
063447 MOVE WSE-P-CDBROCOU TO
063448 WSP-E-0000005534-001
063449 MOVE WSE-P-CDBROCOU TO
063450 WSP-E-0000005534-001
063451 MOVE WSE-P-CDBROCOU TO
063452 WSP-E-0000005534-001
063453 MOVE WSE-P-CDBROCOU TO
063454 WSP-E-0000005534-001
063455 MOVE WSE-P-CDPRODTE TO
063456 WSP-E-0000005534-002
063457 MOVE WSE-P-CDPRODTE TO
063458 WSP-E-0000005534-002
063459 MOVE WSE-P-CDPRODTE TO
063460 WSP-E-0000005534-002
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23

Figure 7a

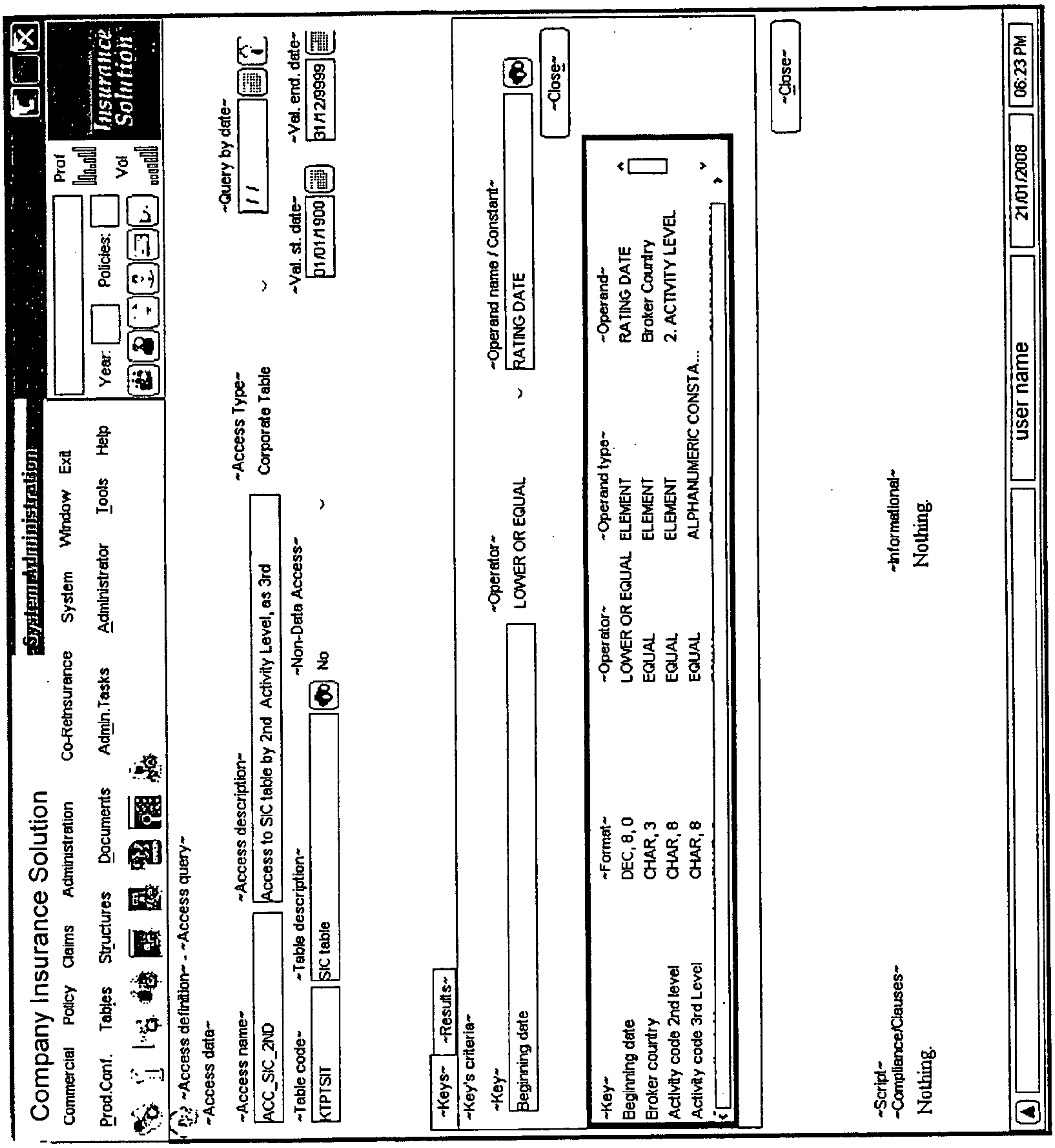
Company Insurance Solution
System Administration
Commercial Policy Claims Administration Co-Reinsurance System Window Exit
Prod.Conf. Tables Structures Documents Admin.Tasks Administrator Tools Help
Year: Policies:
Prof
Vol
Insurance Solution
~Access definition~ - ~Access query~
~Access date~
~Access name~
ACC_SIC_2ND
~Access description~
Access to SIC table by 2nd Activity Level, as 3rd
~Access Type~
Corporate Table
~Query by date~
~Table code~
KTPTSIT
~Table description~
SIC table
~Non-Data Access~
No
~Val. st. date~
01/01/1900
~Val. end. date~
31/12/9999
~Keys~ ~Results~
~Key's criteria~
~Key~
Beginning date
~Operator~
LOWER OR EQUAL
~Operand name / Constant~
RATING DATE
~Close~
~Key~ ~Format~ ~Operator~ ~Operand type~ ~Operand~
Beginning date DEC, 8, 0 LOWER OR EQUAL ELEMENT RATING DATE
Broker country CHAR, 3 EQUAL ELEMENT Broker Country
Activity code 2nd level CHAR, 8 EQUAL ELEMENT 2. ACTIVITY LEVEL
Activity code 3rd Level CHAR, 8 EQUAL ALPHANUMERIC CONSTA...
~Close~
~Script~
~Compliance/Clauses~
Nothing.
~Informational~
Nothing.
user name
21/01/2008
06:23 PM

Figure 7b

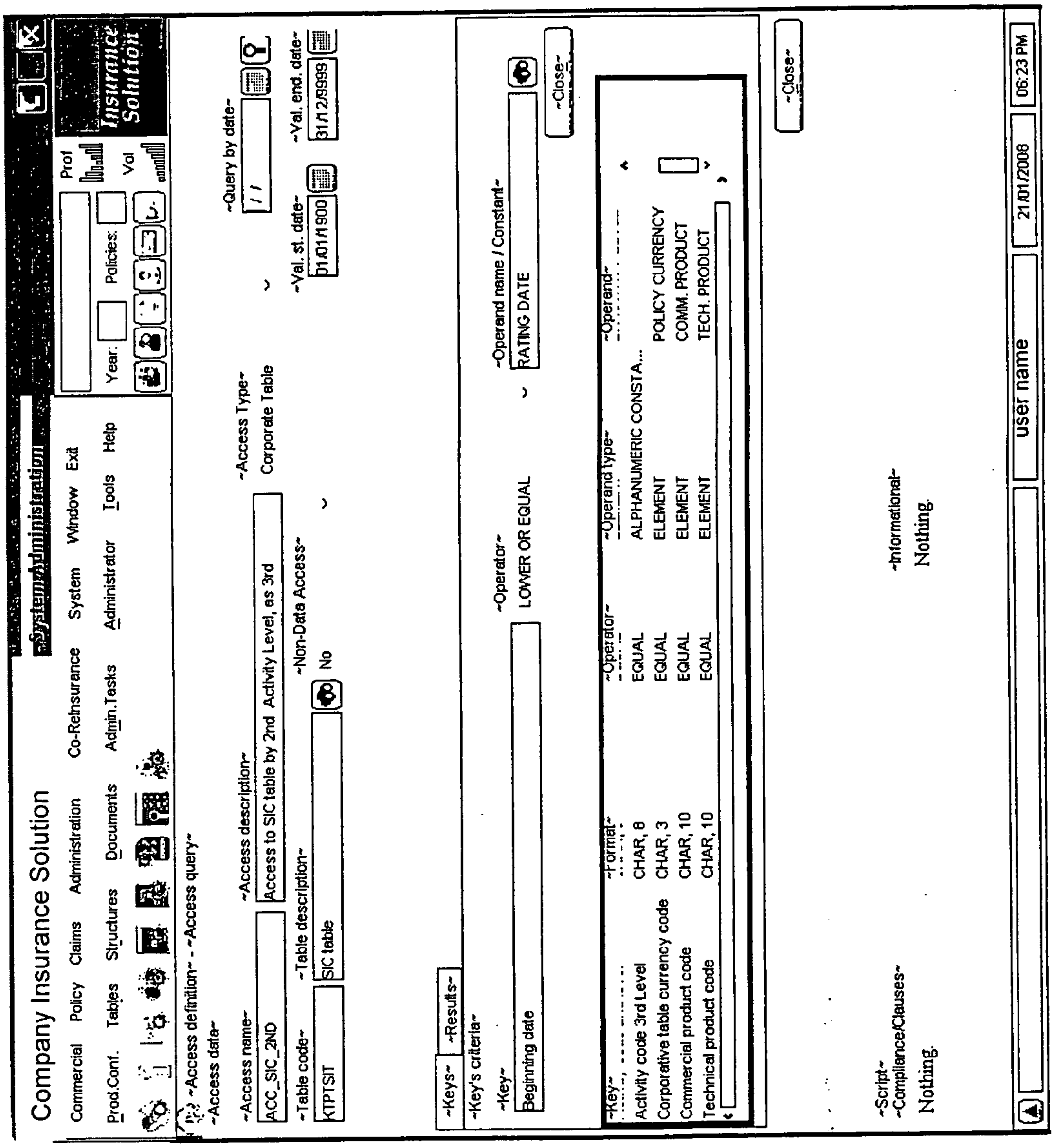
System Administration
Company Insurance Solution
Commercial Policy Claims Administration Co-Reinsurance System Window Exit
Prod.Conf. Tables Structures Documents Admin.Tasks Administrator Tools Help
Year: Policies: Prof Vol
Insurance Solution
~Access definition~ - ~Access query~
~Access data~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Data Access~
No
~Val. st. date~
01/01/1900
~Val. end. date~
31/12/9999
~Keys~ ~Results~
~Key's criteria~
~Key~
Beginning date
~Operator~
LOWER OR EQUAL
~Operand name / Constant~
RATING DATE
~Close~
~Key~ ~Format~ ~Operator~ ~Operand type~ ~Operand~
Activity code 3rd Level CHAR, 8 EQUAL ALPHANUMERIC CONSTA...
Corporative table currency code CHAR, 3 EQUAL ELEMENT POLICY CURRENCY
Commercial product code CHAR, 10 EQUAL ELEMENT COMM. PRODUCT
Technical product code CHAR, 10 EQUAL ELEMENT TECH. PRODUCT
~Close~
~Script~
~Compliance/Clauses~
Nothing
~Informational~
Nothing
user name
21/01/2008
06:23 PM

Figure 8a

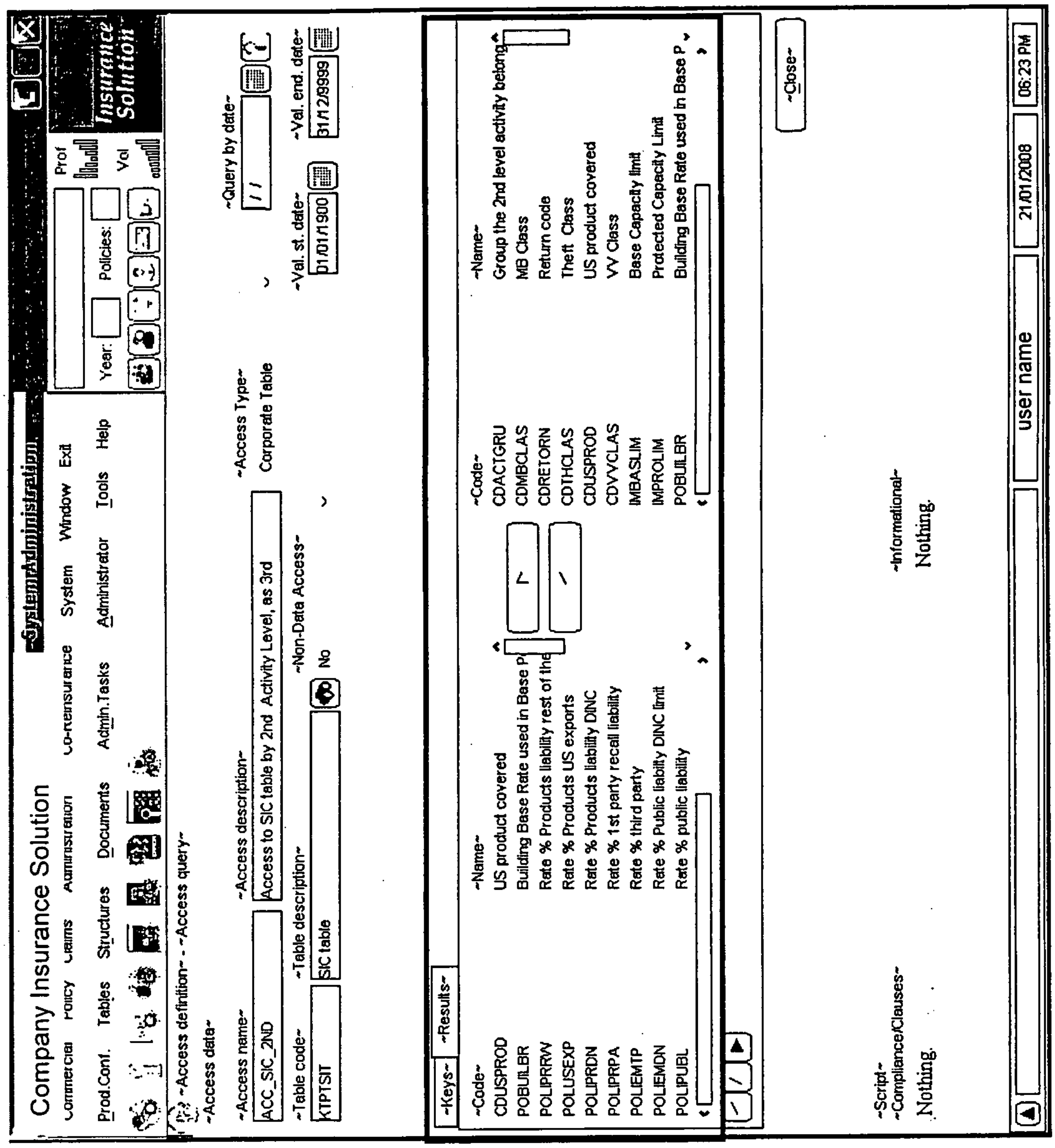
Company Insurance Solution
SystemAdministration
Commercial Policy Claims Administration Co-Reinsurance System Window Exit
Prod.Cont. Tables Structures Documents Admin.Tasks Administrator Tools Help
Year: Policies: Prof Vol
Insurance Solution
~Access definition~ - ~Access query~
~Access data~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Date Access~
No
~Val. st. date~
01/01/1900
~Val. end. date~
31/12/9999
~Keys~ ~Results~
~Code~ ~Name~
CDUSPROD US product covered
POBUILBR Building Base Rate used in Base P
POLIPRRW Rate % Products liability rest of the
POLUSEXP Rate % Products US exports
POLIPRDN Rate % Products liability DINC
POLIPRPA Rate % 1st party recall liability
POLIEMTP Rate % third party
POLIEMDN Rate % Public liability DINC limit
POLIPUBL Rate % public liability
~Code~ ~Name~
CDACTGRU Group the 2nd level activity belong
CDMBCLAS MB Class
CDRETORN Return code
CDTHCLAS Theft Class
CDUSPROD US product covered
CDVVCLAS VV Class
IMBASLIM Base Capacity limit
IMPROLIM Protected Capacity Limit
POBUILBR Building Base Rate used in Base P
~Close~
~Script~
~Compliance/Clauses~
Nothing.
~Informational~
Nothing.
user name
21/01/2008
06:23 PM

Figure 8b

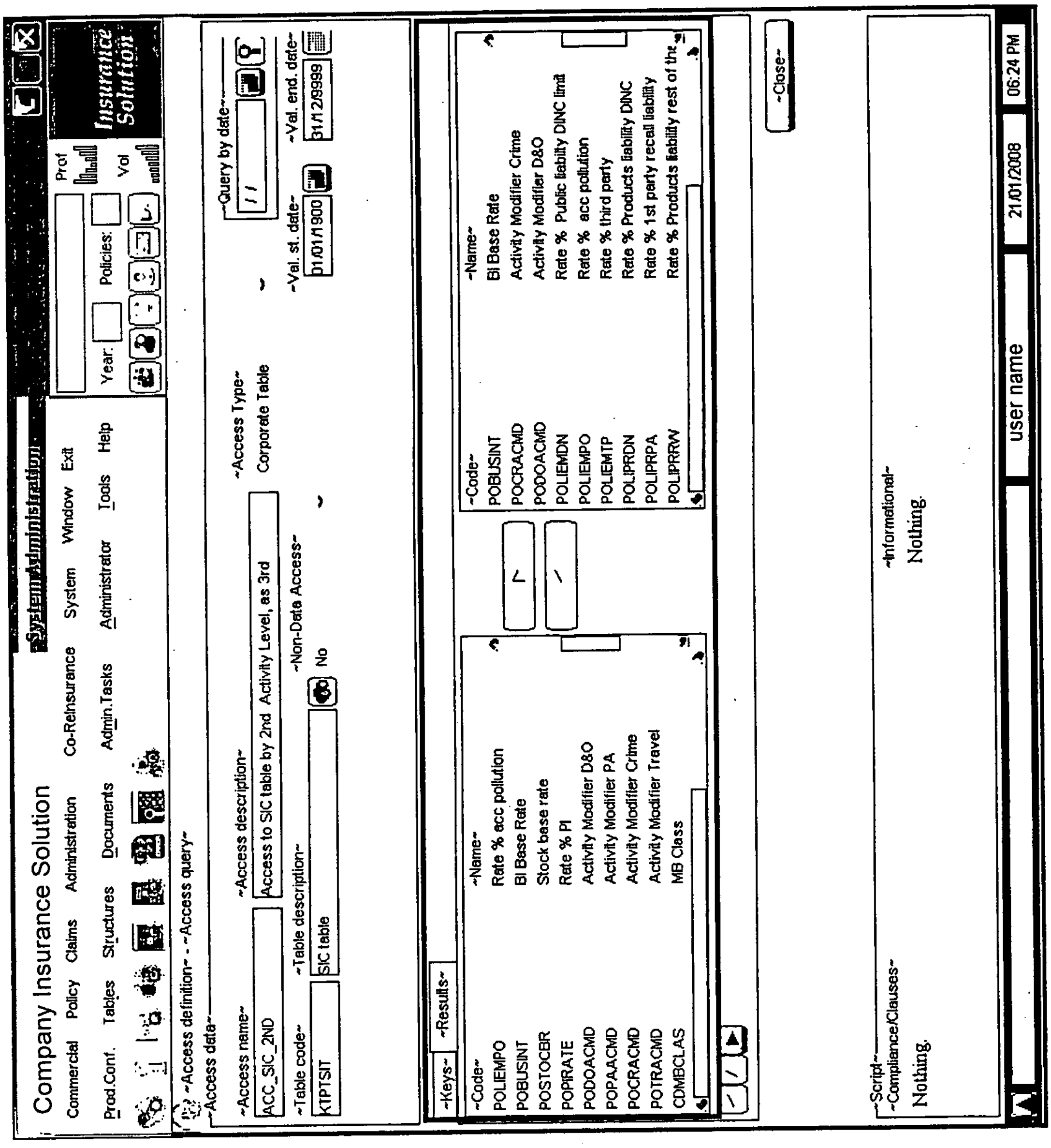
Company Insurance Solution
System Administration
Commercial Policy Claims Administration Co-Reinsurance System Window Exit
Prod.Conf. Tables Structures Documents Admin.Tasks Administrator Tools Help
Year: Policies: Prof Vol
Insurance Solution
~Access definition~ - ~Access query~
~Access data~
~Access name~
ACC_SIC_2ND
~Access description~
Access to SIC table by 2nd Activity Level, as 3rd
~Access Type~
Corporate Table
~Query by date~
/ /
~Table code~
KTPTSIT
~Table description~
SIC table
~Non-Data Access~
No
~Val. st. date~
01/01/1900
~Val. end. date~
31/12/9999
~Keys~ ~Results~
~Code~ ~Name~
POLIEMPO Rate % acc pollution
POBUSINT BI Base Rate
POSTOCBR Stock base rate
POPIRATE Rate % PI
PODOACMD Activity Modifier D&O
POPAACMD Activity Modifier PA
POCRACMD Activity Modifier Crime
POTRACMD Activity Modifier Travel
CDMBCLAS MB Class
~Code~ ~Name~
POBUSINT BI Base Rate
POCRACMD Activity Modifier Crime
PODOACMD Activity Modifier D&O
POLIEMDN Rate % Public liability DINC limit
POLIEMPO Rate % acc pollution
POLIEMTP Rate % third party
POLIPRDN Rate % Products liability DINC
POLIPRPA Rate % 1st party recall liability
POLIPRRW Rate % Products liability rest of the
~Close~
~Script~
~Compliance/Clauses~
Nothing.
~Informational~
Nothing.
user name
21/01/2008
06:24 PM

Figure 9

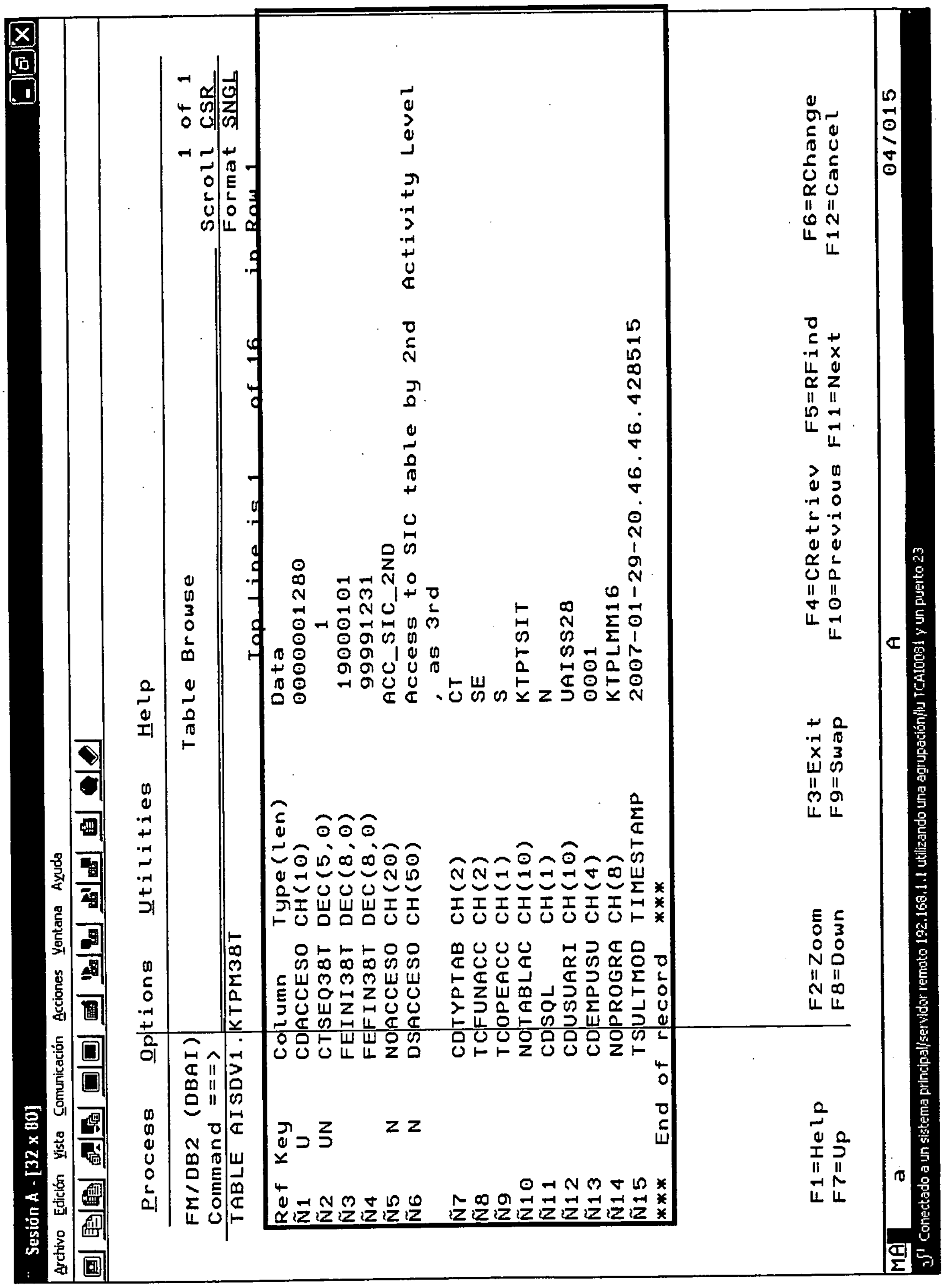
Sesión A - [32 x 80]
Archivo Edición Vista Comunicación Acciones Ventana Ayuda
Process Options Utilities Help
FM/DB2 (DBAI) Table Browse 1 of 1
Command ===> Scroll CSR
TABLE AISDV1.KTPM38T Format SNGL
Top Line is 1 of 16 in Row 1
Ref Key Column Type(len) Data
Ñ1 U CDACCESO CH(10) 0000001280
Ñ2 UN CTSEQ38T DEC(5,0) 1
Ñ3 FEINI38T DEC(8,0) 19000101
Ñ4 FEFIN38T DEC(8,0) 99991231
Ñ5 N NOACCESO CH(20) ACC_SIC_2ND
Ñ6 N DSACCESO CH(50) Access to SIC table by 2nd Activity Level
, as 3rd
Ñ7 CDTYPTAB CH(2) CT
Ñ8 TCFUNACC CH(2) SE
Ñ9 TCOPEACC CH(1) S
Ñ10 NOTABLAC CH(10) KTPTSIT
Ñ11 CDSQL CH(1) N
Ñ12 CDUSUARI CH(10) UAISS28
Ñ13 CDEMPUSU CH(4) 0001
Ñ14 NOPROGRA CH(8) KTPLMM16
Ñ15 TSULTMOD TIMESTAMP 2007-01-29-20.46.46.428515
*** End of record ***
F1=Help F2=Zoom F3=Exit F4=CRetriev F5=RFind F6=RChange
F7=Up F8=Down F9=Swap F10=Previous F11=Next F12=Cancel
MA a A 04/015
Conectado a un sistema principal/servidor remoto 192.168.1.1 utilizando una agrupación/lu TCAI0031 y un puerto 23

Figure 10a

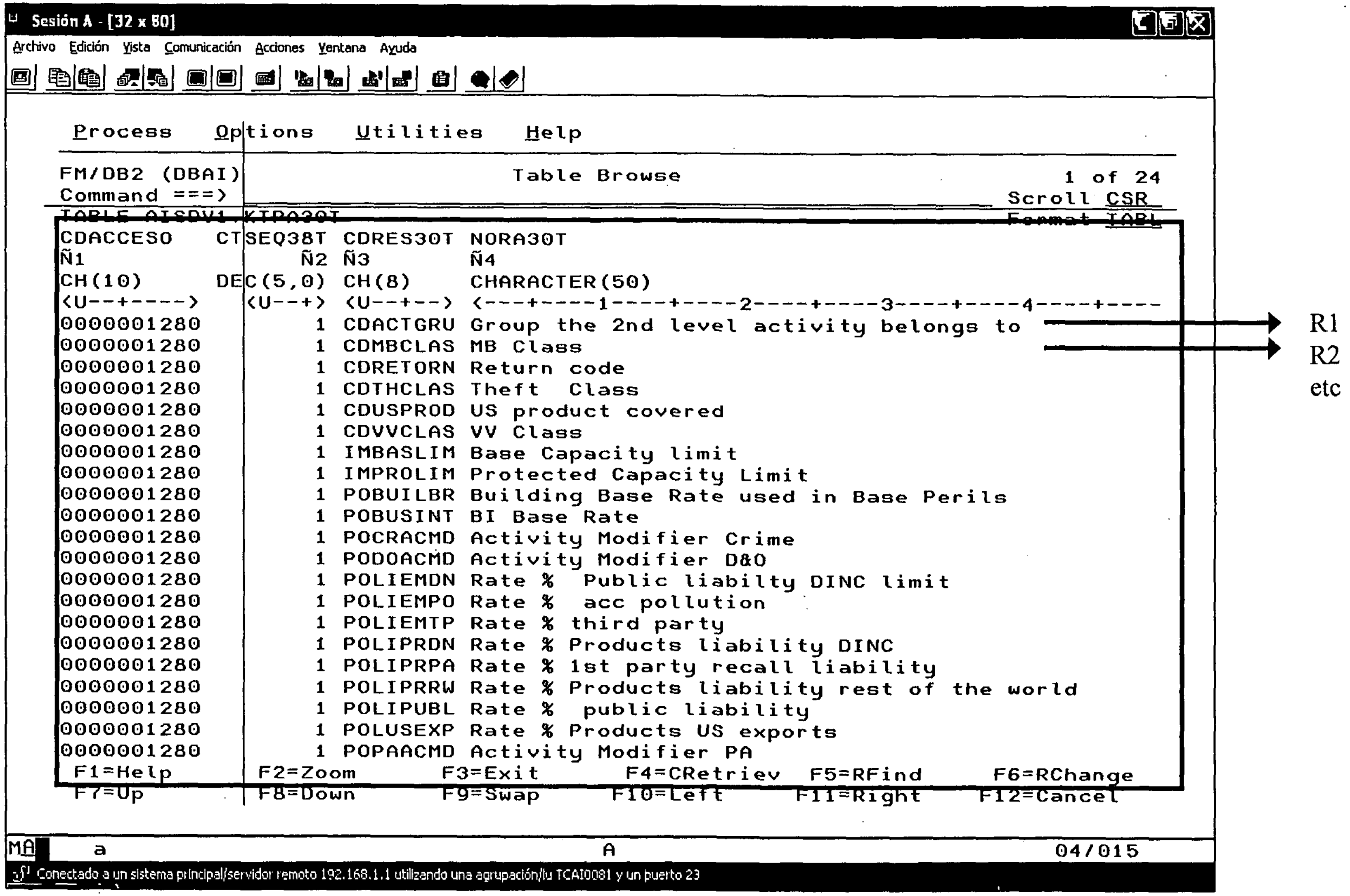
Sesión A - [32 x 80]
Archivo Edición Vista Comunicación Acciones Ventana Ayuda
Process Options Utilities Help
FM/DB2 (DBAI) Table Browse 1 of 24
Command ===> Scroll CSR
TABLE AISDV1.KTPA30T Format TABL
CDACCESO CTSEQ38T CDRES30T NORA30T
Ñ1 Ñ2 Ñ3 Ñ4
CH(10) DEC(5,0) CH(8) CHARACTER(50)
0000001280 1 CDACTGRU Group the 2nd level activity belongs to
0000001280 1 CDMBCLAS MB Class
0000001280 1 CDRETORN Return code
0000001280 1 CDTHCLAS Theft Class
0000001280 1 CDUSPROD US product covered
0000001280 1 CDVVCLAS VV Class
0000001280 1 IMBASLIM Base Capacity limit
0000001280 1 IMPROLIM Protected Capacity Limit
0000001280 1 POBUILBR Building Base Rate used in Base Perils
0000001280 1 POBUSINT BI Base Rate
0000001280 1 POCRACMD Activity Modifier Crime
0000001280 1 PODOACMD Activity Modifier D&O
0000001280 1 POLIEMDN Rate % Public liabilty DINC limit
0000001280 1 POLIEMPO Rate % acc pollution
0000001280 1 POLIEMTP Rate % third party
0000001280 1 POLIPRDN Rate % Products liability DINC
0000001280 1 POLIPRPA Rate % 1st party recall liability
0000001280 1 POLIPRRW Rate % Products liability rest of the world
0000001280 1 POLIPUBL Rate % public liability
0000001280 1 POLUSEXP Rate % Products US exports
0000001280 1 POPAACMD Activity Modifier PA
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23
R1
R2
etc

Figure 10b

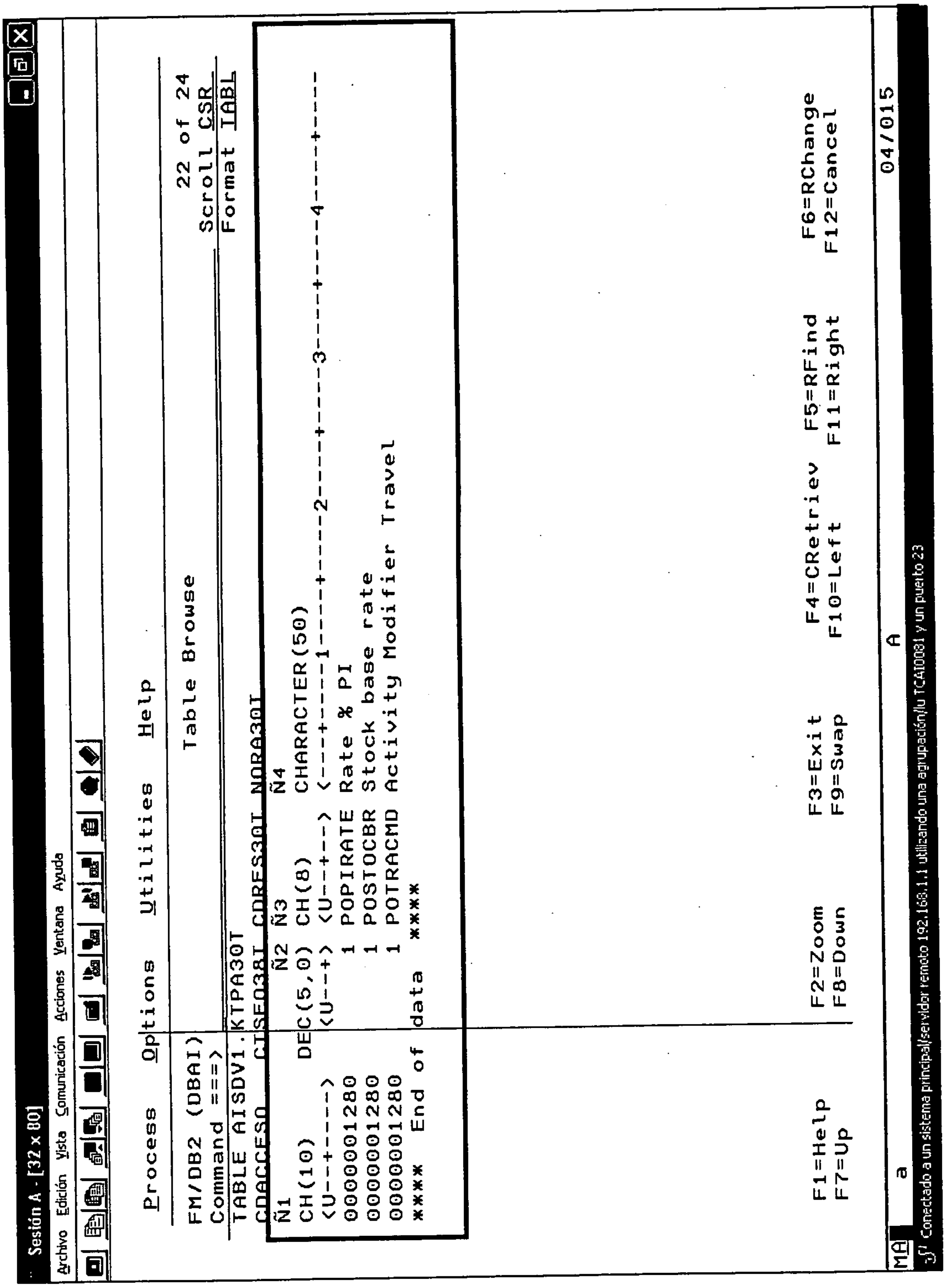
Sesión A - [32 x 80]
Archivo Edición Vista Comunicación Acciones Ventana Ayuda
Process Options Utilities Help
FM/DB2 (DBAI) Table Browse 22 of 24
Command ===> Scroll CSR
TABLE AISDV1.KTPA30T Format TABL
CDACCESO CISEQ38T CDRES30T NORA30T
Ñ1 Ñ2 Ñ3 Ñ4
CH(10) DEC(5,0) CH(8) CHARACTER(50)
<U---+-----> <U--+> <U---+---> <----+----1----+----2----+----3----+----4----+----
0000001280 1 POPIRATE Rate % PI
0000001280 1 POSTOCBR Stock base rate
0000001280 1 POTRACMD Activity Modifier Travel
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 11a

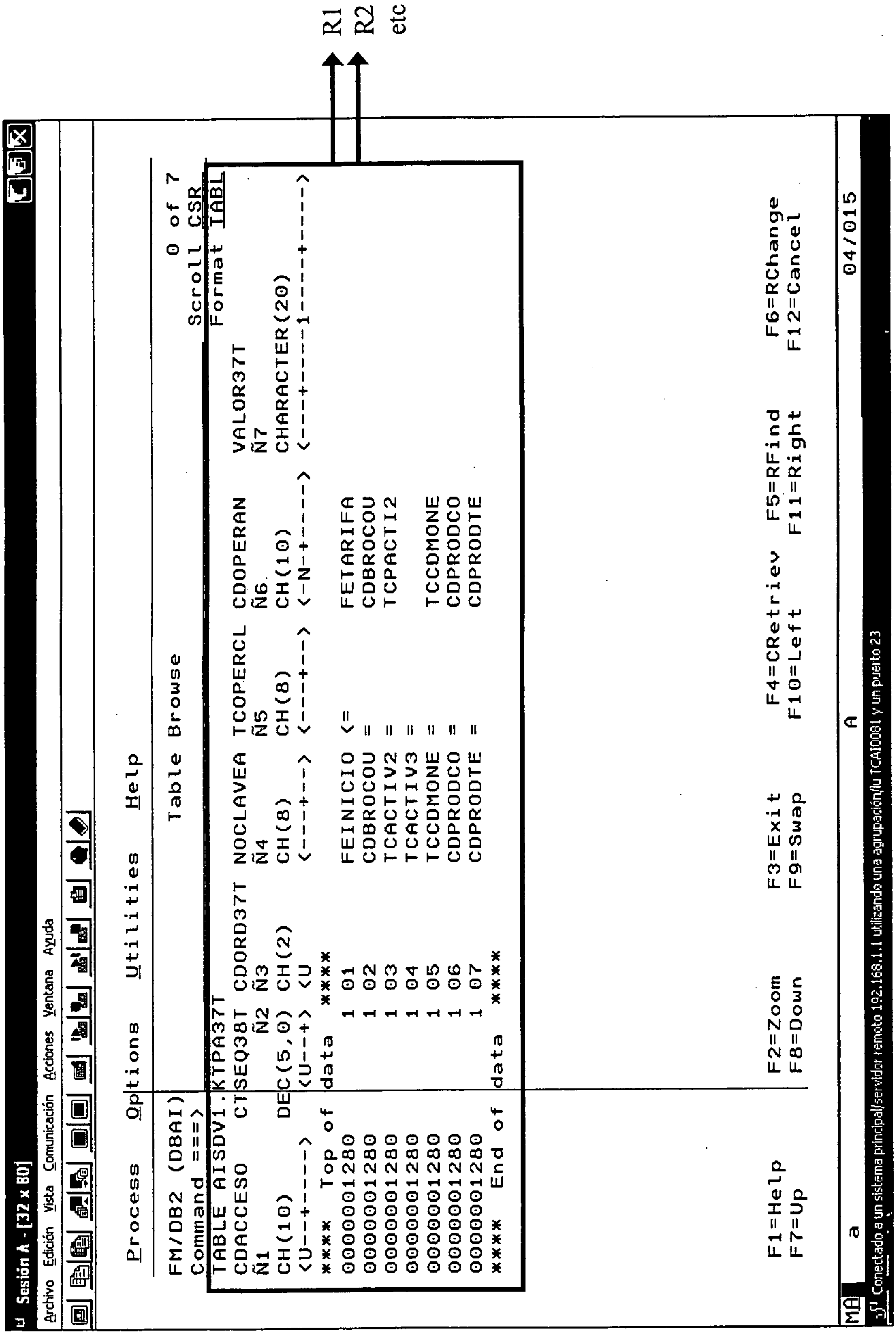
Sesión A - [32 x 80]
Archivo Edición Vista Comunicación Acciones Ventana Ayuda
Process Options Utilities Help
FM/DB2 (DBAI) Table Browse 0 of 7
Command ===> Scroll CSR
TABLE AISDV1.KTPA37T Format TABL
CDACCESO CTSEQ38T CDORD37T NOCLAVEA TCOPERCL CDOPERAN VALOR37T
Ñ1 Ñ2 Ñ3 Ñ4 Ñ5 Ñ6 Ñ7
CH(10) DEC(5,0) CH(2) CH(8) CH(8) CH(10) CHARACTER(20)
**** Top of data ****
0000001280 1 01 FEINICIO <= FETARIFA
0000001280 1 02 CDBROCOU = CDBROCOU
0000001280 1 03 TCACTIV2 = TCPACTI2
0000001280 1 04 TCACTIV3 =
0000001280 1 05 TCCDMONE = TCCDMONE
0000001280 1 06 CDPRODCO = CDPRODCO
0000001280 1 07 CDPRODTE = CDPRODTE
**** End of data ****
F1=Help F2=Zoom F3=Exit F4=CRetriev F5=RFind F6=RChange
F7=Up F8=Down F9=Swap F10=Left F11=Right F12=Cancel
MA a a 04/015
Conectado a un sistema principal/servidor remoto 192.168.1.1 utilizando una agrupación/lu TCAI0081 y un puerto 23
R1
R2
etc

Figure 11b

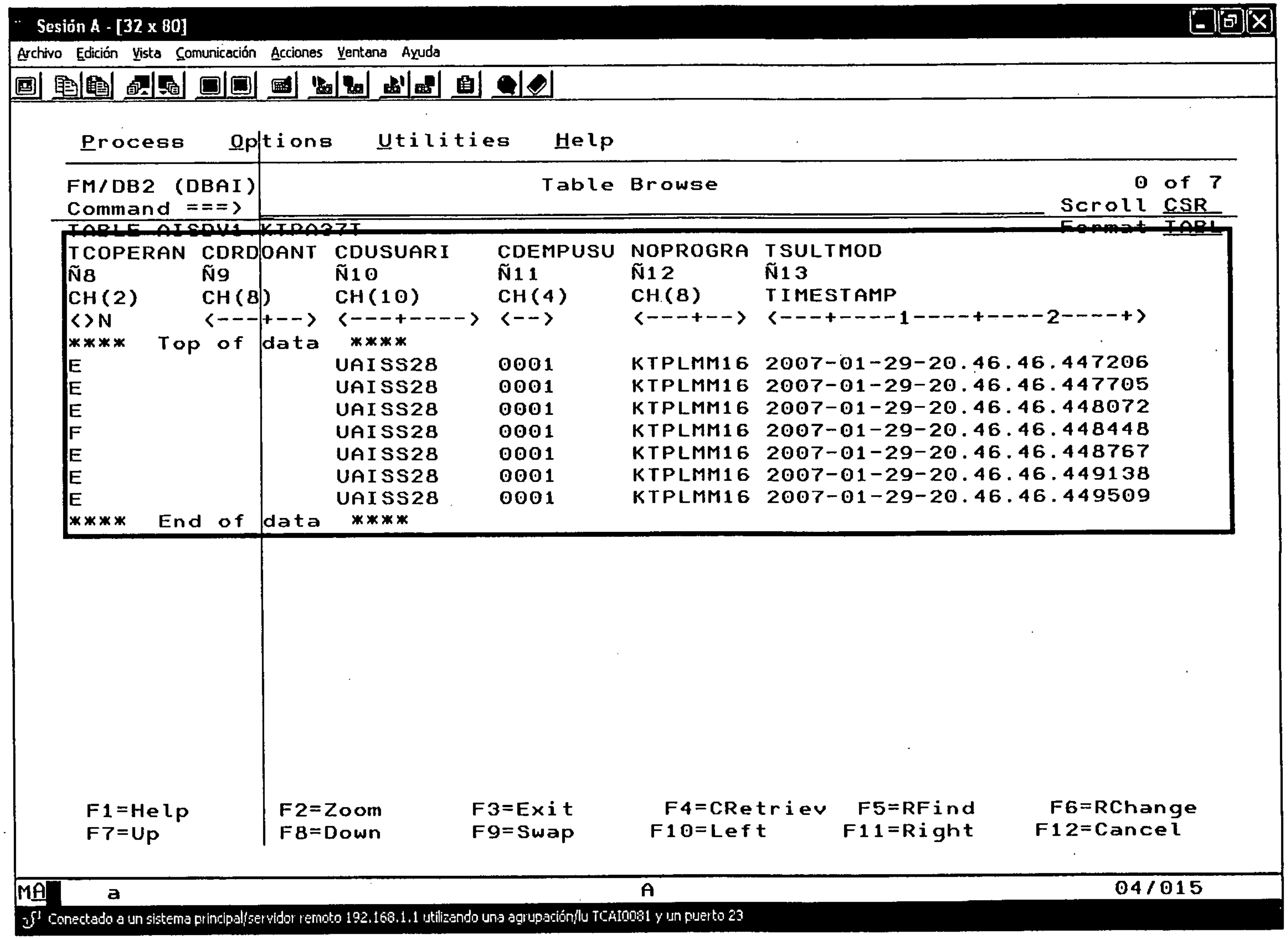
Sesión A - [32 x 80]
Archivo Edición Vista Comunicación Acciones Ventana Ayuda
Process Options Utilities Help
FM/DB2 (DBAI) Table Browse 0 of 7
Command ===> Scroll CSR
TCOPERAN CDRDOANT CDUSUARI CDEMPUSU NOPROGRA TSULTMOD
Ñ8 Ñ9 Ñ10 Ñ11 Ñ12 Ñ13
CH(2) CH(8) CH(10) CH(4) CH(8) TIMESTAMP
<>N <---+--> <---+-----> <--> <---+--> <---+----1----+----2----+>
**** Top of data ****
E UAISS28 0001 KTPLMM16 2007-01-29-20.46.46.447206
E UAISS28 0001 KTPLMM16 2007-01-29-20.46.46.447705
E UAISS28 0001 KTPLMM16 2007-01-29-20.46.46.448072
F UAISS28 0001 KTPLMM16 2007-01-29-20.46.46.448448
E UAISS28 0001 KTPLMM16 2007-01-29-20.46.46.448767
E UAISS28 0001 KTPLMM16 2007-01-29-20.46.46.449138
E UAISS28 0001 KTPLMM16 2007-01-29-20.46.46.449509
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 12a

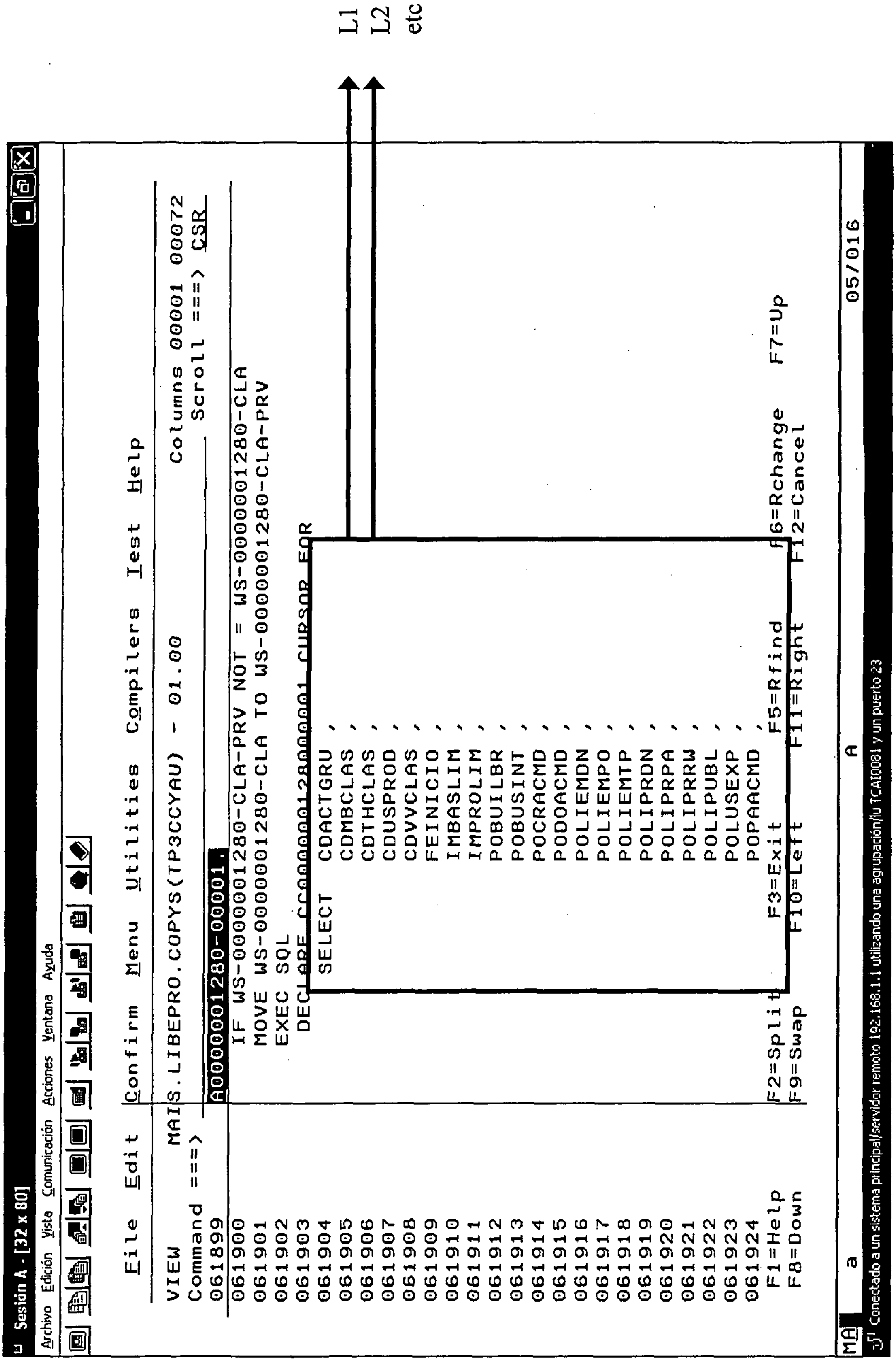
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
061899 A0000001280-00001.
061900 IF WS-0000001280-CLA-PRV NOT = WS-0000001280-CLA
061901 MOVE WS-0000001280-CLA TO WS-0000001280-CLA-PRV
061902 EXEC SQL
061903 DECLARE
061904 SELECT CDACTGRU ,
061905 CDMBCLAS ,
061906 CDTHCLAS ,
061907 CDUSPROD ,
061908 CDVVCLAS ,
061909 FEINICIO ,
061910 IMBASLIM ,
061911 IMPROLIM ,
061912 POBUILBR ,
061913 POBUSINT ,
061914 POCRACMD ,
061915 PODOACMD ,
061916 POLIEMDN ,
061917 POLIEMPO ,
061918 POLIEMTP ,
061919 POLIPRDN ,
061920 POLIPRPA ,
061921 POLIPRRW ,
061922 POLIPUBL ,
061923 POLUSEXP ,
061924 POPAACMD ,
F1=Help F2=Split F3=Exit F5=Rfind F6=Rchange F7=Up
F8=Down F9=Swap F10=Left F11=Right F12=Cancel
MA a A 05/016
Conectado a un sistema principal/servidor remoto 192.168.1.1 utilizando una agrupación/lu TCA10081 y un puerto 23
L1
L2
etc

Figure 12b

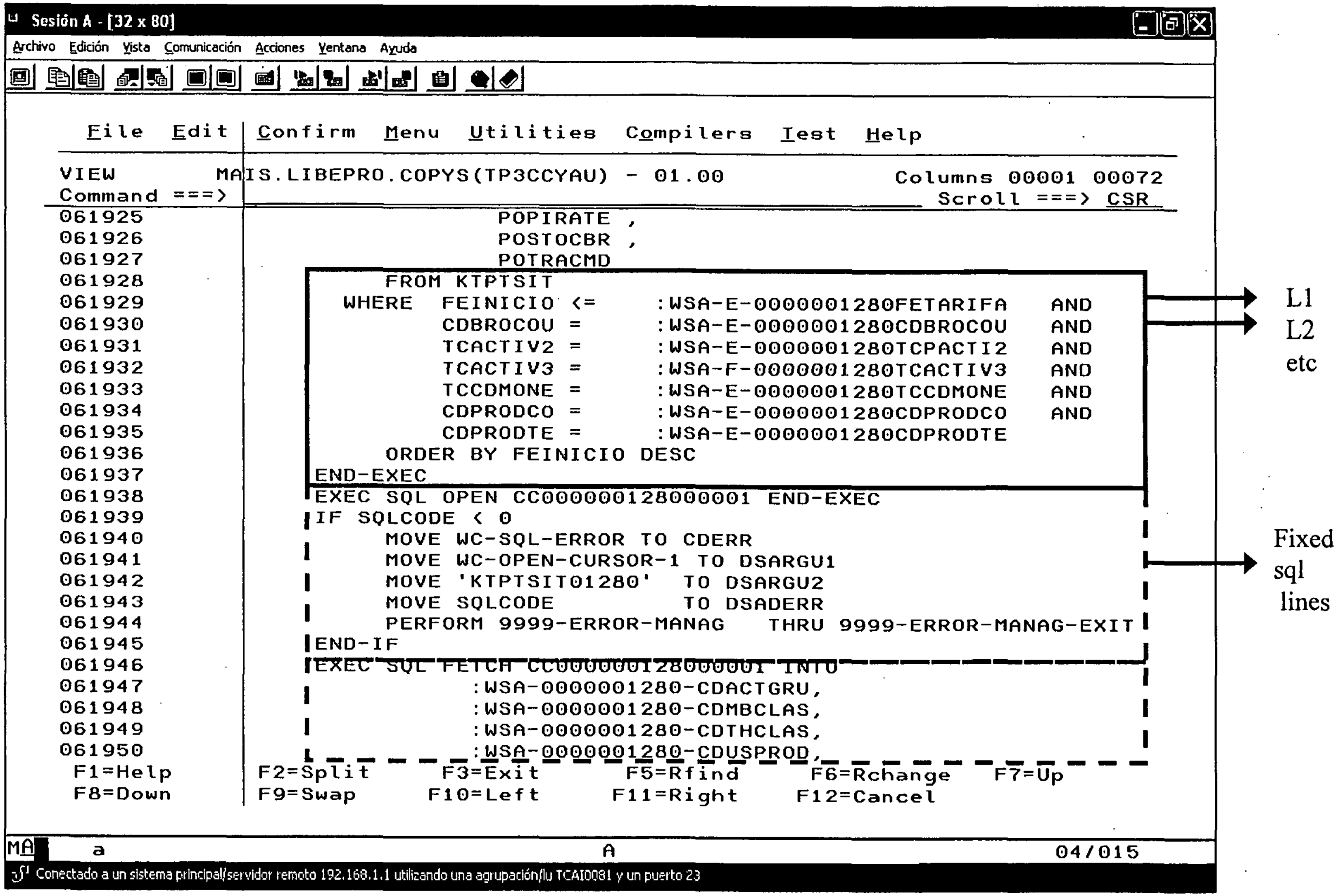
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
061925 POPIRATE ,
061926 POSTOCBR ,
061927 POTRACMD
061928 FROM KTPTSIT
061929 WHERE FEINICIO <= :WSA-E-0000001280FETARIFA AND
061930 CDBROCOU = :WSA-E-0000001280CDBROCOU AND
061931 TCACTIV2 = :WSA-E-0000001280TCPACTI2 AND
061932 TCACTIV3 = :WSA-F-0000001280TCACTIV3 AND
061933 TCCDMONE = :WSA-E-0000001280TCCDMONE AND
061934 CDPRODCO = :WSA-E-0000001280CDPRODCO AND
061935 CDPRODTE = :WSA-E-0000001280CDPRODTE
061936 ORDER BY FEINICIO DESC
061937 END-EXEC
061938 EXEC SQL OPEN CC000000128000001 END-EXEC
061939 IF SQLCODE < 0
061940 MOVE WC-SQL-ERROR TO CDERR
061941 MOVE WC-OPEN-CURSOR-1 TO DSARGU1
061942 MOVE 'KTPTSIT01280' TO DSARGU2
061943 MOVE SQLCODE TO DSADERR
061944 PERFORM 9999-ERROR-MANAG THRU 9999-ERROR-MANAG-EXIT
061945 END-IF
061946 EXEC SQL FETCH CC000000128000001 INTO
061947 :WSA-0000001280-CDACTGRU,
061948 :WSA-0000001280-CDMBCLAS,
061949 :WSA-0000001280-CDTHCLAS,
061950 :WSA-0000001280-CDUSPROD,
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23
L1
L2
etc
Fixed
sql
lines

Figure 12c

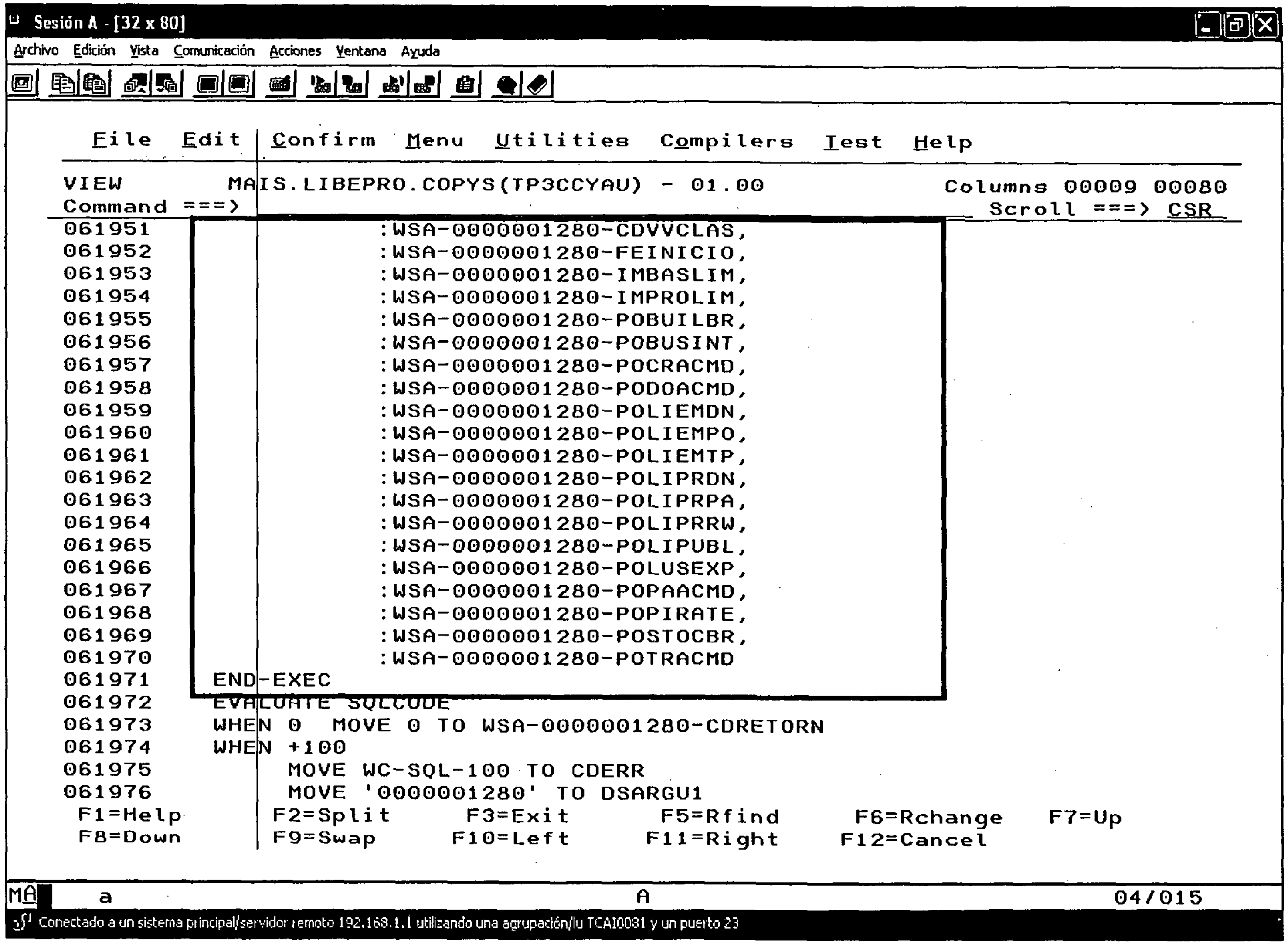
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00009 00080
Command ===> Scroll ===> CSR
061951 :WSA-0000001280-CDVVCLAS,
061952 :WSA-0000001280-FEINICIO,
061953 :WSA-0000001280-IMBASLIM,
061954 :WSA-0000001280-IMPROLIM,
061955 :WSA-0000001280-POBUILBR,
061956 :WSA-0000001280-POBUSINT,
061957 :WSA-0000001280-POCRACMD,
061958 :WSA-0000001280-PODOACMD,
061959 :WSA-0000001280-POLIEMDN,
061960 :WSA-0000001280-POLIEMPO,
061961 :WSA-0000001280-POLIEMTP,
061962 :WSA-0000001280-POLIPRDN,
061963 :WSA-0000001280-POLIPRPA,
061964 :WSA-0000001280-POLIPRRW,
061965 :WSA-0000001280-POLIPUBL,
061966 :WSA-0000001280-POLUSEXP,
061967 :WSA-0000001280-POPAACMD,
061968 :WSA-0000001280-POPIRATE,
061969 :WSA-0000001280-POSTOCBR,
061970 :WSA-0000001280-POTRACMD
061971 END-EXEC
061972 EVALUATE SQLCODE
061973 WHEN 0 MOVE 0 TO WSA-0000001280-CDRETORN
061974 WHEN +100
061975 MOVE WC-SQL-100 TO CDERR
061976 MOVE '0000001280' TO DSARGU1
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCAI0031 y un puerto 23

Figure 12d

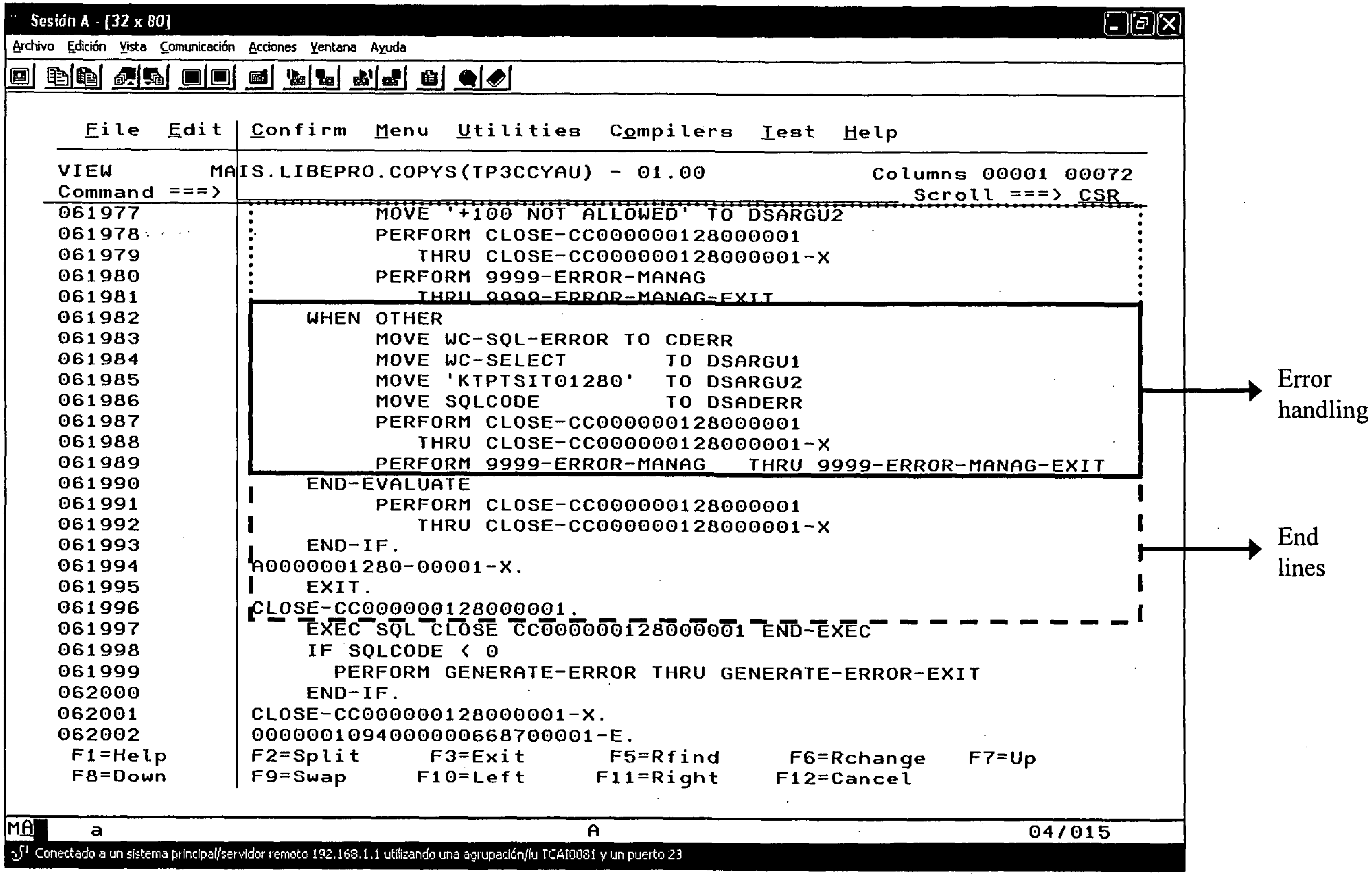
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
061977 MOVE '+100 NOT ALLOWED' TO DSARGU2
061978 PERFORM CLOSE-CC000000128000001
061979 THRU CLOSE-CC000000128000001-X
061980 PERFORM 9999-ERROR-MANAG
061981 THRU 9999-ERROR-MANAG-EXIT
061982 WHEN OTHER
061983 MOVE WC-SQL-ERROR TO CDERR
061984 MOVE WC-SELECT TO DSARGU1
061985 MOVE 'KTPTSIT01280' TO DSARGU2
061986 MOVE SQLCODE TO DSADERR
061987 PERFORM CLOSE-CC000000128000001
061988 THRU CLOSE-CC000000128000001-X
061989 PERFORM 9999-ERROR-MANAG THRU 9999-ERROR-MANAG-EXIT
061990 END-EVALUATE
061991 PERFORM CLOSE-CC000000128000001
061992 THRU CLOSE-CC000000128000001-X
061993 END-IF.
061994 A0000001280-00001-X.
061995 EXIT.
061996 CLOSE-CC000000128000001.
061997 EXEC SQL CLOSE CC000000128000001 END-EXEC
061998 IF SQLCODE < 0
061999 PERFORM GENERATE-ERROR THRU GENERATE-ERROR-EXIT
062000 END-IF.
062001 CLOSE-CC000000128000001-X.
062002 000000109400000006687000001-E.
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23
Error handling
End lines

Figure 13

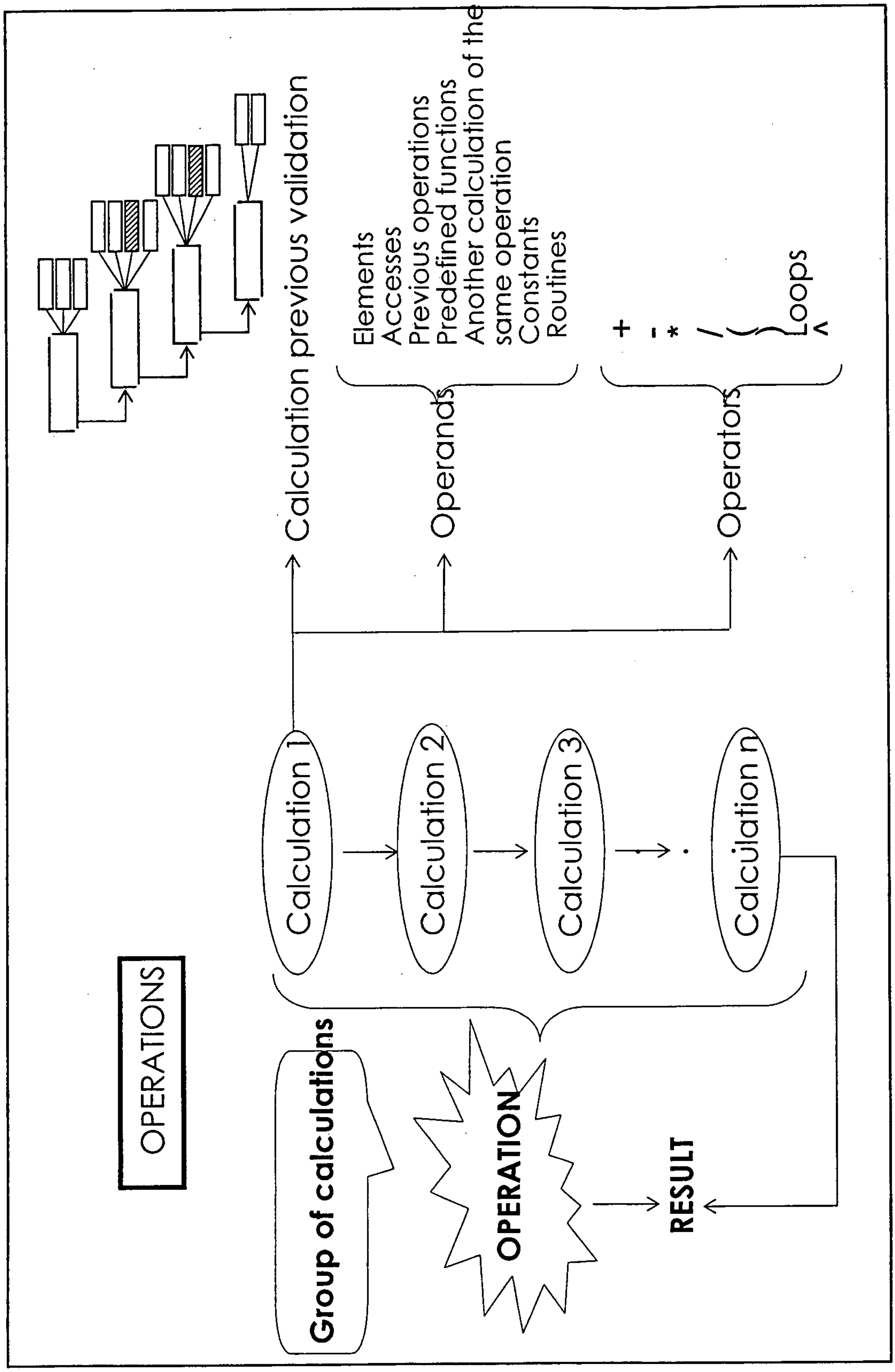
OPERATIONS
Group of calculations
OPERATION
RESULT
Calculation 1
Calculation 2
Calculation 3
Calculation n
Calculation previous validation
Operands
Elements
Accesses
Previous operations
Predefined functions
Another calculation of the same operation
Constants
Routines
Operators
+
-
*
/
( )
Loops
<

Figure 14a

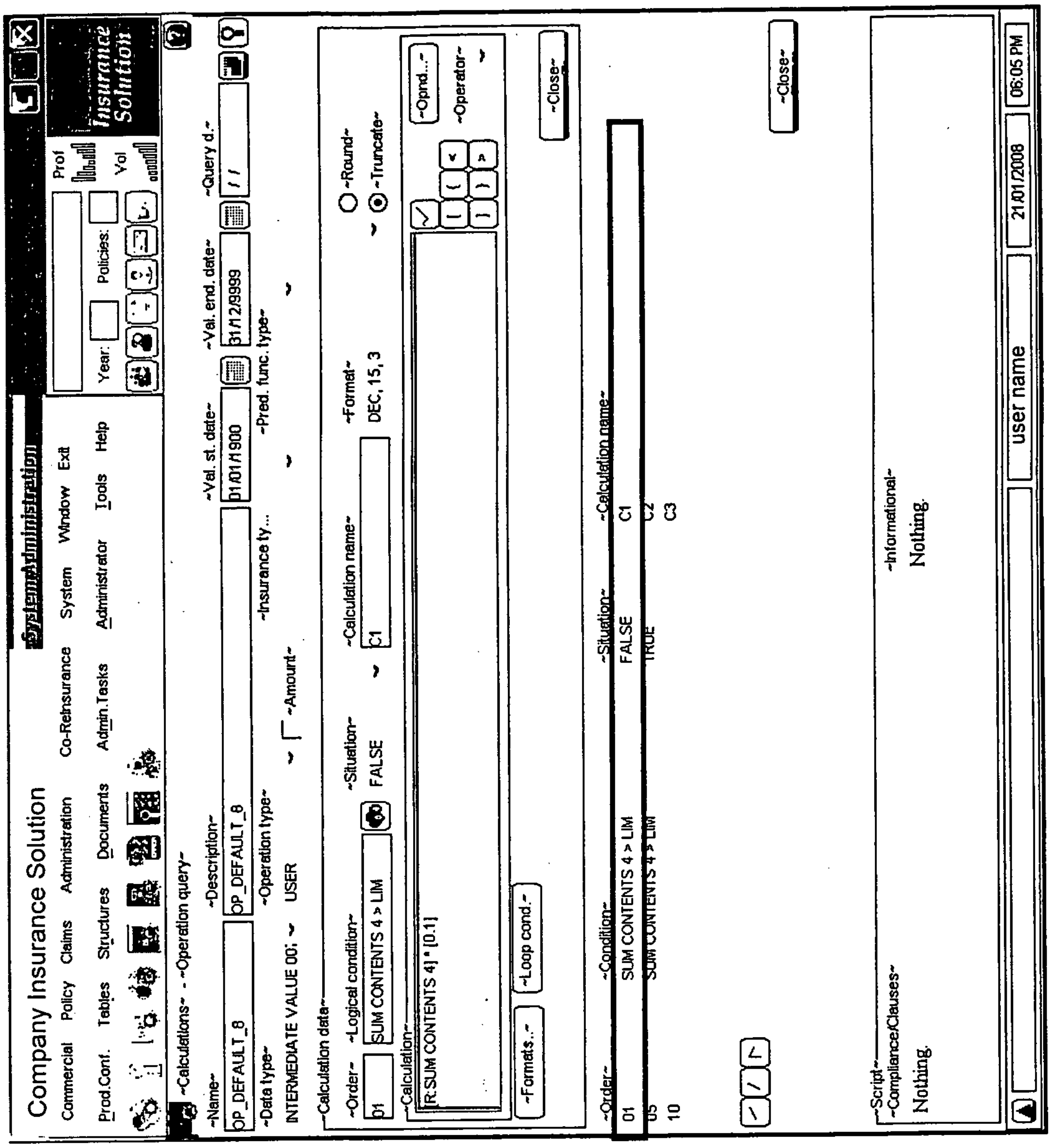
Company Insurance Solution
Commercial Policy Claims Administration Co-Reinsurance System Window Exit
Prod.Cont. Tables Structures Documents Admin.Tasks Administrator Tools Help
System Administration
Year: Policies:
Insurance Solution
~Calculations~ - ~Operation query~
~Name~ ~Description~ ~Val. st. date~ ~Val. end. date~ ~Query d.~
OP_DEFAULT_8 OP_DEFAULT_8 01/01/1900 31/12/9999
~Data type~ ~Operation type~ ~Insurance ty...~ ~Pred. func. type~
INTERMEDIATE VALUE 00 USER ~Amount~
~Calculation data~
~Order~ ~Logical condition~ ~Situation~ ~Calculation name~ ~Format~
01 SUM CONTENTS 4 > LIM FALSE C1 DEC, 15, 3
~Round~ ~Truncate~
~Calculation~
R:SUM CONTENTS 4]* [0.1]
~Opnd...~ ~Operator~
~Formats..~ ~Loop cond.~ ~Close~
~Order~ ~Condition~ ~Situation~ ~Calculation name~
01 SUM CONTENTS 4 > LIM FALSE C1
05 SUM CONTENTS 4 > LIM TRUE C2
10 C3
~Close~
~Script~
~Compliance/Clauses~ ~Informational~
Nothing. Nothing.
user name 21/01/2008 06:05 PM

Figure 14b

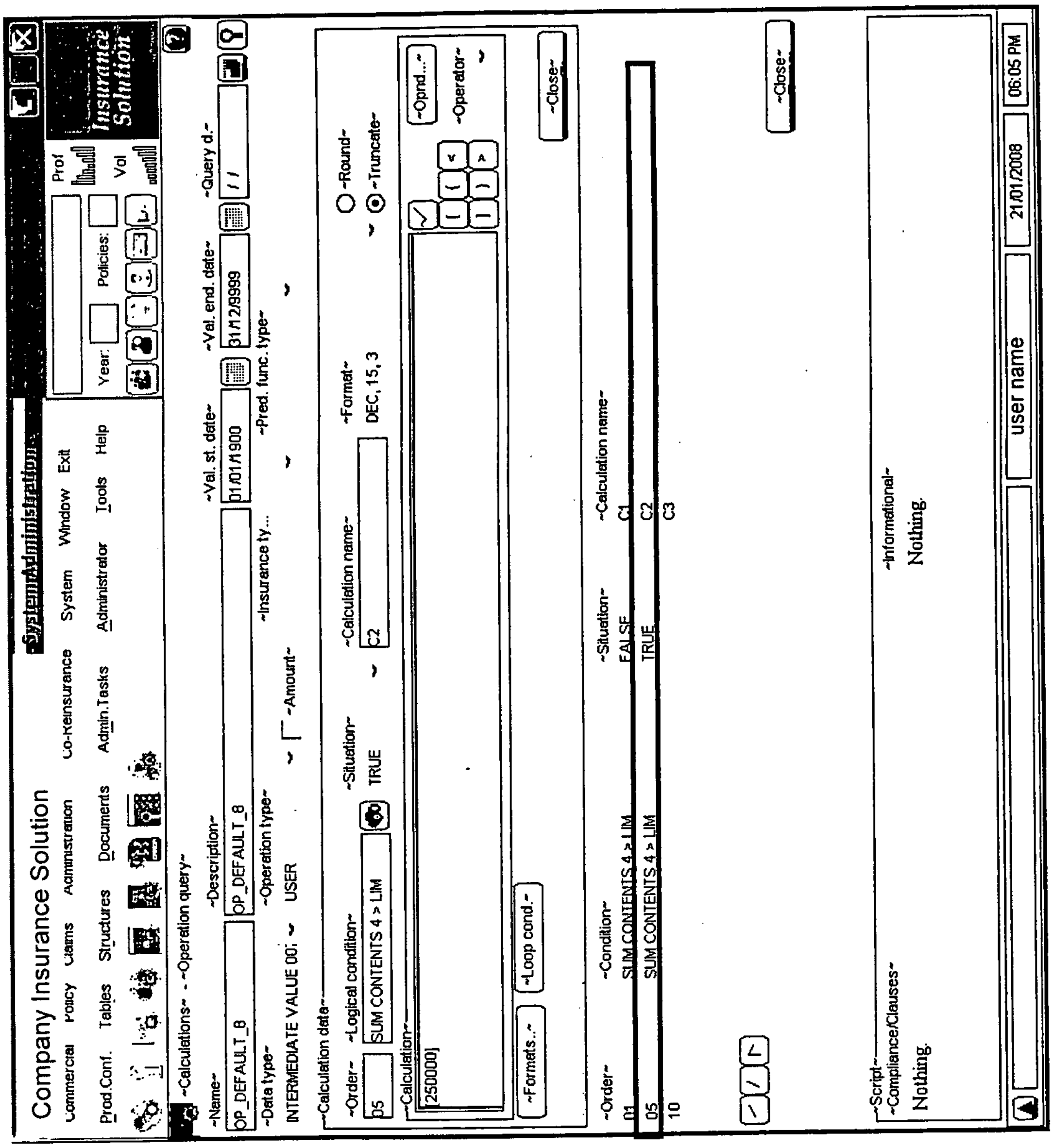
Company Insurance Solution
System Administration
Commercial Policy Claims Administration Co-Reinsurance System Window Exit
Prod.Conf. Tables Structures Documents Admin.Tasks Administrator Tools Help
Year: Policies: Prof Vol
Insurance Solution
~Calculations~ - ~Operation query~
~Name~
OP_DEFAULT_8
~Description~
OP_DEFAULT_8
~Val. st. date~
01/01/1900
~Val. end. date~
31/12/9999
~Query d.~
/ /
~Data type~
INTERMEDIATE VALUE DO
~Operation type~
USER
~Amount~
~Insurance ty...
~Pred. func. type~
~Calculation date~
~Order~
05
~Logical condition~
SUM CONTENTS 4 > LIM
~Situation~
TRUE
~Calculation name~
C2
~Format~
DEC, 15, 3
~Round~
~Truncate~
~Calculation~
[250000]
~Opnd...~
~Operator~
~Formats..~
~Loop cond.~
~Close~
~Order~
~Condition~
~Situation~
~Calculation name~
01
SUM CONTENTS 4 > LIM
FALSE
C1
05
SUM CONTENTS 4 > LIM
TRUE
C2
10
C3
~Close~
~Script~
~Compliance/Clauses~
Nothing.
~Informational~
Nothing.
user name
21/01/2008
06:05 PM

Figure 14c

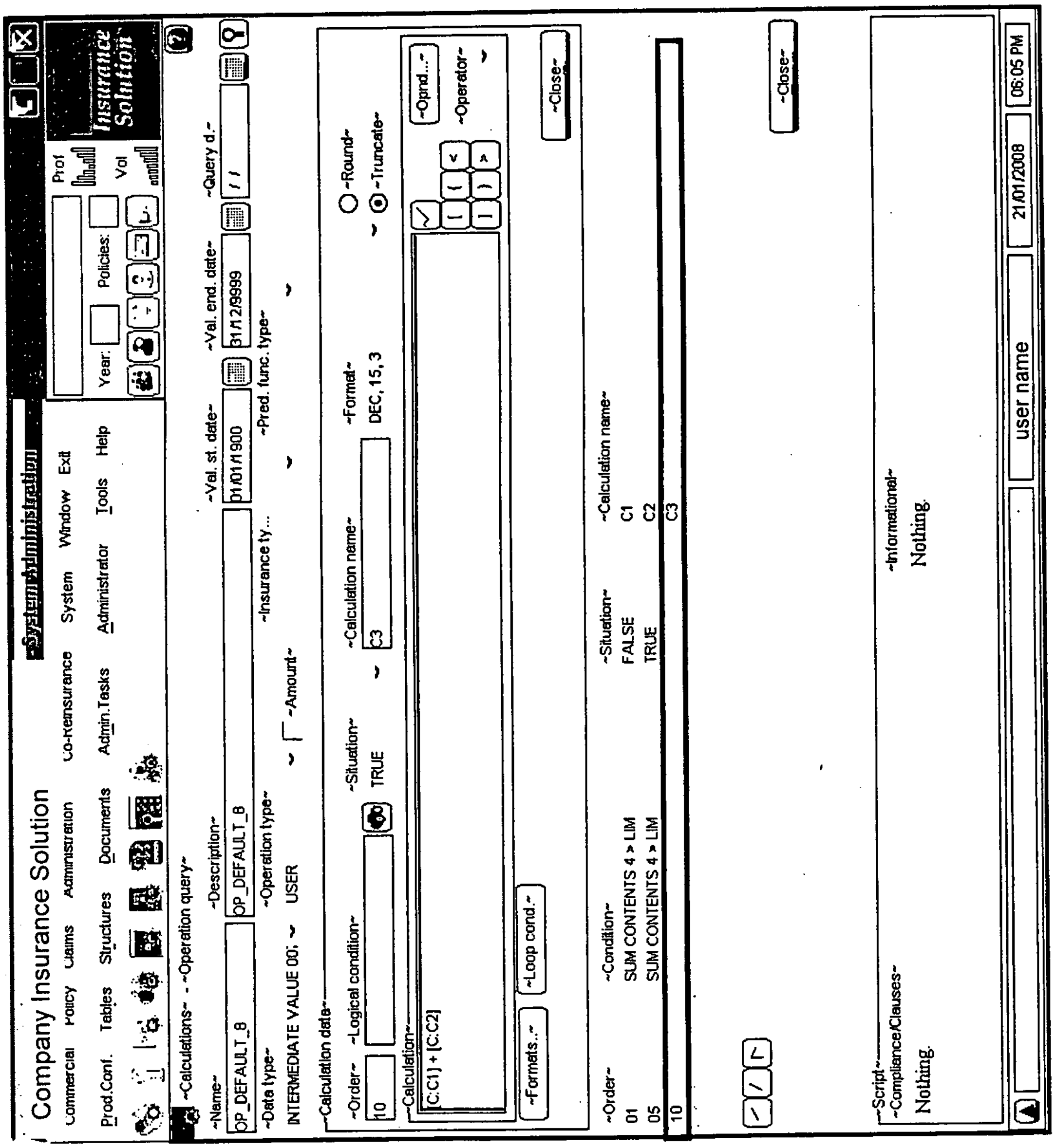
Company Insurance Solution
Commercial Policy Claims Administration Co-Reinsurance System Window Exit
Prod.Conf. Tables Structures Documents Admin.Tasks Administrator Tools Help
System Administration
Year: Policies:
Prof
Vol
Insurance Solution
~Calculations~ - ~Operation query~
~Name~
OP_DEFAULT_8
~Description~
OP_DEFAULT_8
~Val. st. date~
01/01/1900
~Val. end. date~
31/12/9999
~Query d.~
/ /
~Data type~
INTERMEDIATE VALUE 00:
~Operation type~
USER
~Amount~
~Insurance ty...
~Pred. func. type~
~Calculation data~
~Order~
10
~Logical condition~
~Situation~
TRUE
~Calculation name~
C3
~Format~
DEC, 15, 3
~Round~
~Truncate~
~Calculation~
[C:C1] + [C:C2]
~Opnd...~
~Operator~
~Formats..~
~Loop cond.~
~Close~
~Order~
~Condition~
~Situation~
~Calculation name~
01
SUM CONTENTS 4 > LIM
FALSE
C1
05
SUM CONTENTS 4 > LIM
TRUE
C2
10
C3
~Close~
~Script~
~Compliance/Clauses~
Nothing.
~Informational~
Nothing.
user name
21/01/2008
06:05 PM

Figure 15

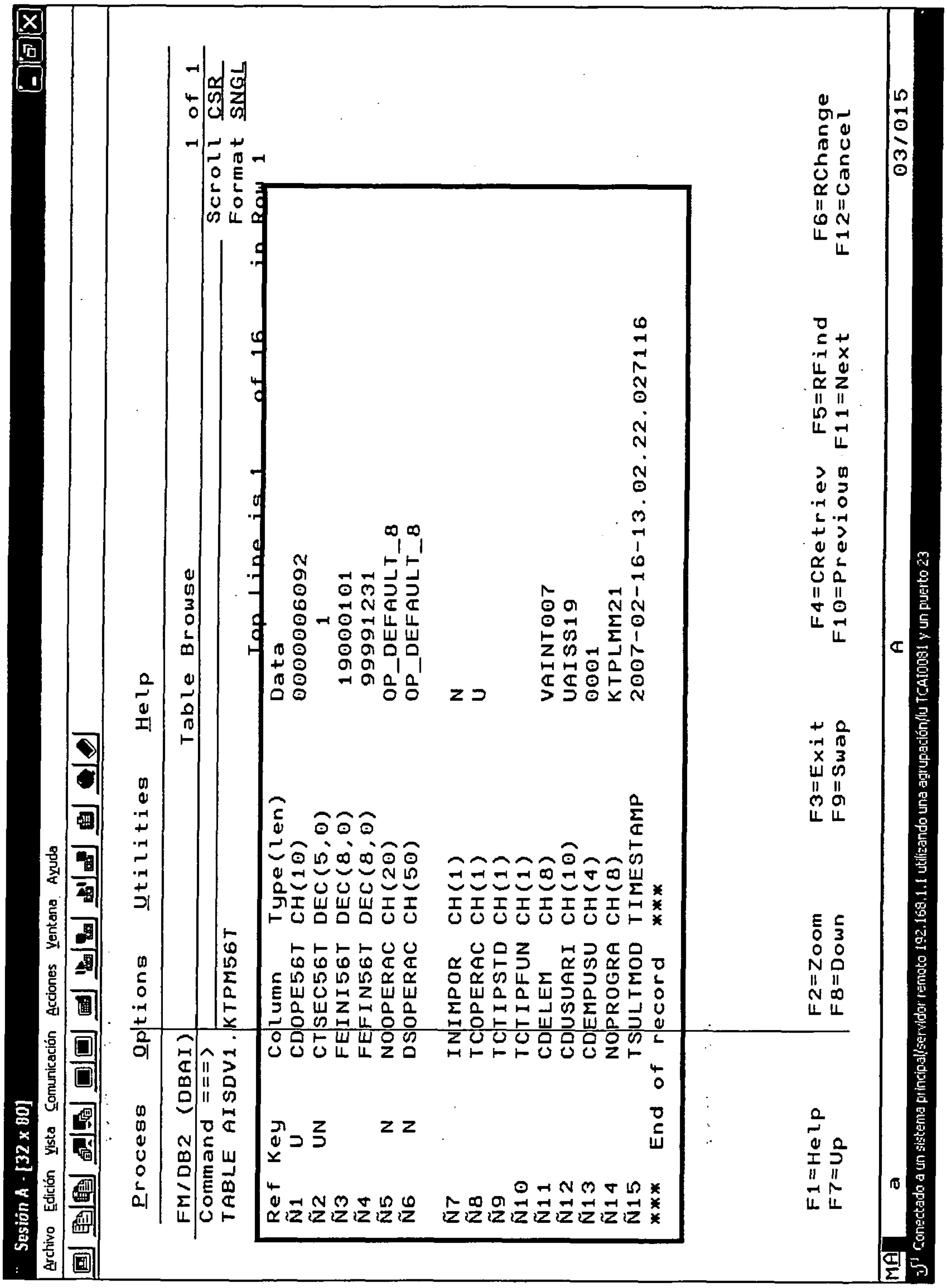
Sesión A - [32 x 80]
Archivo Edición Vista Comunicación Acciones Ventana Ayuda
Process Options Utilities Help
FM/DB2 (DBAI) Table Browse 1 of 1
Command ===> Scroll CSR
TABLE AISDV1.KTPM56T Format SNGL
Top Line is 1 of 16 in Row 1
Ref Key Column Type(len) Data
Ñ1 U CDOPE56T CH(10) 0000006092
Ñ2 UN CTSEC56T DEC(5,0) 1
Ñ3 FEINI56T DEC(8,0) 19000101
Ñ4 FEFIN56T DEC(8,0) 99991231
Ñ5 N NOOPERAC CH(20) OP_DEFAULT_8
Ñ6 N DSOPERAC CH(50) OP_DEFAULT_8
Ñ7 INIMPOR CH(1) N
Ñ8 TCOPERAC CH(1) U
Ñ9 TCTIPSTD CH(1)
Ñ10 TCTIPFUN CH(1)
Ñ11 CDELEM CH(8) VAINT007
Ñ12 CDUSUARI CH(10) UAISS19
Ñ13 CDEMPUSU CH(4) 0001
Ñ14 NOPROGRA CH(8) KTPLMM21
Ñ15 TSULTMOD TIMESTAMP 2007-02-16-13.02.22.027116
*** End of record ***
F1=Help F2=Zoom F3=Exit F4=CRetriev F5=RFind F6=RChange
F7=Up F8=Down F9=Swap F10=Previous F11=Next F12=Cancel
MA a A 03/015
Conectado a un sistema principal/servidor remoto 192.168.1.1 utilizando una agrupación/lu TCA10081 y un puerto 23

Figure 16a

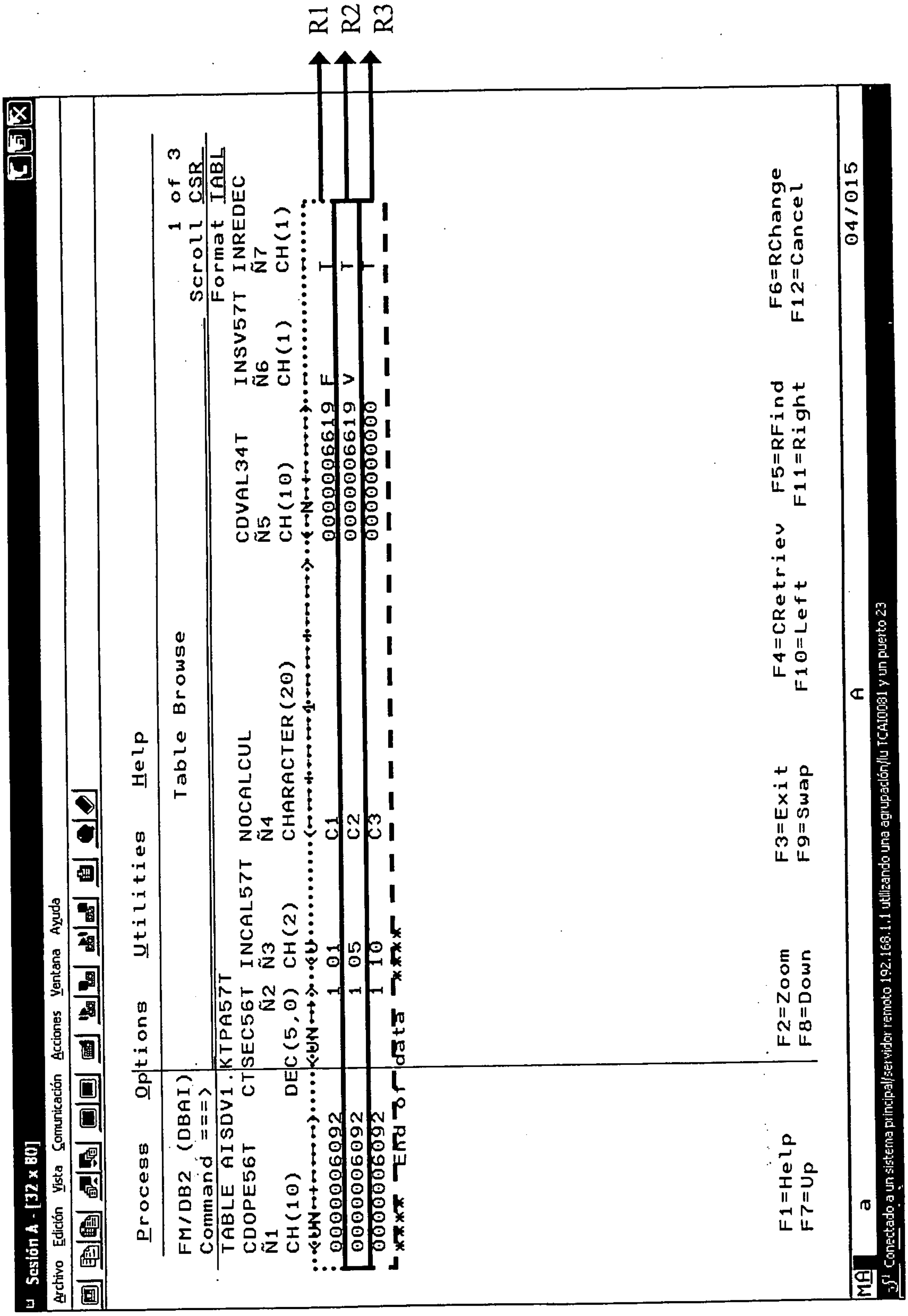
Sesión A - [32 x 80]
Archivo Edición Vista Comunicación Acciones Ventana Ayuda
Process Options Utilities Help
FM/DB2 (DBAI) Table Browse 1 of 3
Command ===> Scroll CSR
TABLE AISDV1.KTPA57T Format TABL
CDOPE56T CTSEC56T INCAL57T NOCALCUL CDVAL34T INSV57T INREDEC
Ñ1 Ñ2 Ñ3 Ñ4 Ñ5 Ñ6 Ñ7
CH(10) DEC(5,0) CH(2) CHARACTER(20) CH(10) CH(1) CH(1)
0000006092 1 01 C1 0000006619 F T
0000006092 1 05 C2 0000006619 V T
0000006092 1 10 C3 0000000000
****** End of data ******
F1=Help F2=Zoom F3=Exit F4=CRetriev F5=RFind F6=RChange
F7=Up F8=Down F9=Swap F10=Left F11=Right F12=Cancel
04/015
Conectado a un sistema principal/servidor remoto 192.168.1.1 utilizando una agrupación/lu TCA10081 y un puerto 23
R1
R2
R3

Figure 16b

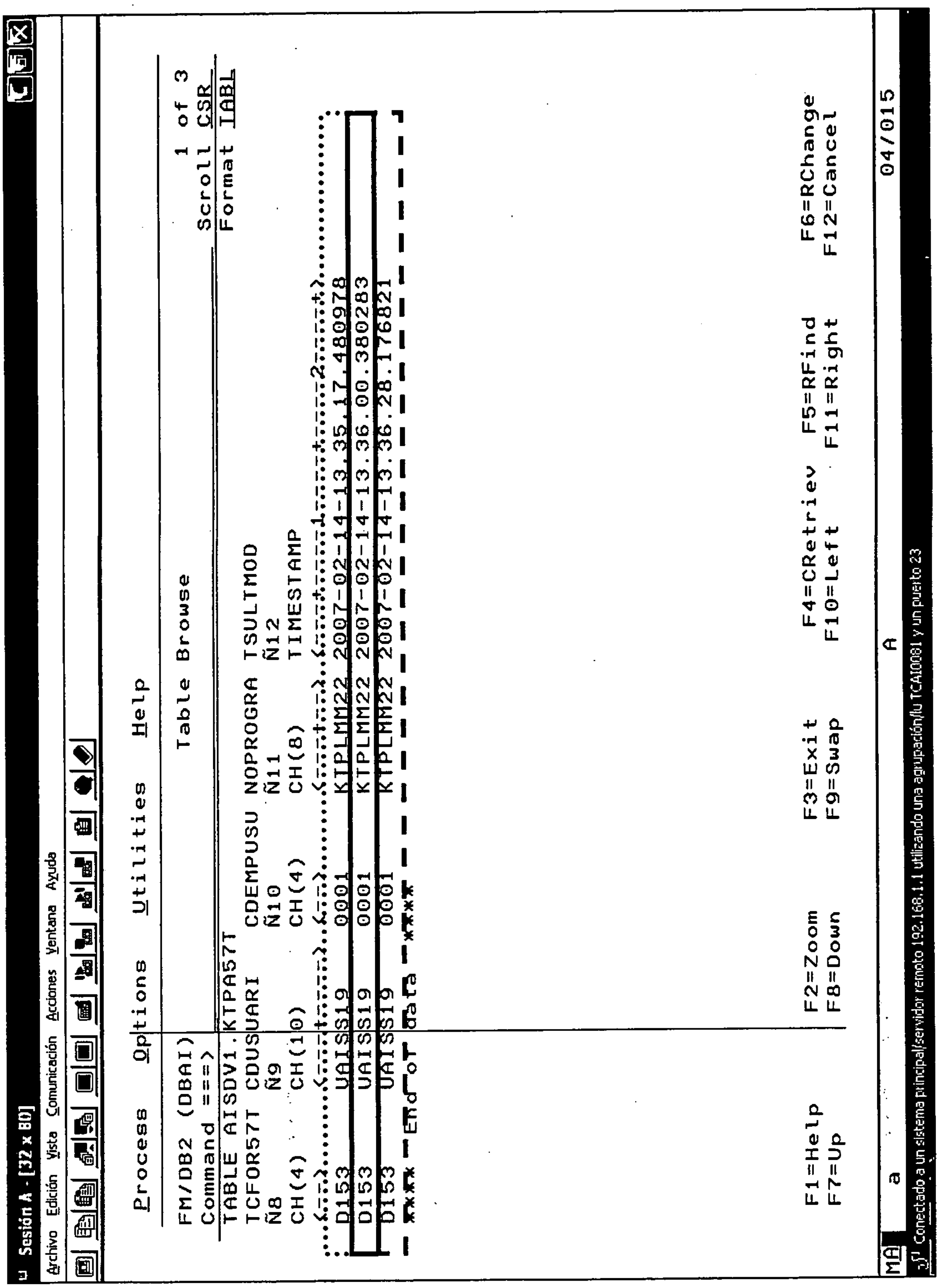
Sesión A - [32 x 80]
Archivo Edición Vista Comunicación Acciones Ventana Ayuda
Process Options Utilities Help
FM/DB2 (DBAI) Table Browse 1 of 3
Command ===> Scroll CSR
TABLE AISDV1.KTPA57T Format TABL
TCFOR57T CDUSUARI CDEMPUSU NOPROGRA TSULTMOD
Ñ8 Ñ9 Ñ10 Ñ11 Ñ12
CH(4) CH(10) CH(4) CH(8) TIMESTAMP
D153 UAISS19 0001 KTPLMM22 2007-02-14-13.35.17.480978
D153 UAISS19 0001 KTPLMM22 2007-02-14-13.36.00.380283
D153 UAISS19 0001 KTPLMM22 2007-02-14-13.36.28.176821
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23

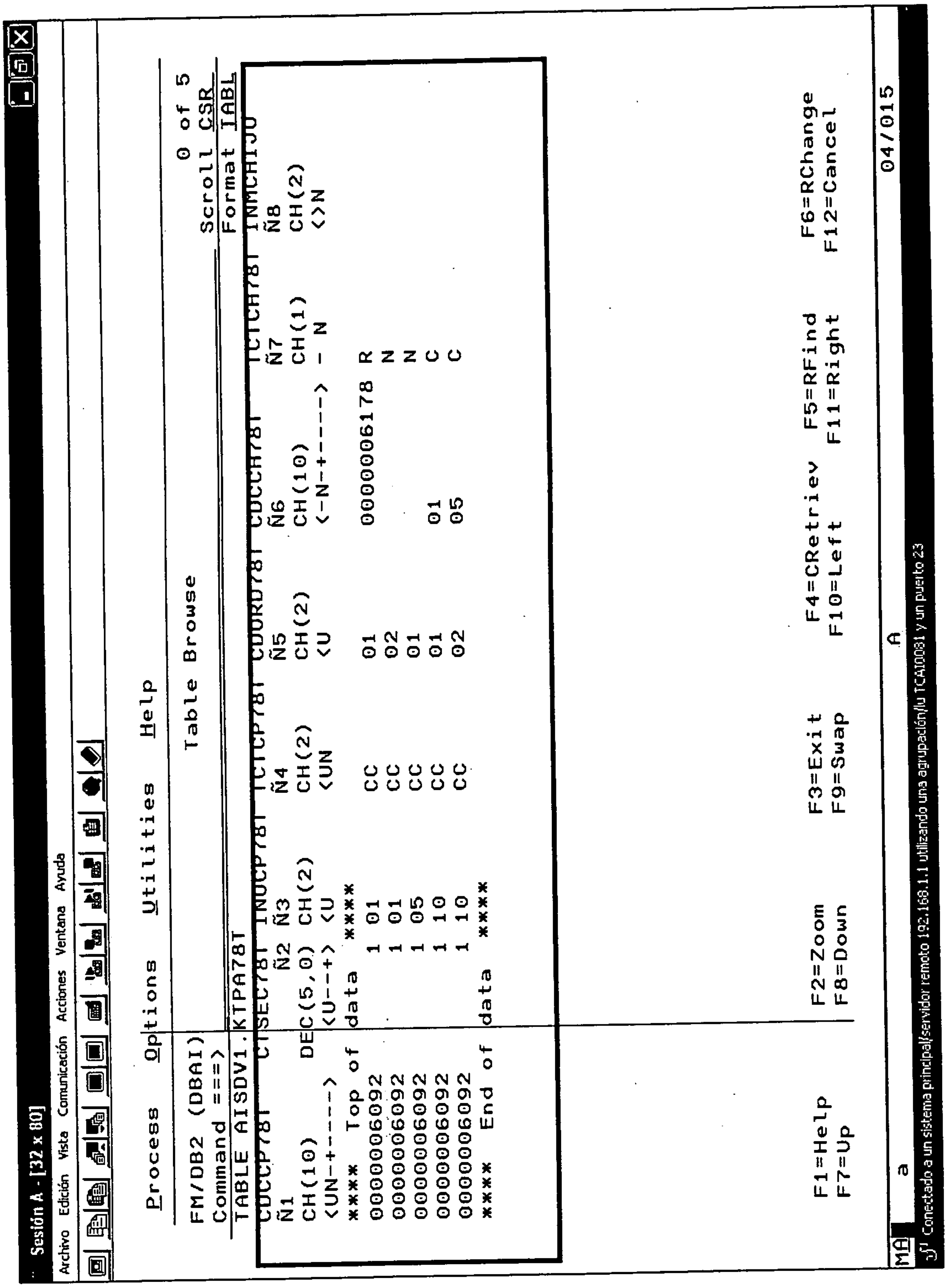
Sesión A - [32 x 80]
Archivo Edición Vista Comunicación Acciones Ventana Ayuda
Process Options Utilities Help
FM/DB2 (DBAI) Table Browse 0 of 5
Command ===> Scroll CSR
TABLE AISDV1.KTPA78T Format TABL
Ñ1 Ñ2 Ñ3 Ñ4 Ñ5 Ñ6 Ñ7 Ñ8
CH(10) DEC(5,0) CH(2) CH(2) CH(2) CH(10) CH(1) CH(2)
<UN-+----> <U--+> <U <UN <U <-N-+----> - N <>N
**** Top of data ****
0000006092 1 01 CC 01 0000006178 R
0000006092 1 01 CC 02 N
0000006092 1 05 CC 01 N
0000006092 1 10 CC 01 01 C
0000006092 1 10 CC 02 05 C
**** End of data ****
F1=Help F2=Zoom F3=Exit F4=CRetriev F5=RFind F6=RChange
F7=Up F8=Down F9=Swap F10=Left F11=Right F12=Cancel
04/015
Conectado a un sistema principal/servidor remoto 192.168.1.1 utilizando una agrupación/lu TCA10081 y un puerto 23

Figure 17a

Figure 17b

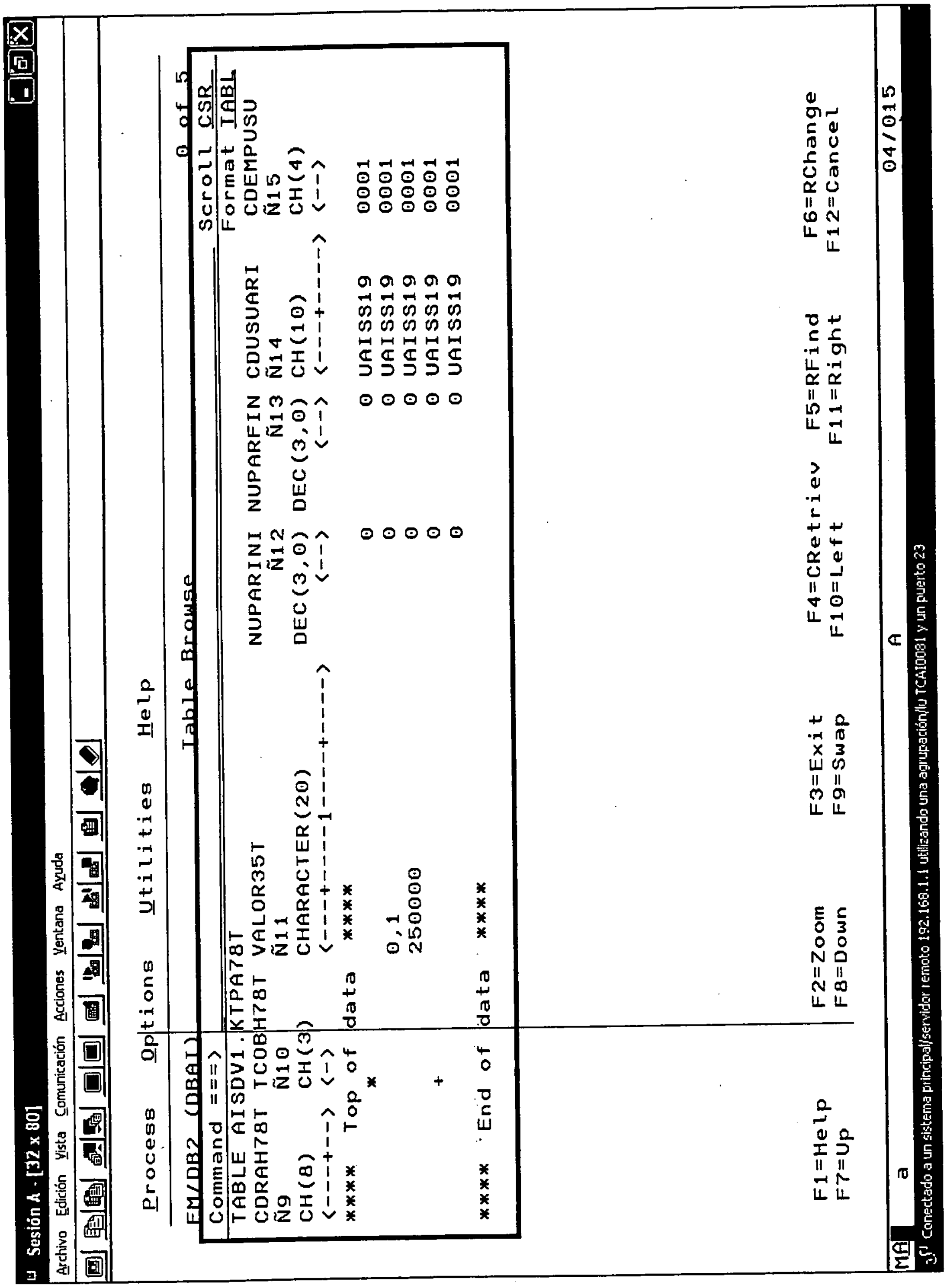
Sesión A - [32 x 80]
Archivo Edición Vista Comunicación Acciones Ventana Ayuda
Process Options Utilities Help
EM/DB2 (DBAI) Table Browse 0 of 5
Command ===> Scroll CSR
TABLE AISDV1.KTPA78T Format TABL
CDRAH78T TCOBH78T VALOR35T NUPARINI NUPARFIN CDUSUARI CDEMPUSU
Ñ9 Ñ10 Ñ11 Ñ12 Ñ13 Ñ14 Ñ15
CH(8) CH(3) CHARACTER(20) DEC(3,0) DEC(3,0) CH(10) CH(4)
**** Top of data ****
* 0,1 0 0 UAISS19 0001
250000 0 0 UAISS19 0001
0 0 UAISS19 0001
+ 0 0 UAISS19 0001
0 0 UAISS19 0001
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015
Conectado a un sistema principal/servidor remoto 192.168.1.1 utilizando una agrupación/lu TCAI0081 y un puerto 23

Figure 18a

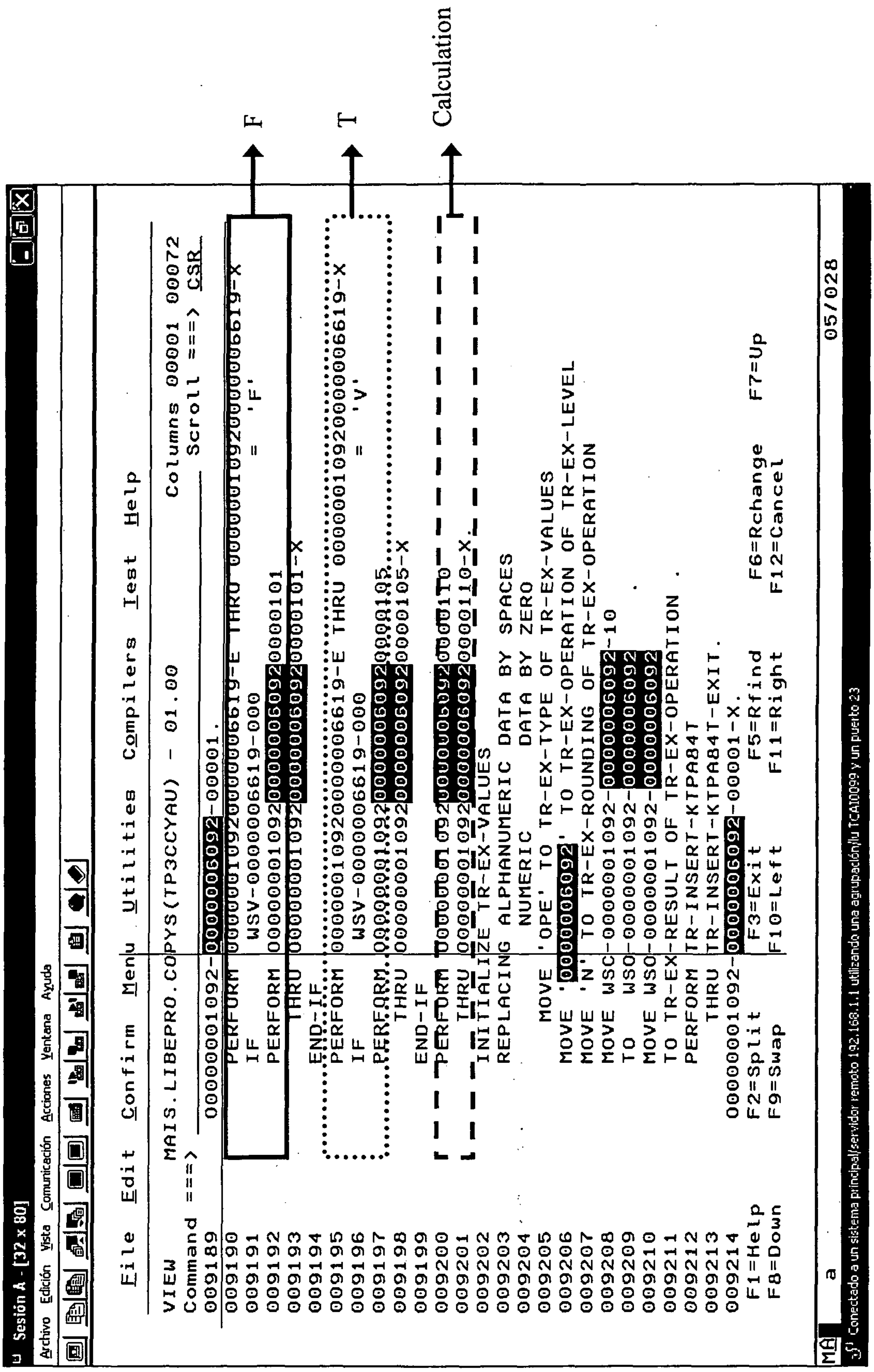
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
009189 000000001092-0000006092-00001.
009190 PERFORM 000000001092000000006619-E THRU 000000001092000000006619-X
009191 IF WSV-0000006619-000 = 'F'
009192 PERFORM 000000001092000000060920000101
009193 THRU 000000001092000000060920000101-X
009194 END-IF.
009195 PERFORM 000000001092000000006619-E THRU 000000001092000000006619-X
009196 IF WSV-0000006619-000 = 'V'
009197 PERFORM 000000001092000000060920000105
009198 THRU 000000001092000000060920000105-X
009199 END-IF
009200 PERFORM 000000001092000000060920000110
009201 THRU 000000001092000000060920000110-X.
009202 INITIALIZE TR-EX-VALUES
009203 REPLACING ALPHANUMERIC DATA BY SPACES
009204 NUMERIC DATA BY ZERO
009205 MOVE 'OPE' TO TR-EX-TYPE OF TR-EX-VALUES
009206 MOVE '0000006092' TO TR-EX-OPERATION OF TR-EX-LEVEL
009207 MOVE 'N' TO TR-EX-ROUNDING OF TR-EX-OPERATION
009208 MOVE WSC-000000001092-0000006092-10
009209 TO WSO-000000001092-0000006092
009210 MOVE WSO-000000001092-0000006092
009211 TO TR-EX-RESULT OF TR-EX-OPERATION .
009212 PERFORM TR-INSERT-KTPA84T
009213 THRU TR-INSERT-KTPA84T-EXIT.
009214 000000001092-0000006092-00001-X.
F1=Help F2=Split F3=Exit F5=Rfind F6=Rchange F7=Up
F8=Down F9=Swap F10=Left F11=Right F12=Cancel
MA a 05/028
Conectado a un sistema principal/servidor remoto 192.168.1.1 utilizando una agrupación/lu TCA10099 y un puerto 23
F
T
Calculation

Figure 18b

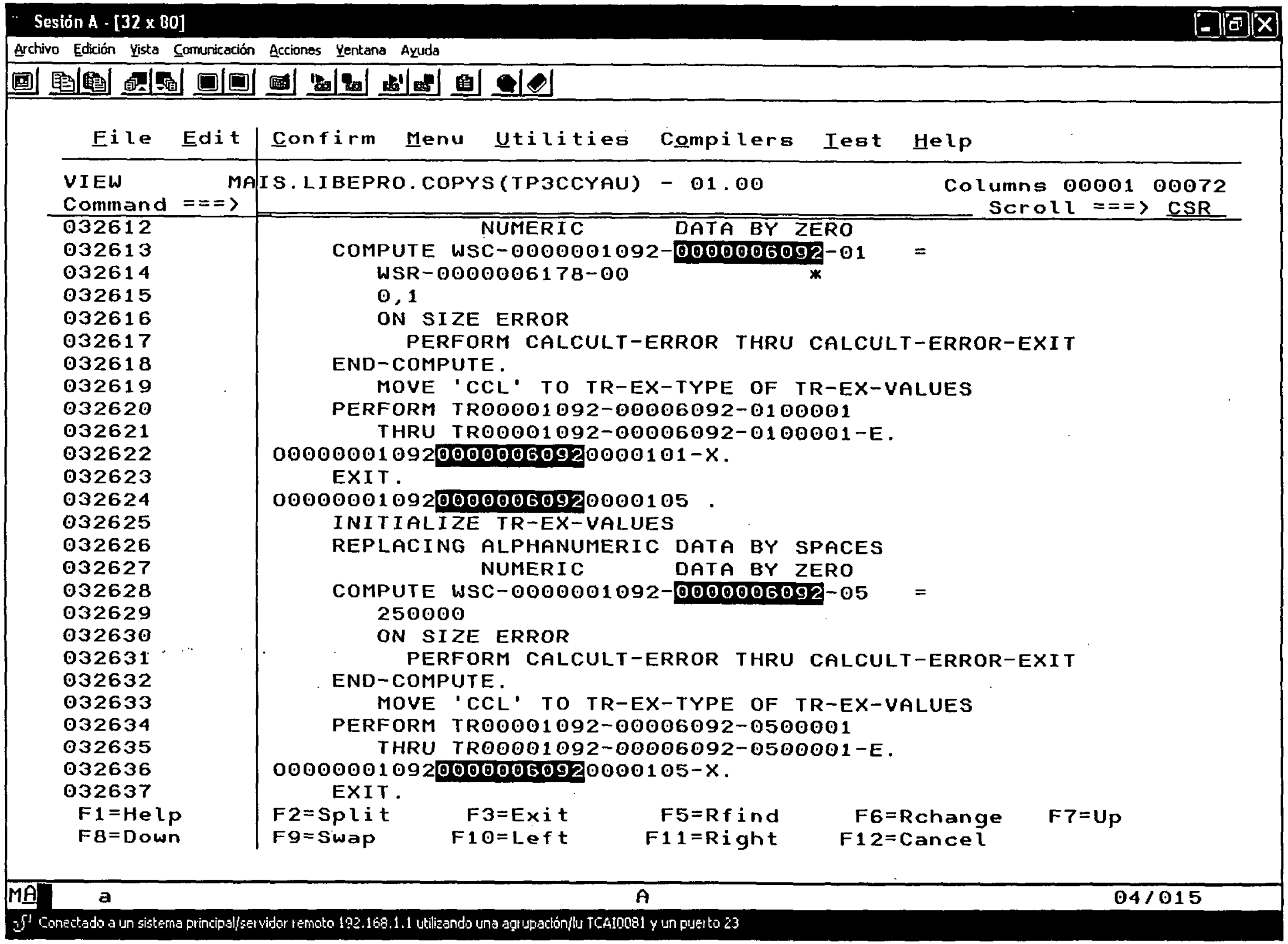
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
032612 NUMERIC DATA BY ZERO
032613 COMPUTE WSC-0000001092-0000006092-01 =
032614 WSR-0000006178-00 *
032615 0,1
032616 ON SIZE ERROR
032617 PERFORM CALCULT-ERROR THRU CALCULT-ERROR-EXIT
032618 END-COMPUTE.
032619 MOVE 'CCL' TO TR-EX-TYPE OF TR-EX-VALUES
032620 PERFORM TR00001092-00006092-0100001
032621 THRU TR00001092-00006092-0100001-E.
032622 0000000109200000060920000101-X.
032623 EXIT.
032624 0000000109200000060920000105 .
032625 INITIALIZE TR-EX-VALUES
032626 REPLACING ALPHANUMERIC DATA BY SPACES
032627 NUMERIC DATA BY ZERO
032628 COMPUTE WSC-0000001092-0000006092-05 =
032629 250000
032630 ON SIZE ERROR
032631 PERFORM CALCULT-ERROR THRU CALCULT-ERROR-EXIT
032632 END-COMPUTE.
032633 MOVE 'CCL' TO TR-EX-TYPE OF TR-EX-VALUES
032634 PERFORM TR00001092-00006092-0500001
032635 THRU TR00001092-00006092-0500001-E.
032636 0000000109200000060920000105-X.
032637 EXIT.
F1=Help F2=Split F3=Exit F5=Rfind F6=Rchange F7=Up
F8=Down F9=Swap F10=Left F11=Right F12=Cancel
MA a A 04/015
Conectado a un sistema principal/servidor remoto 192.168.1.1 utilizando una agrupación/lu TCA10081 y un puerto 23

Figure 18c

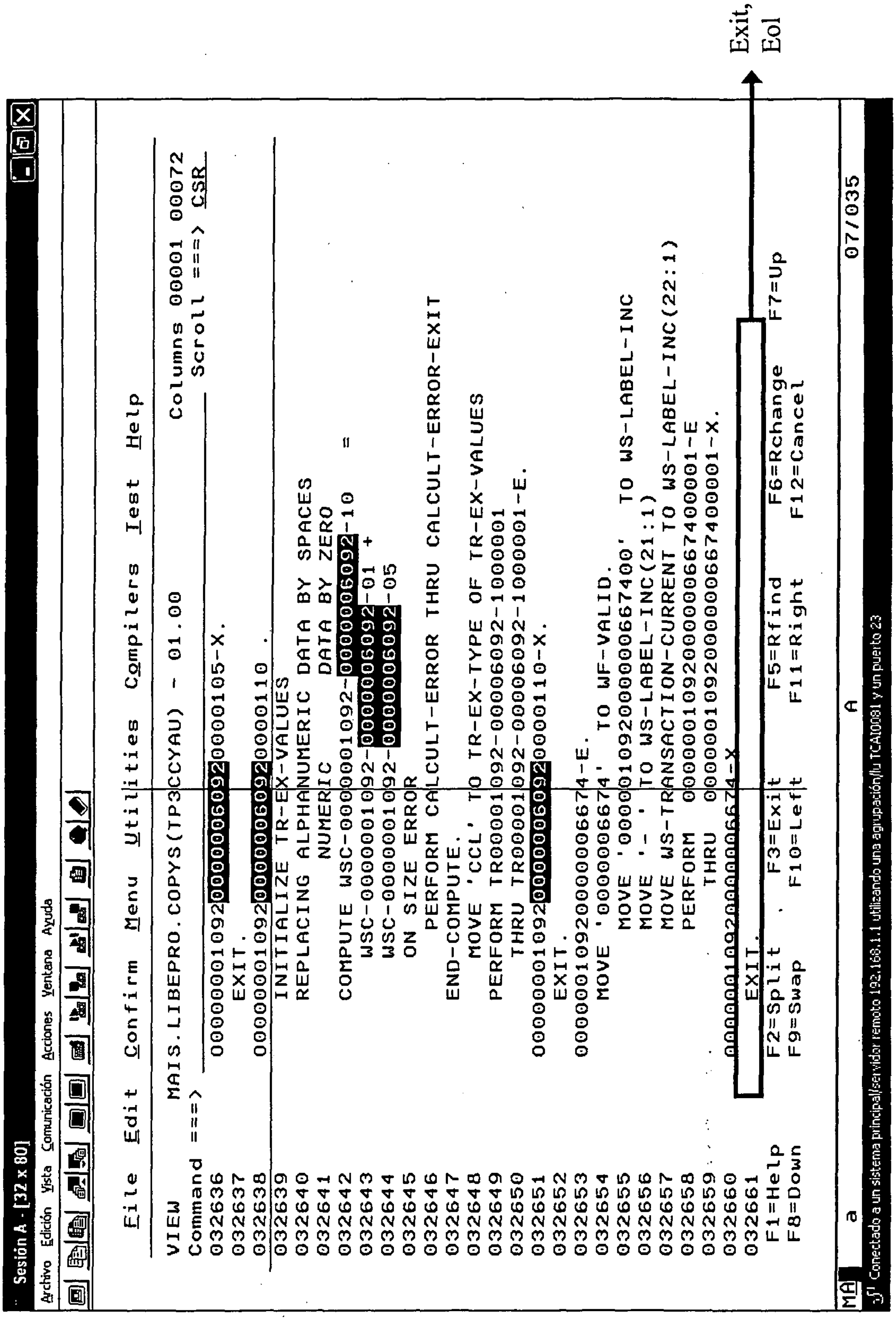
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TP3CCYAU) - 01.00 Columns 00001 00072
Command ===> Scroll ===> CSR
032636 000000010920000006092000000105-X.
032637 EXIT.
032638 000000010920000006092000000110 .
032639 INITIALIZE TR-EX-VALUES
032640 REPLACING ALPHANUMERIC DATA BY SPACES
032641 NUMERIC DATA BY ZERO
032642 COMPUTE WSC-0000001092-0000006092-10 =
032643 WSC-0000001092-0000006092-01 +
032644 WSC-0000001092-0000006092-05
032645 ON SIZE ERROR
032646 PERFORM CALCULT-ERROR THRU CALCULT-ERROR-EXIT
032647 END-COMPUTE.
032648 MOVE 'CCL' TO TR-EX-TYPE OF TR-EX-VALUES
032649 PERFORM TR0000001092-0000006092-1000001
032650 THRU TR0000001092-0000006092-1000001-E.
032651 000000010920000006092000000110-X.
032652 EXIT.
032653 0000000109200000066674-E.
032654 MOVE '0000000066674' TO WF-VALID.
032655 MOVE '0000010920000000667400' TO WS-LABEL-INC
032656 MOVE '-' TO WS-LABEL-INC(21:1)
032657 MOVE WS-TRANSACTION-CURRENT TO WS-LABEL-INC(22:1)
032658 PERFORM 0000001092000000667400001-E
032659 THRU 0000001092000000667400001-X.
032660 00000001092000000066674-X
032661 EXIT.
F1=Help F2=Split F3=Exit F5=Rfind F6=Rchange F7=Up
F8=Down F9=Swap F10=Left F11=Right F12=Cancel
MA a A 07/035
Conectado a un sistema principal/servidor remoto 192.168.1.1 utilizando una agrupación/lu TCA10081 y un puerto 23
Exit,
Eol

Figure 19

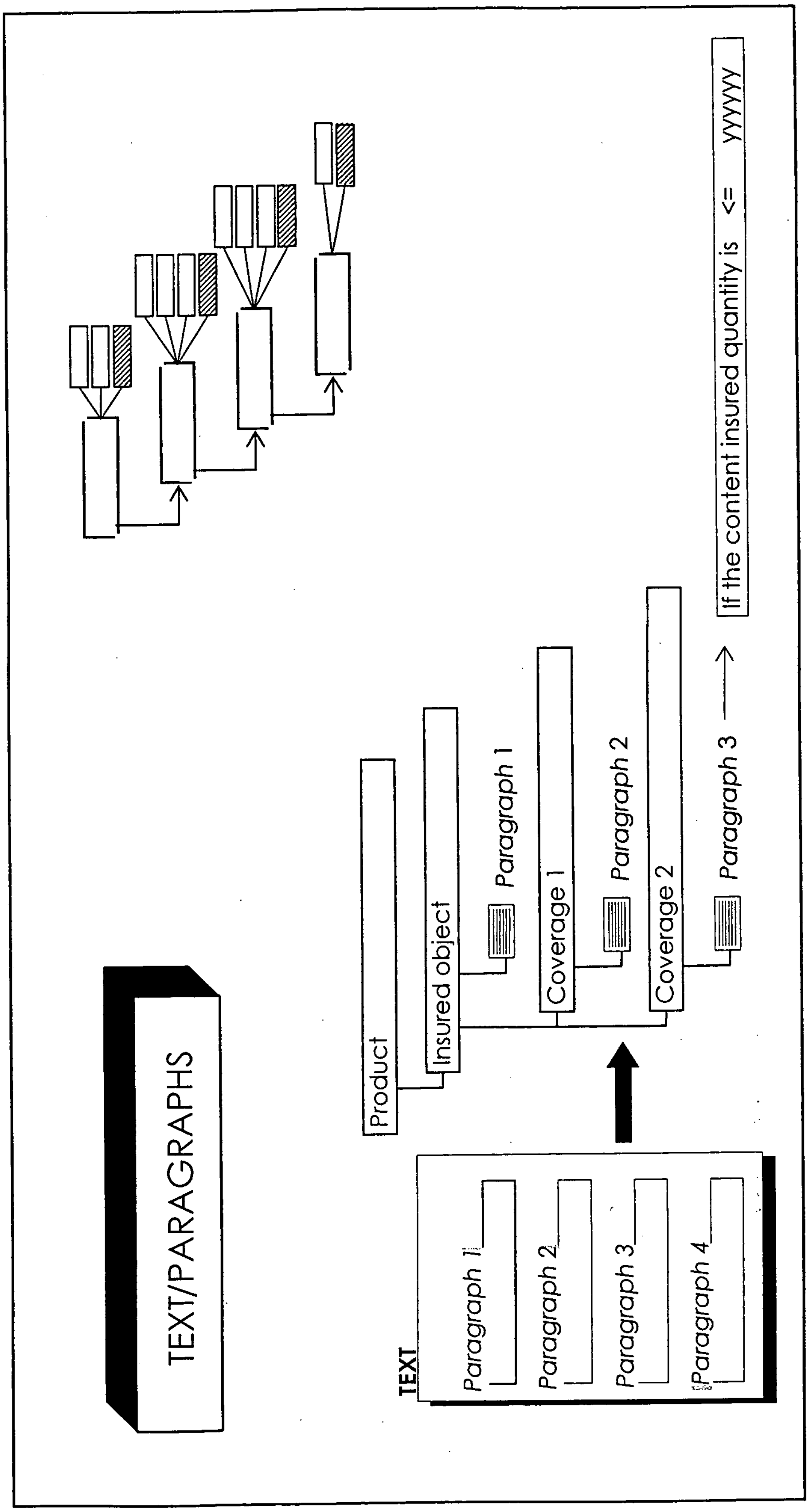
TEXT/PARAGRAPHS
TEXT
Paragraph 1
Paragraph 2
Paragraph 3
Paragraph 4
Product
Insured object
Paragraph 1
Coverage 1
Paragraph 2
Coverage 2
Paragraph 3
If the content insured quantity is <= YYYYYY

Figure 20a

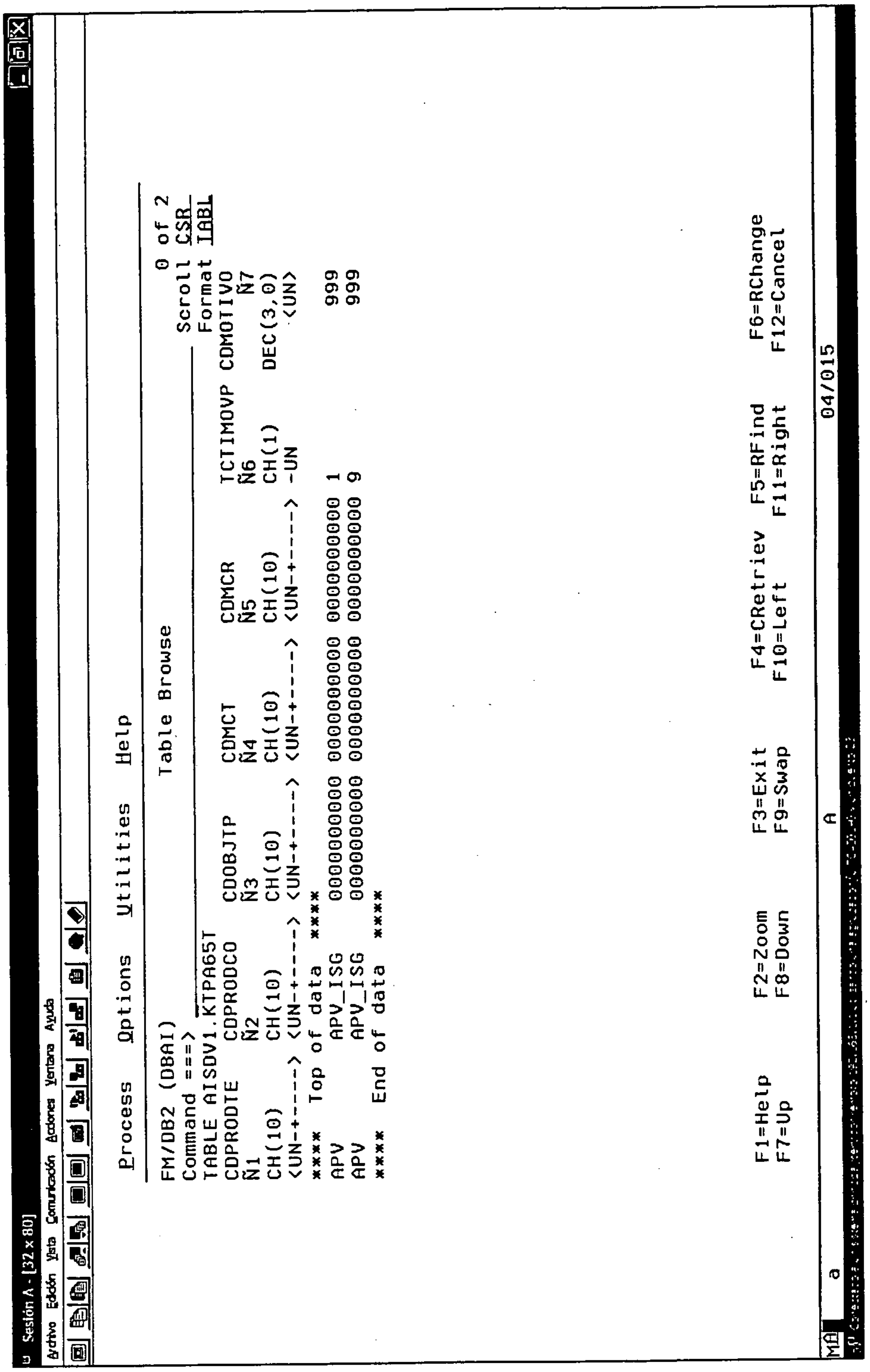
Sesión A - [32 x 80]
Archivo Edición Vista Comunicación Acciones Ventana Ayuda
Process Options Utilities Help
FM/DB2 (DBAI) Table Browse 0 of 2
Command ===> Scroll CSR
TABLE AISDV1.KTPA65T Format TABL
CDPRODTE CDPRODCO CDOBJTP CDMCT CDMCR TCTIMOVP CDMOTIVO
Ñ1 Ñ2 Ñ3 Ñ4 Ñ5 Ñ6 Ñ7
CH(10) CH(10) CH(10) CH(10) CH(10) CH(1) DEC(3,0)
<UN-+-----> <UN-+-----> <UN-+-----> <UN-+-----> <UN-+-----> -UN <UN>
**** Top of data ****
APV APV_ISG 0000000000 0000000000 0000000000 1 999
APV APV_ISG 0000000000 0000000000 0000000000 9 999
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015

Figure 20b

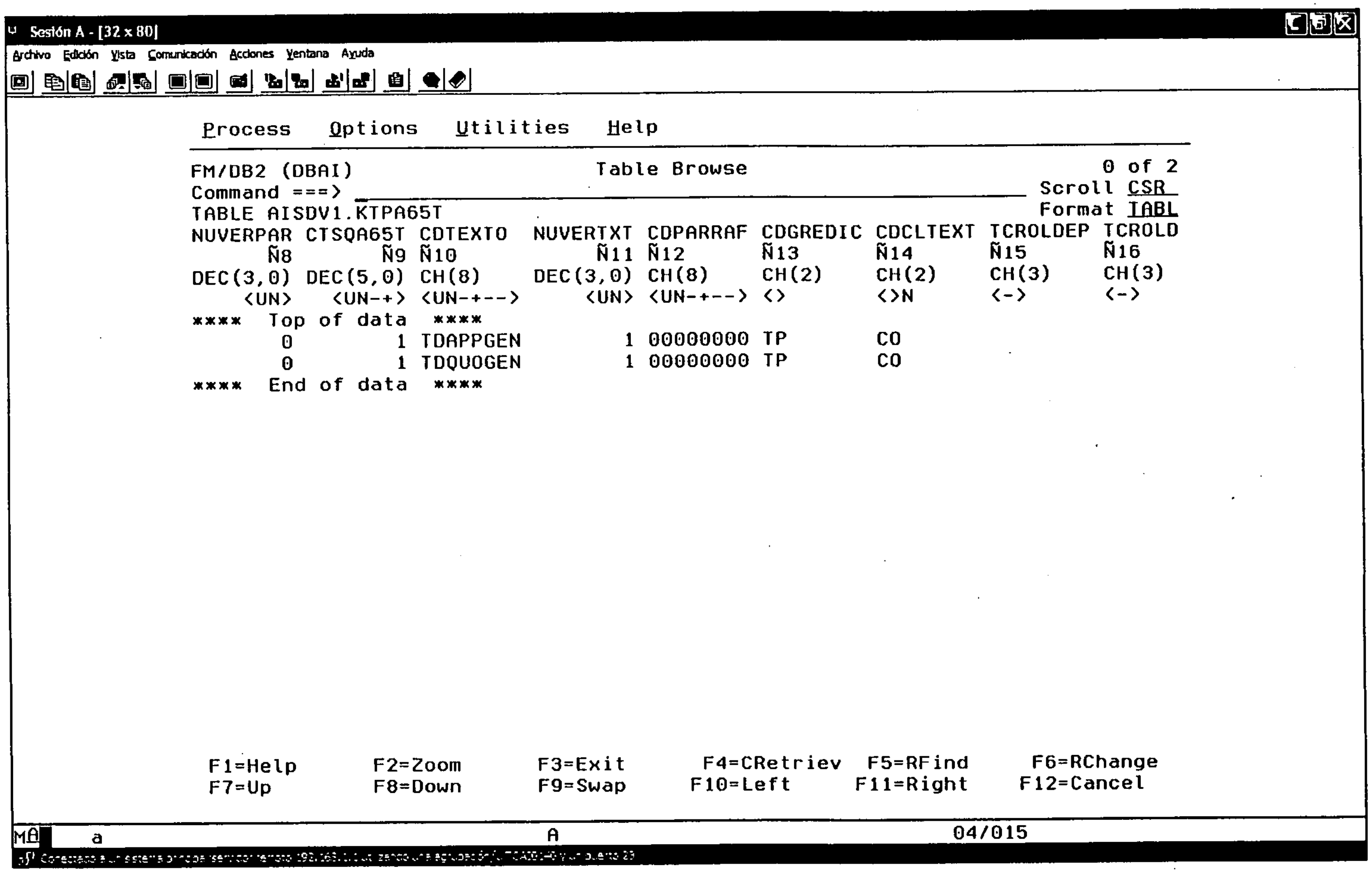
Sesión A - [32 x 80]
Archivo Edición Vista Comunicación Acciones Ventana Ayuda
Process Options Utilities Help
FM/DB2 (DBAI) Table Browse 0 of 2
Command ===> Scroll CSR
TABLE AISDV1.KTPA65T Format TABL
NUVERPAR CTSQA65T CDTEXTO NUVERTXT CDPARRAF CDGREDIC CDCLTEXT TCROLDEP TCROLD
Ñ8 Ñ9 Ñ10 Ñ11 Ñ12 Ñ13 Ñ14 Ñ15 Ñ16
DEC(3,0) DEC(5,0) CH(8) DEC(3,0) CH(8) CH(2) CH(2) CH(3) CH(3)
<UN> <UN-+> <UN-+--> <UN> <UN-+--> <> <>N <-> <->
**** Top of data ****
0 1 TDAPPGEN 1 00000000 TP CO
0 1 TDQUOGEN 1 00000000 TP CO
**** End of data ****
F1=Help F2=Zoom F3=Exit F4=CRetriev F5=RFind F6=RChange
F7=Up F8=Down F9=Swap F10=Left F11=Right F12=Cancel
MA a A 04/015

Figure 20c

```
Sesión A - [32 x 80]
Archivo  Edición  Vista  Comunicación  Acciones  Ventana  Ayuda

    Process   Options   Utilities   Help
  ----------------------------------------------------------------------------
  FM/DB2 (DBAI)                        Table Browse                     0 of 2
  Command ===> ____________________________________________________ Scroll CSR
  TABLE AISDV1.KTPA65T                                               Format TABL
  TCROLDES INOBLIGA  FEINI65T  FEFIN65T CDEMPUSU CDUSUARI   NOPROGRA TSULTMOD
  Ñ16      Ñ17            Ñ18       Ñ19 Ñ20      Ñ21        Ñ22      Ñ23        +
  CH(3)    CH(1)     DEC(8,0)  DEC(8,0) CH(4)    CH(10)     CH(8)    TIMESTAMP
  <->      -        <-N-+---> <-N-+---> <-->     <---+----> <---+--> <---+----1-
  ****  Top of data  ****
                     19000101  99991231 0001     UAISS27    KTPLMM31 2006-09-12-
                     19000101  99991231 0001     UAISS27    KTPLMM31 2006-09-12-
  ****  End of data  ****

   F1=Help      F2=Zoom      F3=Exit      F4=CRetriev  F5=RFind     F6=RChange
   F7=Up        F8=Down      F9=Swap     F10=Left     F11=Right    F12=Cancel
MA   a                       A                                 04/015
```

Figure 21a

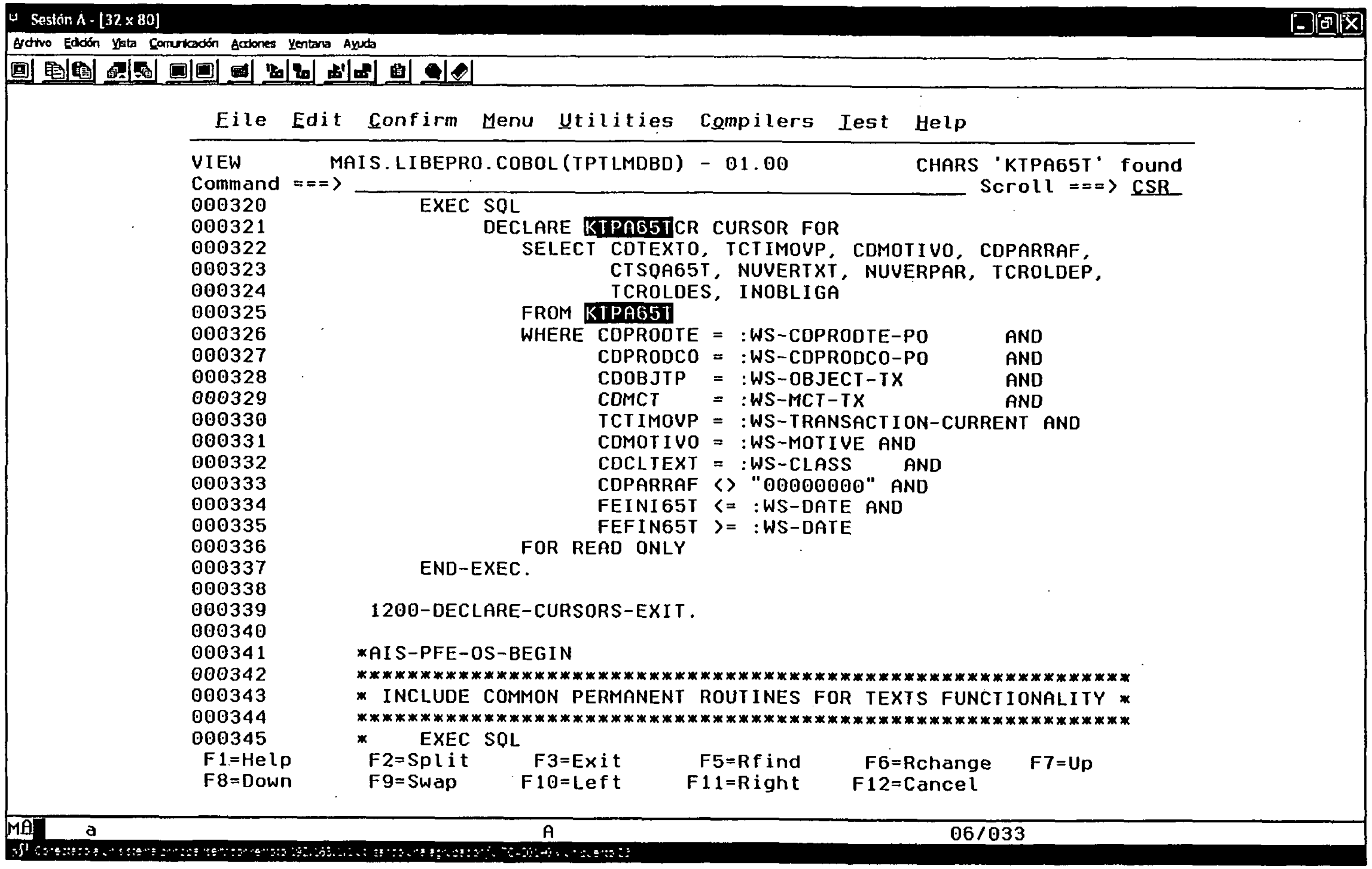
Sesión A - [32 x 80]
Archivo Edición Vista Comunicación Acciones Ventana Ayuda
File Edit Confirm Menu Utilities Compilers Test Help
VIEW MAIS.LIBEPRO.COBOL(TPTLMDBD) - 01.00 CHARS 'KTPA65T' found
Command ===> Scroll ===> CSR
000320 EXEC SQL
000321 DECLARE KTPA65TCR CURSOR FOR
000322 SELECT CDTEXTO, TCTIMOVP, CDMOTIVO, CDPARRAF,
000323 CTSQA65T, NUVERTXT, NUVERPAR, TCROLDEP,
000324 TCROLDES, INOBLIGA
000325 FROM KTPA65T
000326 WHERE CDPRODTE = :WS-CDPRODTE-PO AND
000327 CDPRODCO = :WS-CDPRODCO-PO AND
000328 CDOBJTP = :WS-OBJECT-TX AND
000329 CDMCT = :WS-MCT-TX AND
000330 TCTIMOVP = :WS-TRANSACTION-CURRENT AND
000331 CDMOTIVO = :WS-MOTIVE AND
000332 CDCLTEXT = :WS-CLASS AND
000333 CDPARRAF <> "00000000" AND
000334 FEINI65T <= :WS-DATE AND
000335 FEFIN65T >= :WS-DATE
000336 FOR READ ONLY
000337 END-EXEC.
000338
000339 1200-DECLARE-CURSORS-EXIT.
000340
000341 *AIS-PFE-OS-BEGIN
000342 ***************************************************************
000343 * INCLUDE COMMON PERMANENT ROUTINES FOR TEXTS FUNCTIONALITY *
000344 ***************************************************************
000345 * EXEC SQL
F1=Help F2=Split F3=Exit F5=Rfind F6=Rchange F7=Up
F8=Down F9=Swap F10=Left F11=Right F12=Cancel
MA a A 06/033

Figure 21b

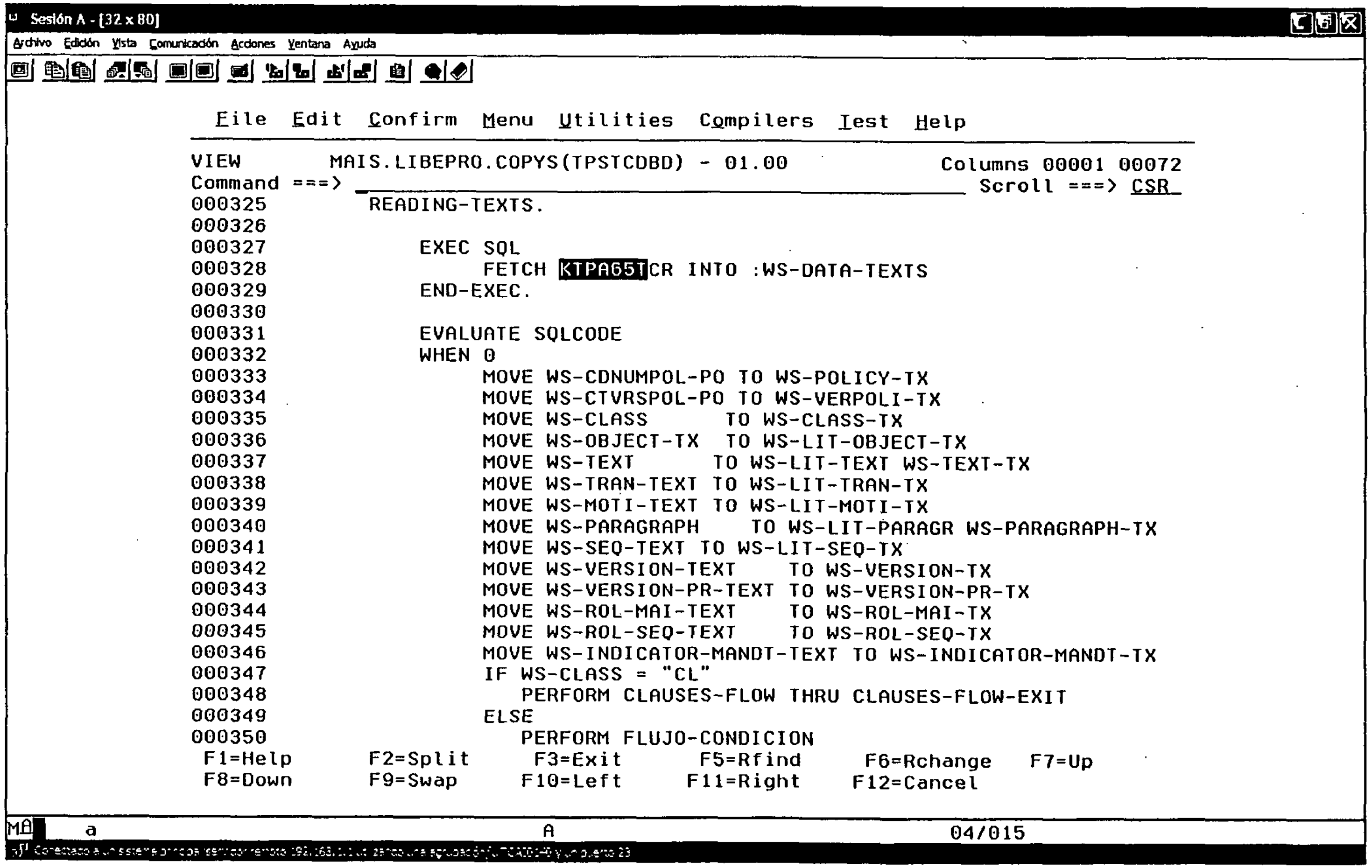
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TPSTCDBD) - 01.00 Columns 00001 00072
Command ===> Scroll ===> CSR
000325 READING-TEXTS.
000326
000327 EXEC SQL
000328 FETCH KTPA65TCR INTO :WS-DATA-TEXTS
000329 END-EXEC.
000330
000331 EVALUATE SQLCODE
000332 WHEN 0
000333 MOVE WS-CDNUMPOL-PO TO WS-POLICY-TX
000334 MOVE WS-CTVRSPOL-PO TO WS-VERPOLI-TX
000335 MOVE WS-CLASS TO WS-CLASS-TX
000336 MOVE WS-OBJECT-TX TO WS-LIT-OBJECT-TX
000337 MOVE WS-TEXT TO WS-LIT-TEXT WS-TEXT-TX
000338 MOVE WS-TRAN-TEXT TO WS-LIT-TRAN-TX
000339 MOVE WS-MOTI-TEXT TO WS-LIT-MOTI-TX
000340 MOVE WS-PARAGRAPH TO WS-LIT-PARAGR WS-PARAGRAPH-TX
000341 MOVE WS-SEQ-TEXT TO WS-LIT-SEQ-TX
000342 MOVE WS-VERSION-TEXT TO WS-VERSION-TX
000343 MOVE WS-VERSION-PR-TEXT TO WS-VERSION-PR-TX
000344 MOVE WS-ROL-MAI-TEXT TO WS-ROL-MAI-TX
000345 MOVE WS-ROL-SEQ-TEXT TO WS-ROL-SEQ-TX
000346 MOVE WS-INDICATOR-MANDT-TEXT TO WS-INDICATOR-MANDT-TX
000347 IF WS-CLASS = "CL"
000348 PERFORM CLAUSES-FLOW THRU CLAUSES-FLOW-EXIT
000349 ELSE
000350 PERFORM FLUJO-CONDICION
F1=Help F2=Split F3=Exit F5=Rfind F6=Rchange F7=Up
F8=Down F9=Swap F10=Left F11=Right F12=Cancel
MA a A 04/015

Figure 22

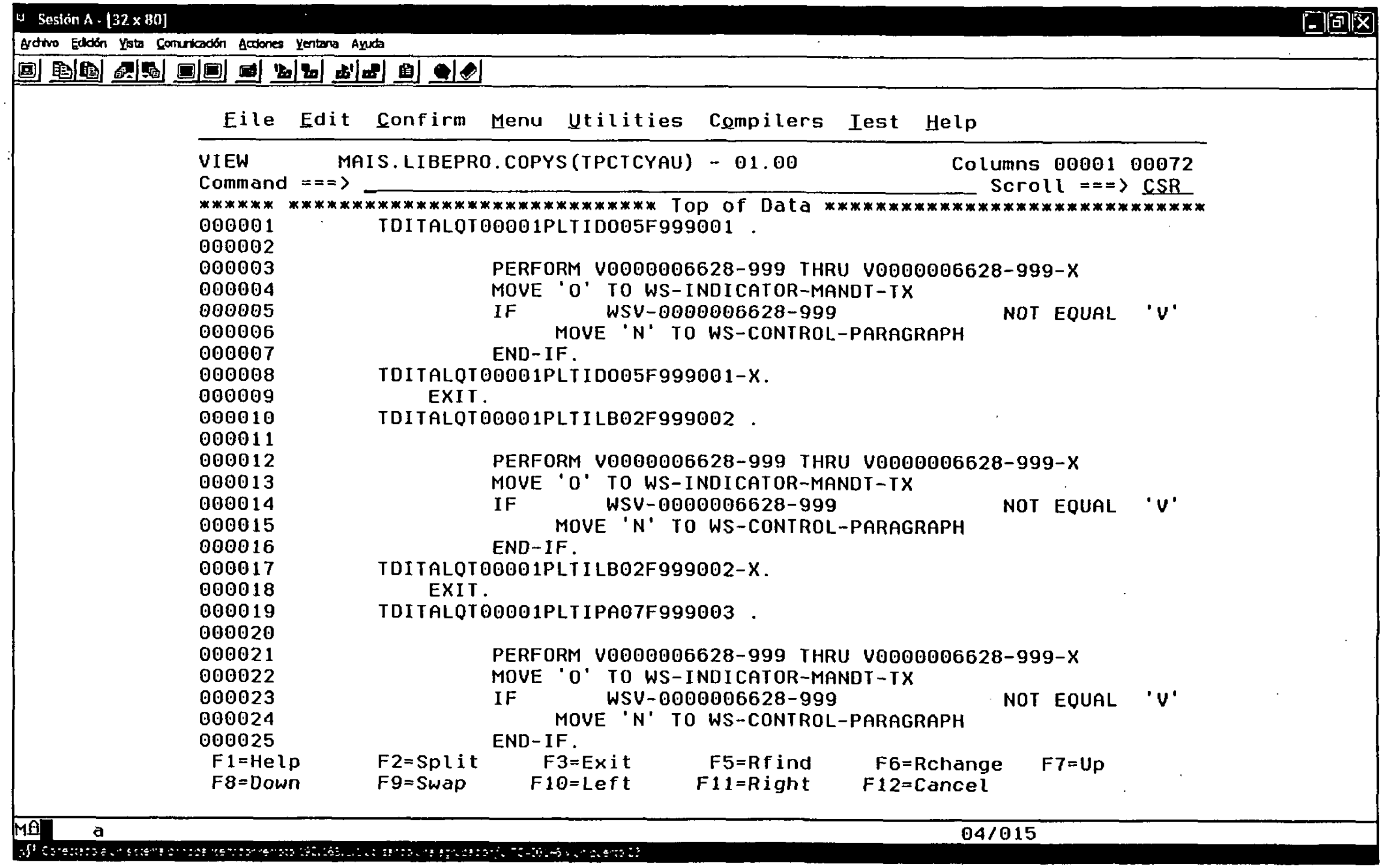
Sesión A - [32 x 80]
Archivo Edición Vista Comunicación Acciones Ventana Ayuda
File Edit Confirm Menu Utilities Compilers Test Help
VIEW MAIS.LIBEPRO.COPYS(TPCTCYAU) - 01.00 Columns 00001 00072
Command ===> Scroll ===> CSR
****** ***************************** Top of Data ******************************
000001 TDITALQT00001PLTID005F999001 .
000002
000003 PERFORM V0000006628-999 THRU V0000006628-999-X
000004 MOVE 'O' TO WS-INDICATOR-MANDT-TX
000005 IF WSV-0000006628-999 NOT EQUAL 'V'
000006 MOVE 'N' TO WS-CONTROL-PARAGRAPH
000007 END-IF.
000008 TDITALQT00001PLTID005F999001-X.
000009 EXIT.
000010 TDITALQT00001PLTILB02F999002 .
000011
000012 PERFORM V0000006628-999 THRU V0000006628-999-X
000013 MOVE 'O' TO WS-INDICATOR-MANDT-TX
000014 IF WSV-0000006628-999 NOT EQUAL 'V'
000015 MOVE 'N' TO WS-CONTROL-PARAGRAPH
000016 END-IF.
000017 TDITALQT00001PLTILB02F999002-X.
000018 EXIT.
000019 TDITALQT00001PLTIPA07F999003 .
000020
000021 PERFORM V0000006628-999 THRU V0000006628-999-X
000022 MOVE 'O' TO WS-INDICATOR-MANDT-TX
000023 IF WSV-0000006628-999 NOT EQUAL 'V'
000024 MOVE 'N' TO WS-CONTROL-PARAGRAPH
000025 END-IF.
F1=Help F2=Split F3=Exit F5=Rfind F6=Rchange F7=Up
F8=Down F9=Swap F10=Left F11=Right F12=Cancel
MA a 04/015

Figure 23

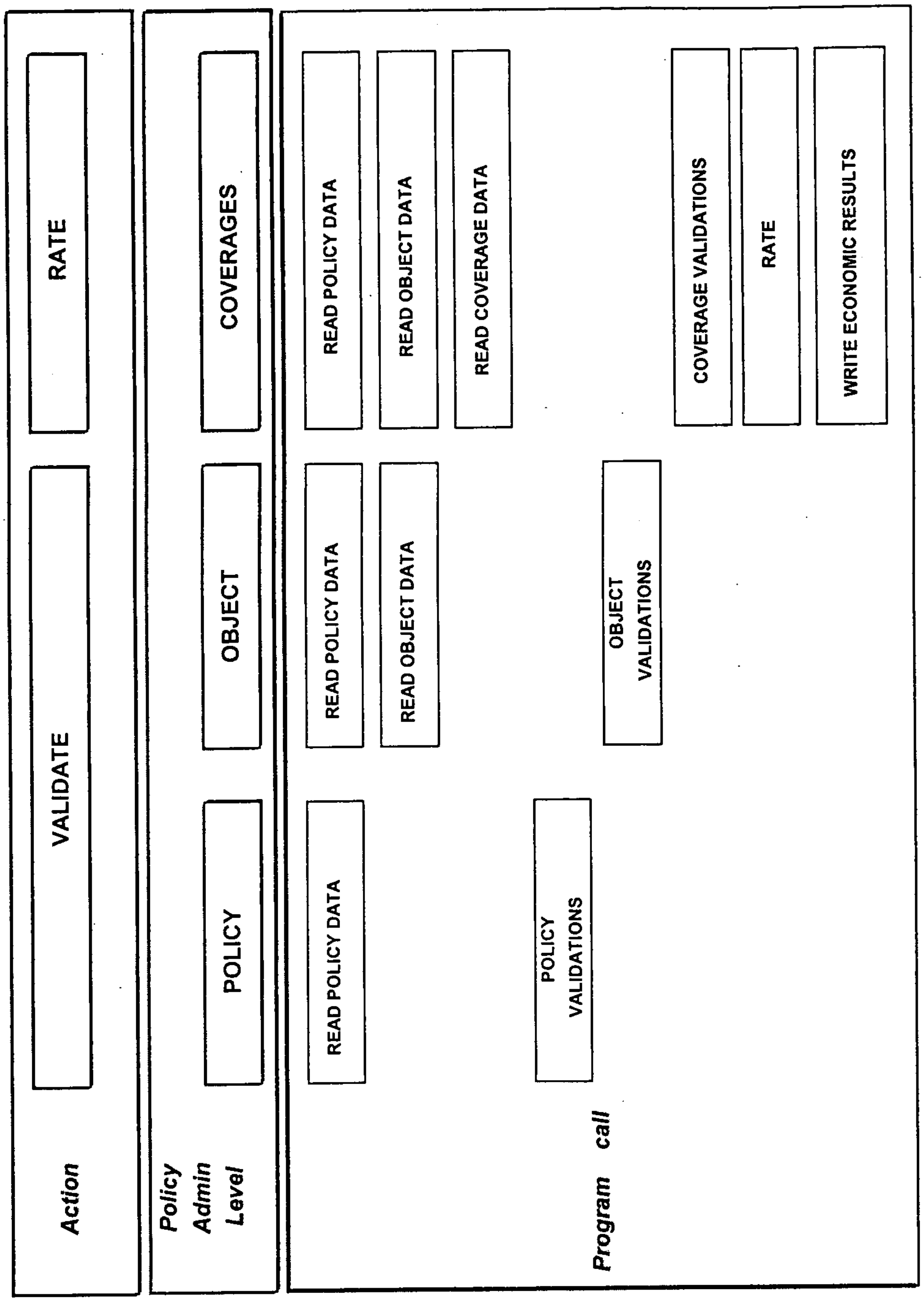
Action
VALIDATE
RATE
Policy Admin Level
POLICY
OBJECT
COVERAGES
Program call
READ POLICY DATA
POLICY VALIDATIONS
READ POLICY DATA
READ OBJECT DATA
OBJECT VALIDATIONS
READ POLICY DATA
READ OBJECT DATA
READ COVERAGE DATA
COVERAGE VALIDATIONS
RATE
WRITE ECONOMIC RESULTS

Figure 24

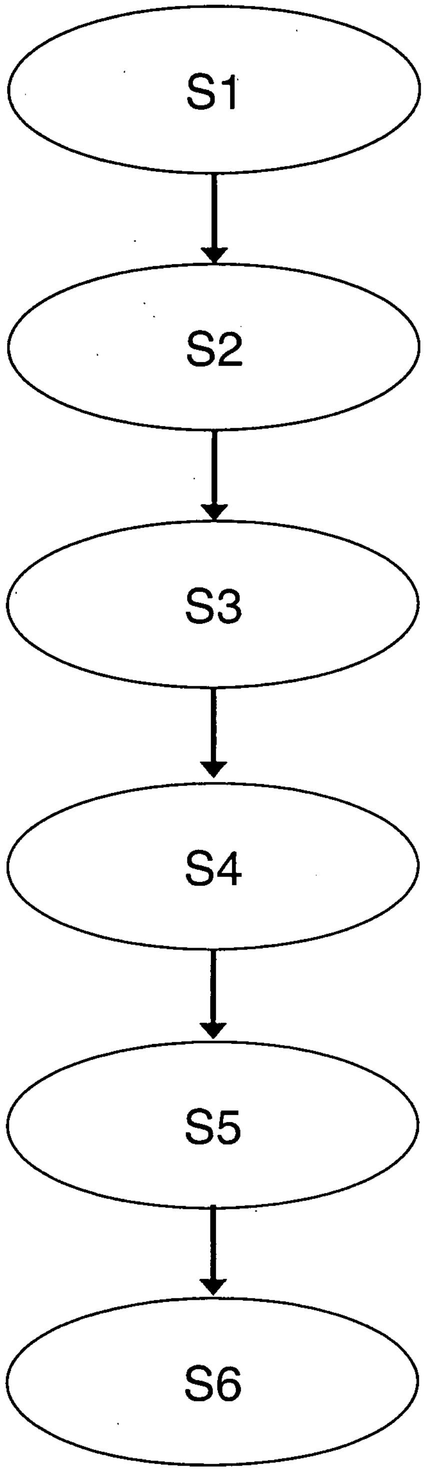

Figure 25

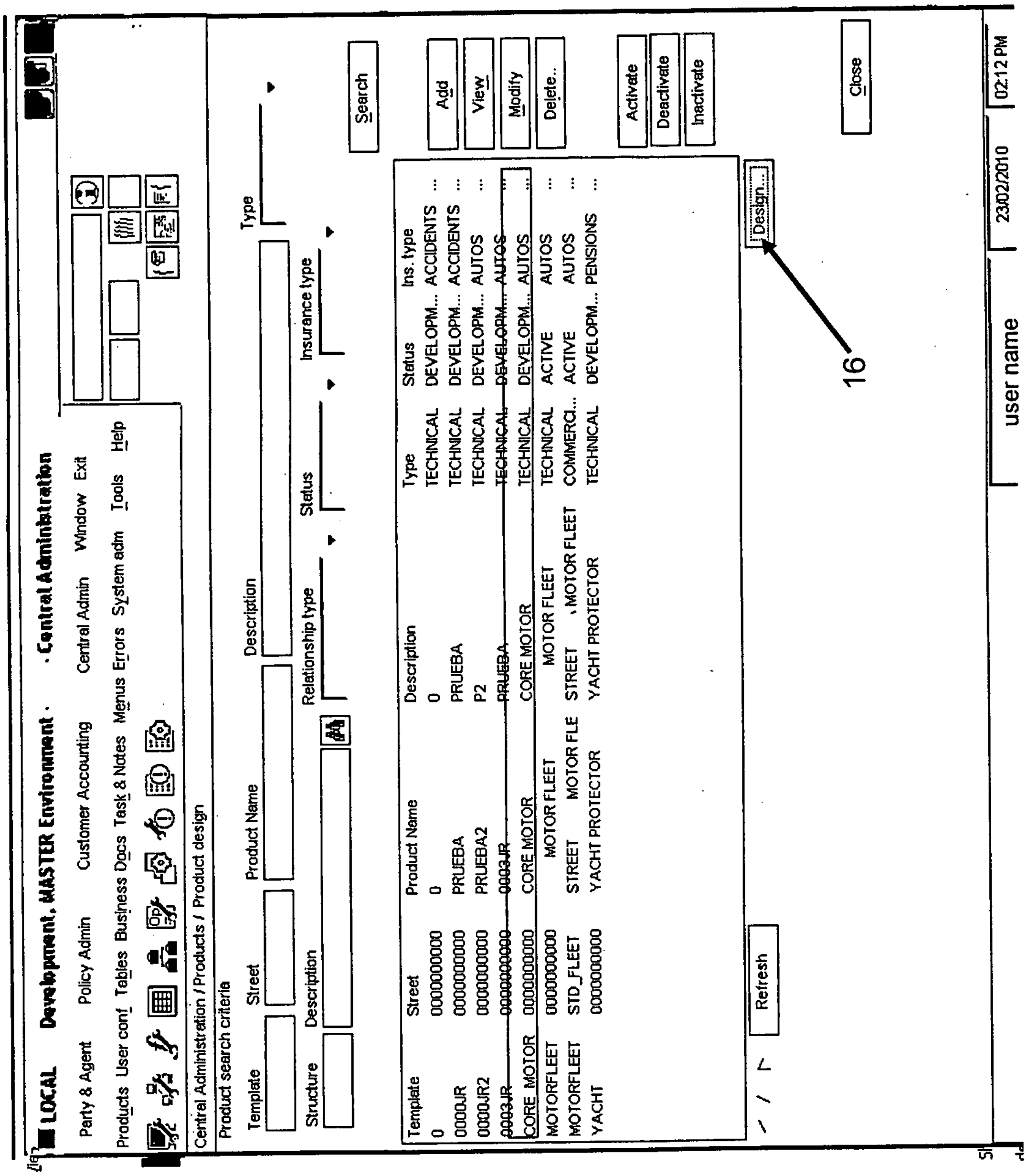
LOCAL Development, MASTER Environment - Central Administration
Party & Agent Policy Admin Customer Accounting Central Admin Window Exit
Products User conf Tables Business Docs Task & Notes Menus Errors System adm Tools Help
Central Administration / Products / Product design
Product search criteria
Template Street Product Name Description Type
Structure Description Relationship type Status Insurance type
Search
Template Street Product Name Description Type Status Ins. type
0 0000000000 0 0 TECHNICAL DEVELOPM... ACCIDENTS
0000JR 0000000000 PRUEBA PRUEBA TECHNICAL DEVELOPM... ACCIDENTS
0000JR2 0000000000 PRUEBA2 P2 TECHNICAL DEVELOPM... AUTOS
0003JR 0000000000 0003JR PRUEBA TECHNICAL DEVELOPM... AUTOS
CORE MOTOR 0000000000 CORE MOTOR CORE MOTOR TECHNICAL DEVELOPM... AUTOS
MOTORFLEET 0000000000 MOTOR FLEET MOTOR FLEET TECHNICAL ACTIVE AUTOS
MOTORFLEET STD_FLEET STREET MOTOR FLE STREET MOTOR FLEET COMMERCI... ACTIVE AUTOS
YACHT 0000000000 YACHT PROTECTOR YACHT PROTECTOR TECHNICAL DEVELOPM... PENSIONS
Add
View
Modify
Delete..
Activate
Deactivate
Inactivate
Refresh
Design...
Close
16
user name
23/02/2010
02:12 PM

Figure 26

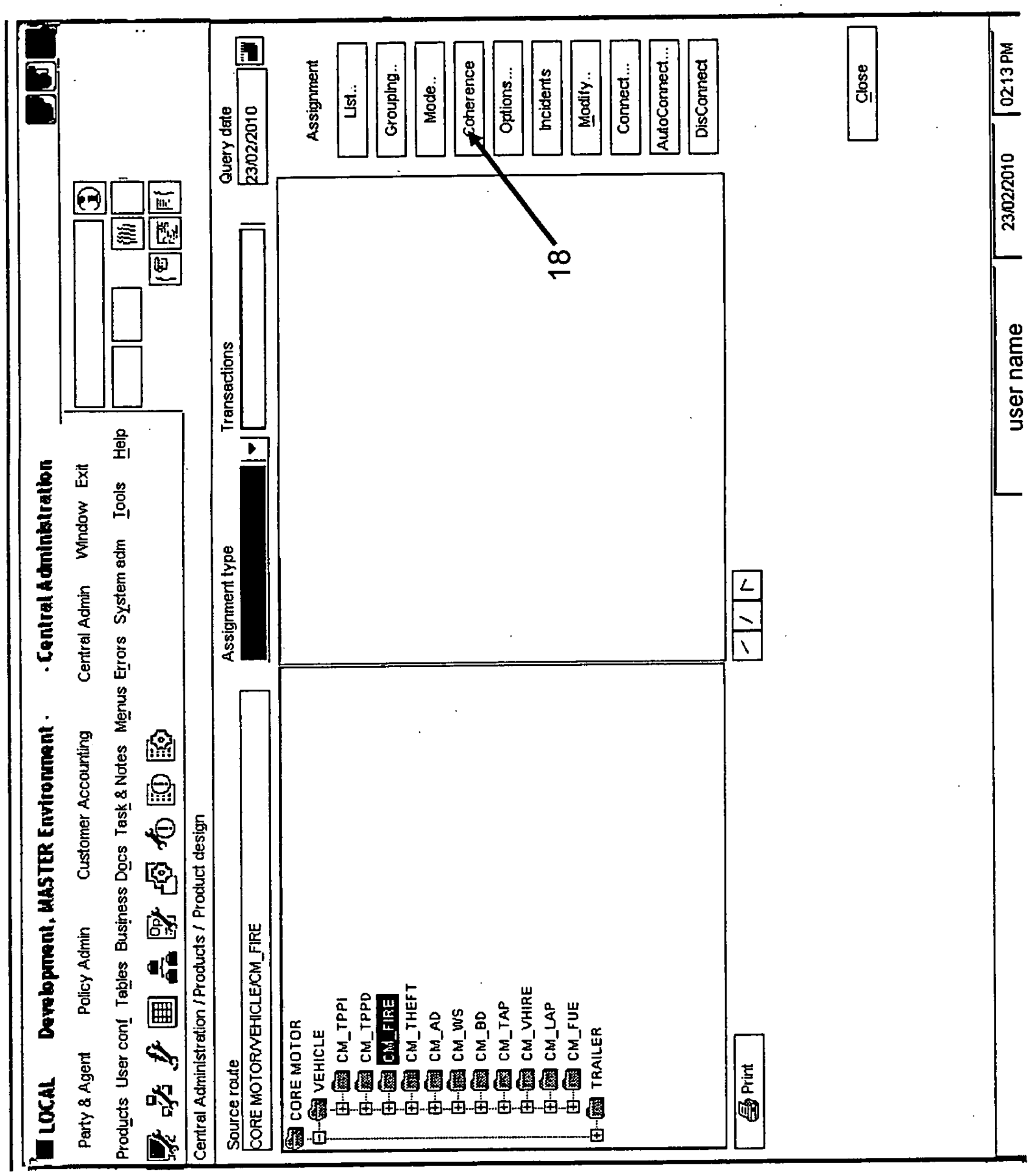
LOCAL Development, MASTER Environment - Central Administration
Party & Agent Policy Admin Customer Accounting Central Admin Window Exit
Products User conf Tables Business Docs Task & Notes Menus Errors System adm Tools Help
Central Administration / Products / Product design
Source route
CORE MOTOR/VEHICLE/CM_FIRE
Assignment type
Transactions
Query date
23/02/2010
CORE MOTOR
VEHICLE
CM_TPPI
CM_TPPD
CM_FIRE
CM_THEFT
CM_AD
CM_WS
CM_BD
CM_TAP
CM_VHIRE
CM_LAP
CM_FUE
TRAILER
Print
Assignment
List..
Grouping..
Mode..
Coherence
Options...
Incidents
Modify..
Connect...
AutoConnect...
DisConnect
Close
18
user name
23/02/2010
02:13 PM

Figure 27a

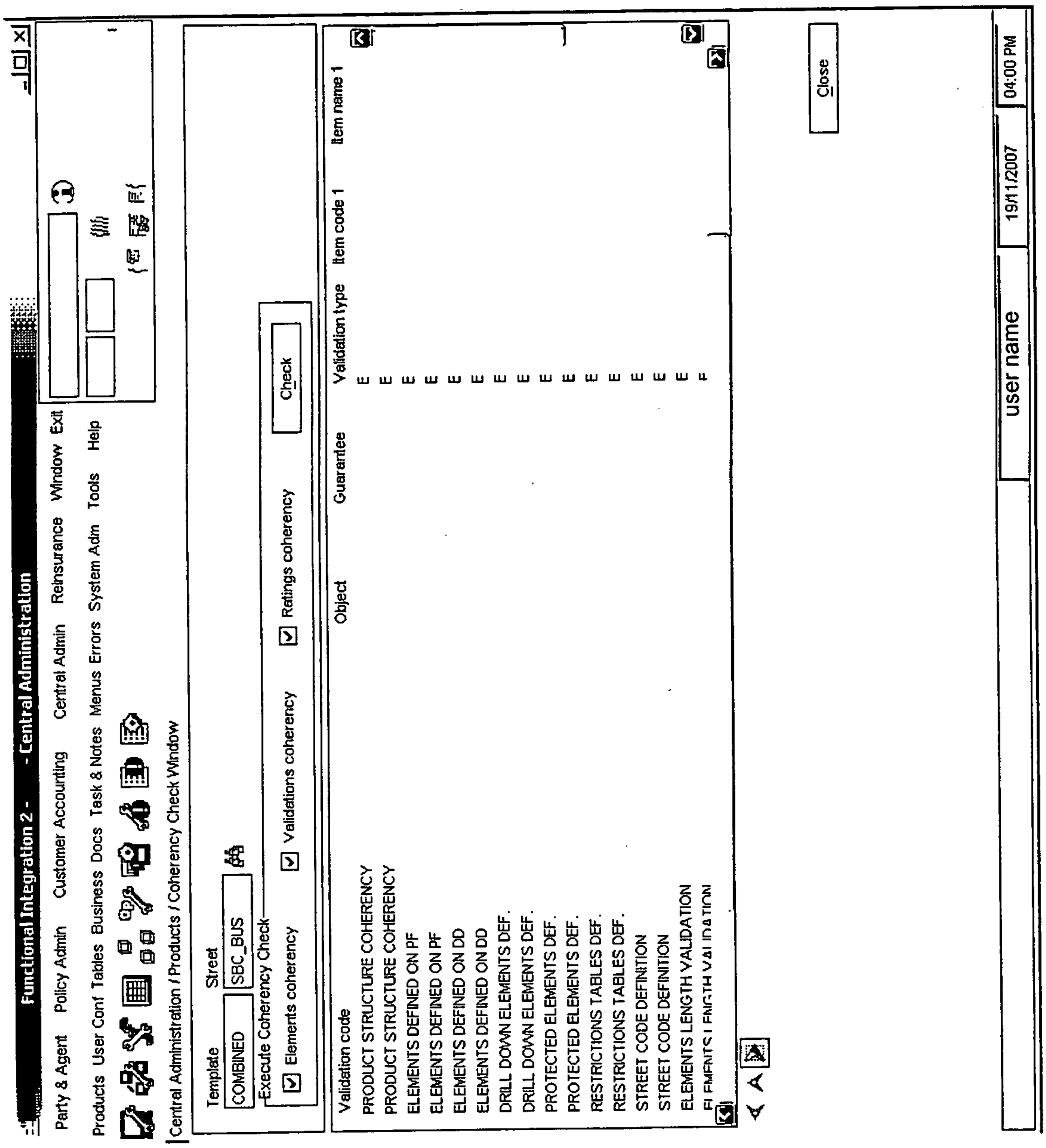
Functional Integration 2 - - Central Administration
Party & Agent Policy Admin Customer Accounting Central Admin Reinsurance Window Exit
Products User Conf Tables Business Docs Task & Notes Menus Errors System Adm Tools Help
Central Administration / Products / Coherency Check Window
Template
Street
COMBINED
SBC_BUS
Execute Coherency Check
Elements coherency
Validations coherency
Ratings coherency
Check
Validation code
Object
Guarantee
Validation type
Item code 1
Item name 1
PRODUCT STRUCTURE COHERENCY
PRODUCT STRUCTURE COHERENCY
ELEMENTS DEFINED ON PF
ELEMENTS DEFINED ON PF
ELEMENTS DEFINED ON DD
ELEMENTS DEFINED ON DD
DRILL DOWN ELEMENTS DEF.
DRILL DOWN ELEMENTS DEF.
PROTECTED ELEMENTS DEF.
PROTECTED ELEMENTS DEF.
RESTRICTIONS TABLES DEF.
RESTRICTIONS TABLES DEF.
STREET CODE DEFINITION
STREET CODE DEFINITION
ELEMENTS LENGTH VALIDATION
Close
user name
19/11/2007
04:00 PM

Figure 27b

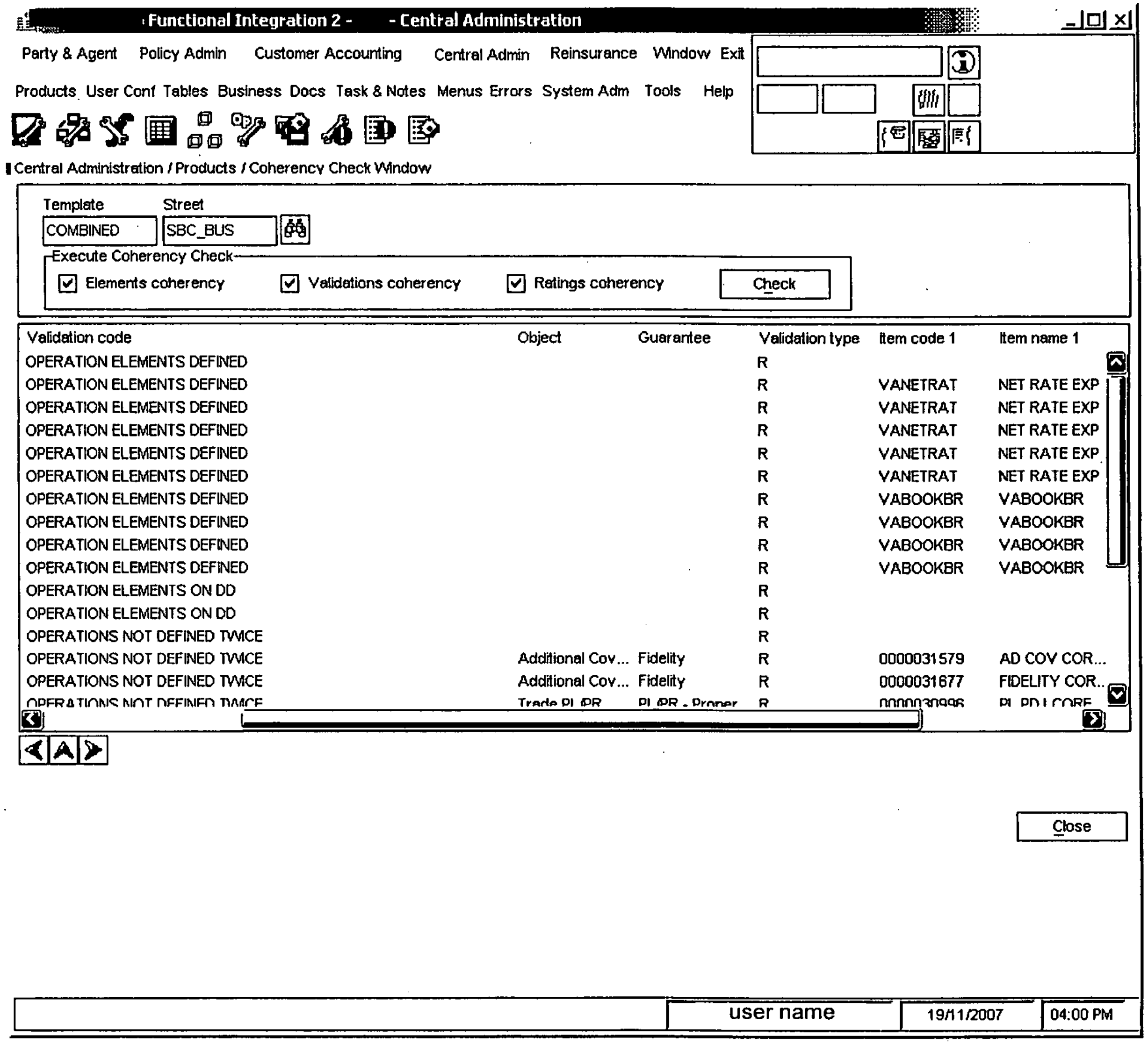
Functional Integration 2 - - Central Administration
Party & Agent Policy Admin Customer Accounting Central Admin Reinsurance Window Exit
Products User Conf Tables Business Docs Task & Notes Menus Errors System Adm Tools Help
Central Administration / Products / Coherency Check Window
Template
Street
COMBINED
SBC_BUS
Execute Coherency Check
Elements coherency
Validations coherency
Ratings coherency
Check
Validation code
Object
Guarantee
Validation type
Item code 1
Item name 1
OPERATION ELEMENTS DEFINED R
OPERATION ELEMENTS DEFINED R VANETRAT NET RATE EXP
OPERATION ELEMENTS DEFINED R VANETRAT NET RATE EXP
OPERATION ELEMENTS DEFINED R VANETRAT NET RATE EXP
OPERATION ELEMENTS DEFINED R VANETRAT NET RATE EXP
OPERATION ELEMENTS DEFINED R VANETRAT NET RATE EXP
OPERATION ELEMENTS DEFINED R VABOOKBR VABOOKBR
OPERATION ELEMENTS DEFINED R VABOOKBR VABOOKBR
OPERATION ELEMENTS DEFINED R VABOOKBR VABOOKBR
OPERATION ELEMENTS DEFINED R VABOOKBR VABOOKBR
OPERATION ELEMENTS ON DD R
OPERATION ELEMENTS ON DD R
OPERATIONS NOT DEFINED TWICE R
OPERATIONS NOT DEFINED TWICE Additional Cov... Fidelity R 0000031579 AD COV COR...
OPERATIONS NOT DEFINED TWICE Additional Cov... Fidelity R 0000031677 FIDELITY COR...
Close
user name
19/11/2007
04:00 PM

Figure 27c

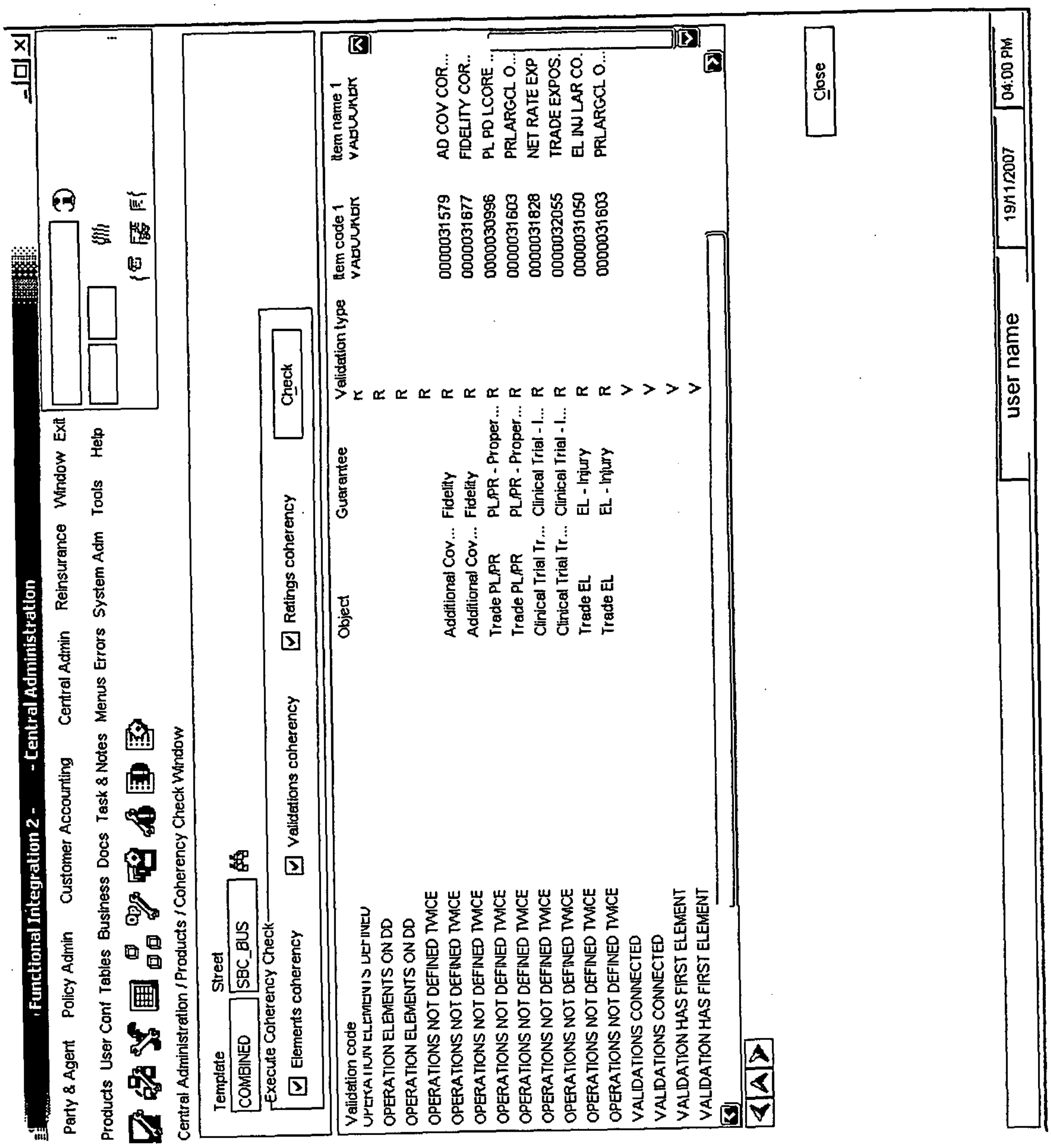
Functional Integration 2 - - Central Administration
Party & Agent Policy Admin Customer Accounting Central Admin Reinsurance Window Exit
Products User Conf Tables Business Docs Task & Notes Menus Errors System Adm Tools Help
Central Administration / Products / Coherency Check Window
Template
COMBINED
Street
SBC_BUS
Execute Coherency Check
Elements coherency
Validations coherency
Ratings coherency
Check
Validation code
Object
Guarantee
Validation type
Item code 1
Item name 1
OPERATION ELEMENTS ON DD
OPERATIONS NOT DEFINED TWICE
VALIDATIONS CONNECTED
VALIDATION HAS FIRST ELEMENT
Additional Cov...
Fidelity
Trade PL/PR
PL/PR - Proper...
Clinical Trial Tr...
Clinical Trial - I...
Trade EL
EL - Injury
0000031579
0000031677
0000030996
0000031603
0000031628
0000032055
0000031050
AD COV COR...
FIDELITY COR...
PL PD LCORE ...
PRLARGCL O...
NET RATE EXP
TRADE EXPOS.
EL INJ LAR CO.
Close
user name
19/11/2007
04:00 PM

Figure 28

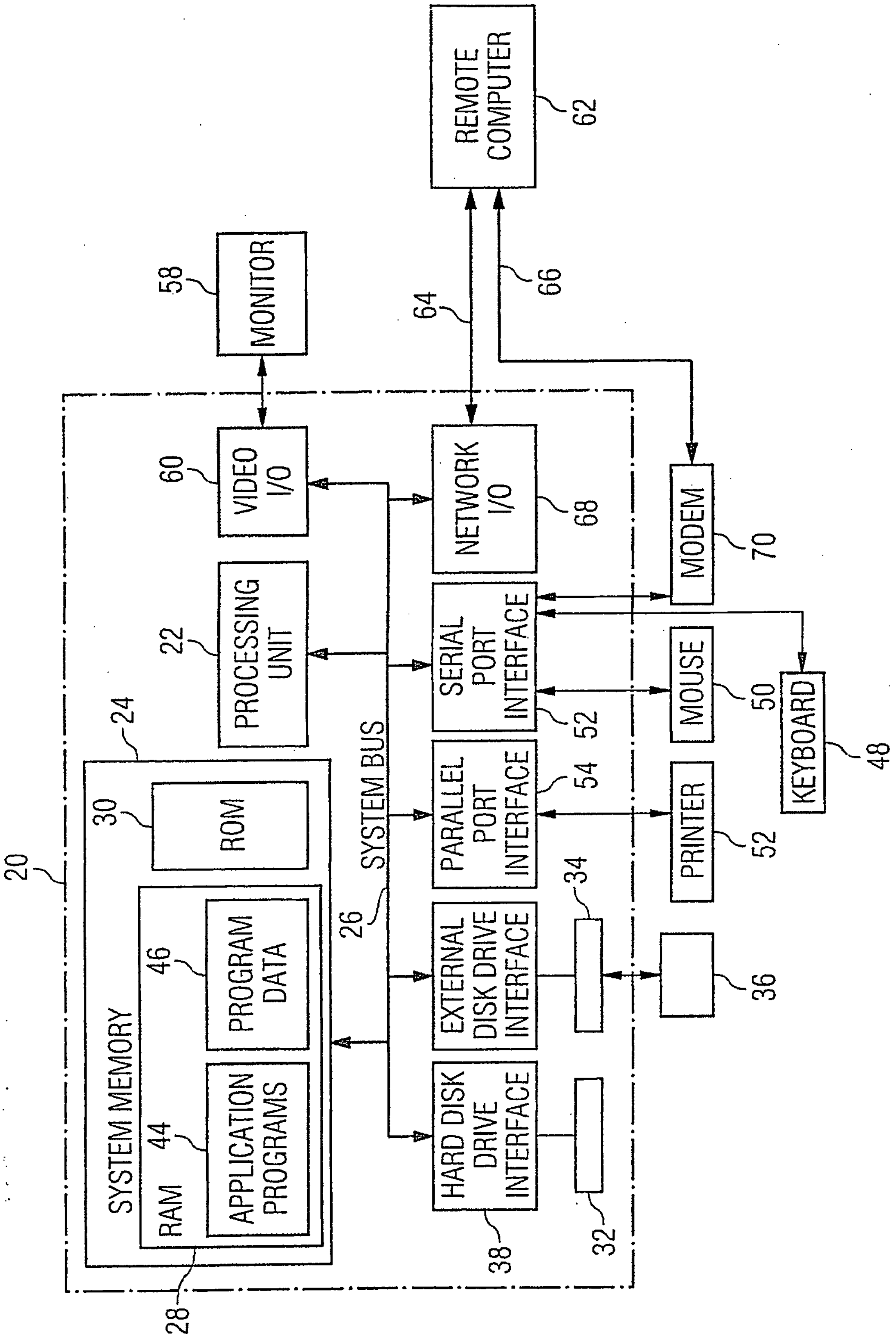


A 5580 – as / ny

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20030172367 A1
- WO 0060458 A1